# EUROPEAN PATENT APPLICATION

(11) **EP 4 765 888 A1**
(43) Date of publication of application: **24.06.2026**
(21) Application number: 24858041.7
(22) Date of filing: 04.07.2024
(51) Int. Cl.: H04W 4/029, H04W 72/542

(54) **COMMUNICATION METHOD AND COMMUNICATION APPARATUS**

(30) Priority: 29.08.2023 CN 202311104678
(71) Applicant: HUAWEI TECHNOLOGIES CO., LTD., Shenzhen 518129 (CN)
(72) Inventor: YING, Jiangwei, Shenzhen, Guangdong 518129 (CN); ZHU, Fangyuan, Shenzhen, Guangdong 518129 (CN); XU, Shengfeng, Shenzhen, Guangdong 518129 (CN)
(74) Representative: Pfenning, Meinig & Partner mbB
(86) International application number: PCT/CN2024/103569
(87) International publication number: WO 2025/044497

(57) **Abstract**

This application provides a communication method and a communication apparatus, used in the sensing and/or tracking field. In the communication method, when determining a target object, a sensing function performs calibration for a possible error of a first location by using object distribution information in a first area and the first location, to obtain more accurate location information of the target object, thereby improving tracking accuracy. In addition, a first object may be a non-UE. When determining the first object in objects in the first area, the sensing function refers to location information of a UE in the first area. In this way, the UE in the first area can be excluded, and the first object close to the first location can be determined as the target object within a smaller range or fewer objects after the exclusion, thereby improving accuracy of identifying the target object and further improving sensing or tracking accuracy.

## Description

This application claims priority to Chinese Patent Application No. 202311104678.X, filed with the China National Intellectual Property Administration on August 29, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus in the communication field.

### BACKGROUND

In some wireless communication scenarios, a wireless communication system needs to sense specific objects. For example, in the self-driving field, for the sake of obstacle avoidance, moving vehicles need to sense other obstacles on roads based on wireless communication technologies. For another example, in the security field, foreign objects or the like within a monitoring range may be sensed to take appropriate measures. For still another example, in the health monitoring field, the wireless communication system may detect health information of persons. In conventional technologies, a base station in the wireless communication system can sense object distribution in an area, but cannot sense a specific object in the area. Consequently, tracking accuracy is poor.

### SUMMARY

Embodiments of this application provide a communication method and a communication apparatus, so that a non-UE can be sensed, thereby improving sensing accuracy.

According to a first aspect, a communication method is provided, including: receiving a first sensing request, where the first sensing request includes first location information, and the first location information indicates a first location of a target object; obtaining object distribution information in a first area in which the first location is located; and identifying a first object in the first area as the target object based on the first location and the object distribution information, and sensing the target object.

In the foregoing solution, a sensing function may identify the first object in the first area as the target object based on the first location of the target object and the object distribution information in the first area. Therefore, the target object can be more accurately sensed or tracked. To be specific, when the target object is determined, calibration is performed for a possible error of the first location by using the object distribution information in the first area and the first location, to obtain more accurate location information of the target object, thereby improving tracking accuracy. In addition, the first object may be a non-UE. When determining the first object in objects in the first area, the sensing function refers to distribution information of a UE in the first area. In this way, the UE in the first area can be excluded, and the first object close to the first location can be determined as the target object within a smaller range or fewer objects after the exclusion, thereby improving accuracy of identifying the target object and further improving sensing or tracking accuracy.

Optionally, the identifying the first object in the first area as the target object based on the first location and the object distribution information may be replaced with determining the first object in the first area as the target object based on the first location and the object distribution information.

Optionally, the object distribution information in the first area may indicate distribution of the objects in the first area, for example, locations at which the objects are distributed in the first area.

Optionally, the target object may be a to-be-sensed object or a to-be-tracked object.

Optionally, the first location information indicates an absolute location of the target object. In this case, the first location information may specifically include the absolute location of the target object, or the first location information may include an absolute location of a reference object and a relative location between the target object and the reference object.

Optionally, the first area includes the first location or covers the first location.

In a possible implementation, the first sensing request is used to request to continuously track the target object. The sensing the target object includes: continuously tracking the target object.

Optionally, in embodiments of this application, the "continuously tracking" may be replaced with "continuously sensing", "continuously following", or the like.

In a possible implementation, the first sensing request includes a tracking indication, and the tracking indication indicates continuous tracking.

Optionally, the first sensing request may directly indicate (by carrying the tracking indication) to track the target object, or may indirectly indicate (for example, by using a message type or a message name) to track the target object.

In a possible implementation, the communication method further includes: obtaining the distribution information of the user equipment UE in the first area. The identifying the first object in the first area as the target object based on the first location and the object distribution information includes: identifying the first object in the first area as the target object based on the first location, the object distribution information, and the distribution information of the UE. The target object is a non-UE.

Optionally, the identifying the first object in the first area as the target object based on the first location, the object distribution information, and the distribution information of the UE includes: The sensing function determines the distribution of the objects in the first area based on the object distribution information, excludes the UE in the first area based on the distribution information of the UE, and determines, in remaining non-UEs in the first area, the first object close to the first location or at the first location. In this case, the first object may be the target object.

Optionally, the distribution information of the UE indicates distribution of the UE in the first area, that is, locations at which UEs are distributed in the first area.

Optionally, the distribution information of the UE may be replaced with location information of the UE.

Optionally, there may be one or more UEs in the first area. In this case, distribution information of the one or more UEs in the first area may be obtained.

Optionally, there may be one or more non-UEs in the first area. Optionally, the target object may be one of the one or more non-UEs in the first area.

Optionally, the obtaining the distribution information of the UE in the first area may be replaced with obtaining distribution information of an object having a communication capability in the first area.

In a possible implementation, the first sensing request includes a non-UE indication, and the non-UE indication indicates that the first sensing request is specific to a non-UE.

Optionally, that first information indicates to continuously track a non-UE may be replaced with that the first information indicates to continuously track an object that does not have a communication capability.

In a possible implementation, the obtaining the distribution information of the UE in the first area includes: receiving the distribution information of the UE from an access and mobility management function; or obtaining an identifier of the UE in the first area from the access and mobility management function; sending the identifier of the UE to a positioning function; and receiving, from the positioning function, location information corresponding to the identifier of the UE.

In the foregoing solution, the sensing function may receive the distribution information of the UE from the access and mobility management function. Alternatively, the sensing function may send the identifier of the UE to the access and mobility management function, the sensing function may send the identifier of the UE to the positioning function, and the positioning function returns the distribution information of the UE to the sensing function. Therefore, two methods for determining the distribution information of the UE by the sensing function are provided.

In a possible implementation, the obtaining the object distribution information in the first area includes at least one of the following manners: receiving the object distribution information from a terminal; or receiving the object distribution information from an application server; or obtaining the object distribution information from first sensing data.

In the foregoing solution, the sensing function may receive the object distribution information from the terminal or the application server, or may obtain the object distribution information from the first sensing data.

In a possible implementation, before the receiving the first sensing request, the communication method further includes: obtaining predicted location information, where the predicted location information indicates a predicted location of the target object; and triggering an access network device to sense an area in which the predicted location is located. The obtaining the object distribution information from the first sensing data includes: obtaining, from the access network device, the first sensing data corresponding to the area in which the predicted location is located, and obtaining the object distribution information from the first sensing data. The first location is covered by the area in which the predicted location is located.

In the foregoing solution, the access network device may sense in advance the area in which the predicted location is located, instead of being triggered after reception of the first sensing request to perform sensing. This improves efficiency of obtaining the object distribution information by the sensing function, and further improves accuracy of identifying the target object by the sensing function.

Optionally, the area in which the predicted location is located includes the first location, or includes the first area in which the first location is located.

In a possible implementation, before the receiving the first sensing request, the communication method further includes: obtaining information that corresponds to the predicted location information and that indicates a first moment or a first time range. The triggering the access network device to sense the area in which the predicted location is located includes: determining a third moment or a third time range based on the first moment or the first time range; and triggering the access network device to sense, from the third moment or within the third time range, the area in which the predicted location is located.

In the foregoing solution, the sensing function may determine the third moment based on the first moment, or determine the third time range based on the first time range. In this way, the sensing function may sense, from the third moment or within the third time range, the area in which the predicted location is located.

In a possible implementation, the first sensing request further includes information indicating a second moment or a second time range. The second moment or a start moment of the second time range is later than the third moment, or the second moment or the start moment of the second time range is covered by the third time range.

In the foregoing solution, the sensing function may perform sensing earlier than the second moment or the second time range, to obtain the first sensing data of the area in which the predicted location is located. In this way, the first sensing data in the area in which the predicted location is located can be obtained through sensing earlier.

In a possible implementation, before the receiving the first sensing request, the communication method further includes: receiving a second sensing request. The second sensing request is used to request to continuously track the target object. The obtaining the predicted location information includes: obtaining the predicted location information carried in the second sensing request.

In the foregoing solution, the sensing function may obtain the predicted location information from the second sensing request.

In a possible implementation, the obtaining the information that corresponds to the predicted location information and that indicates the first moment or the first time range includes: obtaining information that is carried in the second sensing request and that indicates the first moment or the first time range.

In the foregoing solution, the sensing function may obtain, from the second sensing request, the information indicating the first moment or the first time range.

In a possible implementation, the second sensing request includes a tracking indication, and the tracking indication indicates continuous tracking.

In the foregoing solution, the tracking indication in the second sensing request may indicate continuous tracking. In this way, the tracking indication may trigger the sensing function to perform sensing in advance to obtain the first sensing data in the area in which the predicted location is located.

In a possible implementation, the receiving the first sensing request includes: receiving the first sensing request from the terminal device or the application server network element.

In the foregoing solution, the sensing function may receive the first sensing request from the terminal or the application server.

In a possible implementation, the communication method further includes: obtaining second sensing data obtained by continuously tracking the target object; receiving second location information from the terminal or the application server, where the second location information indicates a second location of the target object; and determining a tracking result based on the second location information and the second sensing data.

In the foregoing solution, the second sensing data (or a tracking result obtained based on the second sensing data) may be calibrated by using the second location information, to obtain an accurate or complete tracking result.

In a possible implementation, before the receiving the second location information from the terminal or the application server, the communication method further includes: sending a location request to the terminal or the application server. The location request is used to request a location of the target object.

In the foregoing solution, the sensing function may request location information of the target object from the terminal or the application server, so that the terminal or the application server may send the second location information to the sensing function, and the sensing function may calibrate the second sensing data based on the second location information, to obtain an accurate tracking result.

According to a second aspect, a communication method is provided, including: receiving a third sensing request, where the third sensing request includes first location information, and the first location information indicates a first location of a target object; obtaining distribution information of a UE in a first area in which the first location is located; and sending a first sensing request to a sensing function, where the first sensing request includes the first location information and the distribution information of the UE.

In the foregoing solution, after receiving the third sensing request that carries the first location information, an access and mobility management function obtains the distribution information of the UE in the first area in which the first location indicated by the first location information is located, and sends the distribution information of the UE in the first area and the first location information to the sensing function, so that the sensing function may identify a first object in the first area as the target object based on the first location of the target object and the distribution information of the UE in the first area. Therefore, the target object can be more accurately sensed or tracked. To be specific, when the target object is determined, the UE in the first area is excluded by using location information of the UE in the first area and the first location that are provided by the access and mobility management function, so that the first object close to the first location can be determined as the target object within a smaller range or fewer objects after the exclusion, and calibration is performed for a possible error of the first location, thereby improving accuracy of identifying the target object and improving sensing or tracking accuracy.

In a possible implementation, the third sensing request is used to request to continuously track the target object, and the first sensing request is used to request to continuously track the target object.

In the foregoing solution, both the first sensing request and the third sensing request are used to request to continuously track the target object.

In a possible implementation, the obtaining the distribution information of the UE in the first area in which the first location is located includes: obtaining an identifier of the UE in the first area, and sending the identifier of the UE to a positioning function; and receiving, from the positioning function, the location information corresponding to the identifier of the UE.

In the foregoing solution, the sensing function may send the identifier of the UE to the positioning function, and the positioning function may position the UE identified by the identifier of the UE, to obtain the distribution information of the UE.

In a possible implementation, the communication method further includes: the first sensing request and the third sensing request include object distribution information in the first area, and the object distribution information is used to identify the target object.

In the foregoing solution, the third sensing request received by the access and mobility management function may include object distribution information, and the first sensing request message sent to the sensing function may include the object distribution information in the third sensing request.

In a possible implementation, the first sensing request includes a non-UE indication, and the non-UE indication indicates that the first sensing request is specific to a non-UE.

In a possible implementation, the first sensing request includes a tracking indication, and the tracking indication indicates continuous tracking.

In a possible implementation, before the receiving the third sensing request, the communication method further includes:
obtaining predicted location information, where the predicted location information indicates a predicted location of the target object; and
sending a second sensing request to the sensing function, where the second sensing request includes the predicted location information.

In the foregoing solution, the access and mobility management function may obtain the predicted location information, and the second sensing request sent to the sensing function carries the predicted location information. In this way, the sensing function may trigger sensing on an area in which the predicted location is located.

In a possible implementation, before the receiving the third sensing request, the communication method further includes: obtaining information that corresponds to the predicted location information and that indicates a first moment or a first time range.

The second sensing request includes the information indicating the first moment or the first time range.

In the foregoing solution, the access and mobility management function may obtain the information that corresponds to the predicted location information and that indicates the first moment or the first time range, and the information indicating the first moment or the first time range is carried in the second sensing request and sent to the sensing function.

In a possible implementation, the third sensing request further includes information indicating a second moment or a second time range.

The second moment or a start moment of the second time range is later than the first moment, or the second moment or the start moment of the second time range is covered by the first time range.

In a possible implementation, before the receiving the third sensing request, the communication method further includes: receiving the second sensing request. The second sensing request is used to request to continuously track the target object.

The obtaining the predicted location information includes: obtaining the predicted location information carried in the second sensing request.

In a possible implementation, the obtaining the information that corresponds to the predicted location information and that indicates the first moment or the first time range includes: obtaining information that is carried in the second sensing request and that indicates the first moment or the first time range.

In a possible implementation, the second sensing request includes a tracking indication, and the tracking indication indicates continuous tracking.

Specifically, for descriptions of the second aspect, refer to the descriptions of the first aspect. To avoid repetition, details are not described again.

According to a third aspect, a communication method is provided, including: receiving a first sensing request from a terminal or an application server, where the first sensing request is used to request to continuously track a target object, the first sensing request includes first information, and the first information includes an identifier of the target object, or the first information includes an identifier of a reference object and relative location information between the target object and the reference object; obtaining, based on the first sensing request, first location information corresponding to the identifier of the target object or the identifier of the reference object in the first information; and sending the first location information or the first location information and the relative location information.

In the foregoing solution, a sensing function or an access and mobility management function may obtain the first location information corresponding to the identifier of the target object in the first information, or obtain the first location information corresponding to the identifier of the reference object. The sensing function may send the first location information or the first location information and the relative location information to an access network device, so that the access network device may sense the target object based on the first location information, or sense the target object based on the first location information and the relative location information, thereby providing a method for sensing the target object. The access and mobility management function may send the first location information or the first location information and the relative location information to the sensing function, and the sensing function may trigger the access network device to sense the target object based on the first location information or the first location information and the relative location information, thereby providing a method for sensing the target object.

Optionally, the method is performed by the access and mobility management function. The sending the first location information or the first location information and the relative location information includes: sending the first location information or the first location information and the relative location information to the sensing function. The sensing function may sense the target object based on the first location information and updated first location information.

Optionally, the method is performed by the sensing function. The sending the first location information or the first location information and the relative location information includes: sending the first location information or the first location information and the relative location information to the access network device. The sensing function may sense the target object based on the first location information and updated first location information.

Alternatively, the communication method includes: receiving a first sensing request from a terminal or an application server, where the first sensing request includes sensing service description information and first information, and the first information includes an identifier of a target object, or the first information includes an identifier of a reference object and relative location information between the target object and the reference object; determining a positioning periodicity based on the sensing service description information in the first sensing request, and obtaining first location information corresponding to the identifier of the target object or the identifier of the reference object in the first information; sending a second sensing request, where the second sensing request includes second information, and the second information includes the first location information, or the second information includes the first location information and the relative location information; obtaining, based on the positioning periodicity, updated first location information corresponding to the identifier of the target object or the identifier of the reference object in the first information; and sending the updated first location information or the updated first location information and the relative location information. In this solution, a sensing function or an access and mobility management function may obtain the first location information and the updated first location information of the target object, so that the sensing function may sense the target object based on the first location information and the updated first location information. The sensing function or the access and mobility management function may periodically obtain the first location information of the target object, and the sensing function may continuously track the target object, thereby providing a method for continuously tracking the target object. Because the target object is sensed based on the location information, sensing accuracy is high.

In a possible implementation, the first sensing request further includes sensing service description information, and the communication method further includes: determining a positioning periodicity based on the sensing service description information. The obtaining, based on the first sensing request, the first location information corresponding to the identifier of the target object or the identifier of the reference object in the first information includes: obtaining the first location information based on the first sensing request and the positioning periodicity. The sending the first location information or the first location information and the relative location information includes: sending the periodically obtained first location information, or sending the periodically obtained first location information and the relative location information.

In the foregoing solution, the positioning periodicity may be determined based on the service description information, the first location information may be periodically obtained based on the positioning periodicity and the first sensing request, and the periodically obtained first location information or the periodically obtained first location information and the relative location information are sent.

Optionally, the sensing service description information is used to describe a service requirement or the like. For example, the sensing service description information may include at least one of a service type, sensing accuracy, resolution, latency, a missed detection probability, a false alarm probability, or a refreshing rate.

In a possible implementation, the first sensing request further includes a tracking indication, and the tracking indication indicates to continuously track the target object. In a possible implementation, the determining the positioning periodicity based on the sensing service description information in the first sensing request includes: determining the positioning periodicity based on the sensing service description information and the tracking indication in the first sensing request.

In the foregoing solution, the positioning periodicity may be determined based on the tracking indication and the sensing service description information. To be specific, when the tracking indication may indicate continuous tracking, the positioning periodicity may be determined. In other words, because the target object needs to be continuously tracked, a location of the target object needs to be determined a plurality of times. Therefore, the positioning periodicity needs to be determined.

In a possible implementation, the obtaining the first location information corresponding to the identifier of the target object or the identifier of the reference object in the first information includes: sending a first positioning request to a location management function, where the first positioning request includes the identifier of the target object or the identifier of the reference object; and receiving, from the location management function, the first location information corresponding to the identifier of the target object or the identifier of the reference object in the first information.

In the foregoing solution, the location management function may determine the first location information corresponding to the identifier of the target object or the first location information corresponding to the identifier of the reference object, and then send the first location information to the sensing function or the access and mobility management function.

In a possible implementation, the first positioning request includes the positioning periodicity. In this way, the location management function may determine the first location information based on the positioning periodicity.

In a possible implementation, the method is performed by the access and mobility management function. The sending the first location information or the first location information and the relative location information includes: sending a fourth sensing request to a sensing function, where the fourth sensing request includes the first location information or the first location information and the relative location information, and the fourth sensing request includes the tracking indication.

In a possible implementation, the method is performed by the access and mobility management function, and the communication method further includes: sending the sensing description information to the sensing function. The sensing description information is used by the sensing function to determine the sensing periodicity for the target object. In this way, the sensing function may sense the target object based on the sensing periodicity.

In a possible implementation, the communication method is performed by the sensing function. The sending the first location information or the first location information and the relative location information includes: sending a fourth sensing request to the access network device. The fourth sensing request includes the first location information or the first location information and the relative location information.

In this way, the access network device may sense the target object based on the first location information or the first location information and the relative location information.

In a possible implementation, the method is performed by the sensing function, and the communication method further includes: determining the sensing periodicity based on the sensing description information. In this way, the sensing function may sense the target object based on the sensing periodicity.

According to a fourth aspect, a communication method is provided, including: receiving a first sensing request, where the first sensing request is used to request to continuously track a target object; obtaining a first location of the target object; obtaining object distribution information in a first area in which the first location is located; and identifying a first object in the first area as the target object based on the first location and the object distribution information, and sensing the target object.

In the foregoing solution, a sensing function may identify the first object in the first area as the target object based on the first location of the target object and the object distribution information in the first area, so that the target object can be continuously tracked. That is, when the to-be-tracked first object in the first area is determined, the object distribution information in the first area and the first location may be referred to. Therefore, an object tracking method is provided, and tracking accuracy can be improved.

Optionally, the first object may be a UE. When determining the first object in objects in the first area, the sensing function refers to distribution information of a non-UE in the first area. In this way, the non-UE in the first area can be excluded, and the first object close to the first location can be determined as the target object within a smaller range or fewer objects after the exclusion.

In a possible implementation, the first sensing request is used to request to continuously track the target object. The sensing the target object includes: continuously tracking the target object.

In a possible implementation, the first sensing request includes a tracking indication, and the tracking indication indicates continuous tracking.

In a possible implementation, the first sensing request includes a UE indication, and the UE indication indicates that the first sensing request is specific to a UE.

In a possible implementation, the obtaining the first location of the target object includes:
obtaining the first location of the target object from the first sensing request.

In a possible implementation, the obtaining the first location of the target object includes:
obtaining an identifier of the target object from an access and mobility management function;
sending the identifier of the target object to a positioning function; and
receiving, from the positioning function, the first location corresponding to the identifier of the target object.

In a possible implementation, the obtaining the object distribution information in the first area in which the first location is located includes at least one of the following manners:
receiving the object distribution information from a terminal; or
receiving the object distribution information from an application server; or
obtaining the object distribution information from first sensing data.

In a possible implementation, before the receiving the first sensing request, the communication method further includes:
obtaining predicted location information, where the predicted location information indicates a predicted location of the target object; and triggering an access network device to sense an area in which the predicted location is located.

The obtaining the object distribution information from the first sensing data includes: obtaining, from the access network device, the first sensing data corresponding to the area in which the predicted location is located, and obtaining the object distribution information from the first sensing data. The first location is covered by the area in which the predicted location is located.

In a possible implementation, before the receiving the first sensing request, the communication method further includes:
obtaining information that corresponds to the predicted location information and that indicates a first moment or a first time range.

The triggering the access network device to sense the area in which the predicted location is located includes:
determining a third moment or a third time range based on the first moment or the first time range; and
triggering the access network device to sense, from the third moment or within the third time range, the area in which the predicted location is located.

In a possible implementation, the first sensing request further includes information indicating a second moment or a second time range.

The second moment or a start moment of the second time range is later than the third moment, or the second moment or the start moment of the second time range is covered by the third time range.

In a possible implementation, before the receiving the first sensing request, the communication method further includes: receiving a second sensing request. The second sensing request is used to request to continuously track the target object.

The obtaining the predicted location information includes: obtaining the predicted location information carried in the second sensing request.

In a possible implementation, the obtaining the information that corresponds to the predicted location information and that indicates the first moment or the first time range includes: obtaining information that is carried in the second sensing request and that indicates the first moment or the first time range.

In a possible implementation, the second sensing request includes a tracking indication, and the tracking indication indicates continuous tracking.

In a possible implementation, the receiving the first sensing request includes:
receiving the first sensing request from the terminal device or the application server network element.

In a possible implementation, the communication method further includes:
obtaining second sensing data obtained by continuously tracking the target object; and
receiving second location information from the terminal or the application server. The second location information indicates a second location of the target object.

After the continuously tracking the target object, the communication method further includes:
determining a tracking result based on the second location and the second sensing data.

In a possible implementation, before the receiving the second location information, the communication method includes: sending a location request message to the terminal or the application server. The location request message is used to request a location of the target object.

Specifically, for descriptions of the fourth aspect, refer to the descriptions of the first aspect. To avoid repetition, details are not described again.

According to a fifth aspect, an embodiment of this application provides a communication apparatus. The communication apparatus has a function of implementing any one of the foregoing aspects. The function may be implemented by hardware, or may be implemented by executing corresponding software by hardware. The hardware or the software includes one or more modules or units corresponding to the function, for example, a transceiver module or unit, a processing module or unit, or an obtaining module or unit.

According to a sixth aspect, an embodiment of this application provides an electronic device, including a memory and a processor. The memory is configured to store a computer program. The processor is configured to enable, when invoking the computer program, the electronic device to perform the method in any one of the foregoing aspects.

According to a seventh aspect, an embodiment of this application provides a chip system. The chip system includes a processor. The processor is coupled to a memory, and the processor executes a computer program stored in the memory, to implement the method in any one of the foregoing aspects.

The chip system may be a single chip or a chip module including a plurality of chips.

According to an eighth aspect, an embodiment of this application provides a computer-readable storage medium. The computer-readable storage medium stores a computer program. When the computer program is executed by a processor, the method in any one of the foregoing aspects is implemented.

According to a ninth aspect, an embodiment of this application provides a computer program product. When the computer program product is run on an electronic device, the electronic device is enabled to perform the method in any one of the foregoing aspects.

It may be understood that for beneficial effects of the fifth aspect to the ninth aspect, refer to related descriptions in the first aspect to the fourth aspect. Details are not described herein again.

### BRIEF DESCRIPTION OF DRAWINGS

FIG. 1 is a diagram of an architecture of a communication system according to an embodiment of this application;
FIG. 2 is a diagram of a communication method according to an embodiment of this application;
FIG. 3 is a diagram of another communication method according to an embodiment of this application;
FIG. 4 is a diagram of still another communication method according to an embodiment of this application;
FIG. 5 is a diagram of still another communication method according to an embodiment of this application;
FIG. 6A and FIG. 6B are a diagram of still another communication method according to an embodiment of this application;
FIG. 7A and FIG. 7B are a diagram of still another communication method according to an embodiment of this application;
FIG. 8 is a diagram of still another communication method according to an embodiment of this application;
FIG. 9 is a diagram of still another communication method according to an embodiment of this application;
FIG. 10 is a diagram of still another communication method according to an embodiment of this application;
FIG. 11A and FIG. 11B are a diagram of still another communication method according to an embodiment of this application;
FIG. 12 is a block diagram of a communication apparatus according to an embodiment of this application; and
FIG. 13 is a block diagram of another communication apparatus according to an embodiment of this application.

### DESCRIPTION OF EMBODIMENTS

The following describes technical solutions in embodiments of this application with reference to accompanying drawings in embodiments of this application.

The technical solutions in embodiments of this application may be applied to various communication systems, for example, a global system for mobile communication (global system for mobile communication, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or new radio (new radio, NR), and a future communication system such as 6G.

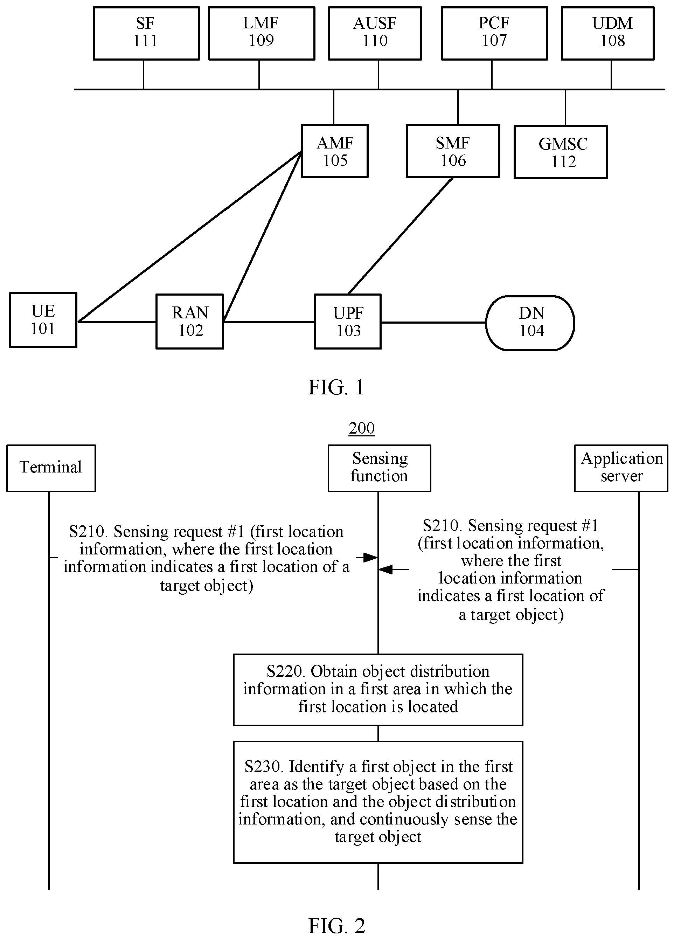

FIG. 1 is a diagram of an architecture of a system used in embodiments of this application. As shown in FIG. 1, the system 100 includes at least one of a user equipment (user equipment, UE) 101, a radio access network (radio access network, RAN) 102, a user plane function network element (user plane function, UPF) 103, a data network (data network, DN) 104, a core network access and mobility management function (core access and mobility management function, AMF) 105, a session management function (session management function, SMF) 106, a policy control function (policy control function, PCF) 107, a unified data management (unified data management, UDM) 108, a location management function (LMF) 109, an authentication server function (authentication server function, AUSF) 110, a tracking function (sensing function, SF) 111, or a gateway mobile sensing center (gateway mobile sensing center, GMSC) 112.

The UE 101 may also be referred to as a terminal device, a mobile station (mobile station, MS), a mobile terminal (mobile terminal, MT), an access terminal, a subscriber unit, a subscriber station, a mobile, a remote station, a remote terminal, a mobile device, a user terminal, a terminal, a wireless communication device, a user agent, a user apparatus, or the like.

The UE 101 may be a device that provides voice/data connectivity for a user, for example, a handheld device or an in-vehicle device having a wireless connection function. Currently, some examples of the terminal device include: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, an in-vehicle device, a wearable device, a terminal device in a 5G network, a terminal device in a further evolved public land mobile network (public land mobile network, PLMN), or the like. This is not limited in this application. Alternatively, the UE 101 may be a communication chip in these terminal devices.

The RAN 102 may be a device communicating with the UE 101. The RAN 102 may also be referred to as an access network device or a radio access network device, which may be a transmission reception point (transmission reception point, TRP), an evolved NodeB (evolved NodeB, eNB, or eNodeB) in an LTE system, a home base station (for example, home evolved NodeB or home NodeB, HNB), a baseband unit (baseband unit, BBU), or a radio controller in a cloud radio access network (cloud radio access network, CRAN) scenario. Alternatively, the RAN 102 may be a relay station, an access point, an in-vehicle device, a wearable device, a network device in a 5G network, a network device in a future evolved PLMN network, or the like, or may be an access point (access point, AP) in a WLAN or a gNB in an NR system. Alternatively, the RAN 111 may be a city base station, a micro base station, a pico base station, a femto base station, or the like. This is not limited in this application.

The UPF 103 is mainly configured to perform user plane service processing, for example, service routing, forwarding, charging, quality of service (quality of service, QoS) mapping and execution, identification of an uplink identifier and routing to the data network, downlink packet buffering, notification triggering for downlink data arrival, and connection to an external data network. The UPF 103 may also be referred to as a user plane network element or a user plane device in 5G, and may have other names in future communication. This is not limited in this application.

The DN 104 provides a data transmission service for the UE 101, and may be a public data network (public data network, PDN), for example, the internet (internet). That is, data of a service requested by the UE 101 is from the DN 104.

The AMF 105 is mainly configured to perform mobility management, access management, and the like, and may be configured to implement functionalities other than session management in functionalities of a mobility management entity (mobility management entity, MME), for example, functionalities such as lawful intercept, access authorization (or authentication), registration of the UE 101, mobility management, a tracking area update procedure, reachability detection, selection on session management network elements, or mobility state transition management. The AMF 105 may also be referred to as an access and mobility management function, an access and mobility management device, an access and mobility management network element, an access management device, a mobility management device, or the like, and the AMF 105 may have other names in future communication systems. In embodiments of this application, a name of a network element having a functionality of managing mobility of the UE 101 is not limited.

The SMF 106 is responsible for UPF selection or reselection and session-related service management, for example, IP address allocation for session establishment, release, or the like, and is responsible for session establishment, modification, and release, and quality of service (quality of service, QoS) control. The SMF 106 may also be referred to as a session management function, a session management device, a session management function device, a session management function network element, a session management network element, or the like, and the SMF 106 may have other names in future communication systems. A name of a network element having a session management functionality is not limited in embodiments of this application.

The PCF 107 is configured to implement a policy control functionality, a charging policy control functionality, quality of service (quality of service, QoS) control, and the like. When the PCF 107 performs QoS control, the PCF 107 may generate a QoS rule. The PCF 107 may also be referred to as a policy control function, a policy control device, a policy control function device, a policy control function network element, a policy control network element, or the like, and the PCF 107 may have other names in future communication systems. In embodiments of this application, a name of a network element having a policy control functionality is not limited.

The UDM 108 is responsible for managing subscription information of the UE 101. The UDM 108 may also be referred to as a data management function, a data management device, a data management function device, a data management function network element, a data management network element, a unified data management function, a unified data management device, a unified data management function device, a unified data management function network element, a unified data management network element, or the like, and the UDM 108 may have other names in future communication systems. In embodiments of this application, a name of a network element having a data management functionality is not limited.

The LMF 109 is configured to position the UE 101.

The AUSF 110 is configured to authenticate the UE.

The SF 111 is configured to sense an object, or control the RAN 102 to sense an object.

The GMSC 112 may be a gateway of the SF 111, and is configured to receive a sensing request of an external application (for example, an application server) and route the sensing request to the SF 111, and may further route sensing data of the SF 111 to the external application.

It should be noted that names of the network elements (such as the UE 101, the RAN 102, the UPF 103, the DN 104, the AMF 105, the SMF 106, the PCF 107, the UDM 108, the LMF 109, the AUSF 110, the SF 111, and the GMSC 112) included in FIG. 1 are merely names, and the names do not constitute limitations on functionalities of the network elements. In a 5G network and other networks in the future, the network elements may have other names. This is not specifically limited in embodiments of this application. For example, in a 6G network, terms in 5G may be reused for a part or all of the network elements , or other names may be used. A general explanation is provided herein, and details are not described below again.

It should be noted that the network elements in FIG. 1 do not necessarily exist at the same time, and needed network elements may be determined based on a requirement. A connection relationship between the network elements in FIG. 1 is not uniquely determined, and may be adjusted based on a requirement.

It should also be noted that, in FIG. 1, a network element other than the UE 101 may be referred to as a network device. In other words, the network device may include one or more network elements other than the UE 101 in FIG. 1. The network device may include an access network device and a core network device. The RAN 102 in FIG. 1 may be referred to as an access network device, and a network element in FIG. 1 other than the RAN 102, the UE 101, and the DN 105 is referred to as a core network device.

In wireless communication scenarios, a wireless communication system may sense specific objects. For example, in the security monitoring field, the wireless communication system may sense that a vehicle occupies an emergency lane, and then generate an alarm in real time or record information about the illegal occupation of the emergency lane. Alternatively, the wireless communication system may sense and identify a foreign object (a person, an animal, a falling rock, or the like) that intrudes into a highway or a railway, and perform emergency processing. For another example, in the health monitoring field, the wireless communication system may sense and identify an abnormal posture (for example, an abnormal posture such as a fall-down) of a person, and then generate an alarm. For still another example, in the health monitoring field, the wireless communication system may continuously monitor breathing and/or heart beating of a human body, determine, after a plurality of consecutive times of sensing, that the breathing and/or the heart beating are/is abnormal, and then generate an alarm. For still another example, in the weather monitoring field, the wireless communication system may continuously sense changing of environment, climate, or weather a plurality of times, and predict weather by using results of the plurality of times of sensing. For another example, in the self-driving field, the wireless communication system may sense each object in a map, and generate a map by continuously sensing each object in the map a plurality of times, so that a vehicle or an uncrewed aerial vehicle moves based on the map. Alternatively, the wireless communication system may continuously track the uncrewed aerial vehicle, and when determining, through tracking, that the uncrewed aerial vehicle moves away from a route, generate an alarm in real time or record information about the moving away from the route. That is, the wireless communication system may continuously sense a specific object a plurality of times, and track the specific object by using data obtained through the plurality of times of sensing.

An access network device in the wireless communication system may communicate with a terminal device by using a radio frequency band, and may perform tracking by using the radio frequency band. In this way, the access network device may have a communication capability and a tracking capability. In conventional technologies, the access network device can sense objects in an area, but cannot sense a specific target object. Consequently, accuracy of a sensing result is poor. In other words, the access network device can only identify that there are one or more objects in the area, but cannot sense a specific object in real time. Consequently, accuracy of a tracking result is poor. For example, if an object sensed by the wireless communication system does not have a communication capability, because the sensed object cannot feed back location information of the sensed object to the wireless communication system, the object cannot be sensed based on the location information. Consequently, accuracy of a sensing result is poor. For example, a vehicle moving in a direction not allowed by traffic regulations or a vehicle occupying an emergency lane does not have a network connection to the wireless communication system, which may also be referred to as an object that does not have a communication capability. Alternatively, the object naturally does not have a communication capability, for example, a falling rock.

In embodiments of this application, a sensing function may identify a first object in a first area as a target object based on a first location of the target object and object distribution information in the first area, so that the target object can be continuously tracked. That is, when the to-be-tracked first object in the first area is determined, the object distribution information in the first area is further introduced based on the first location to calibrate the location of the target object, thereby improving tracking accuracy.

The following describes, with reference to FIG. 2, a communication method 200 provided in an embodiment of this application. As shown in FIG. 2, the method 200 includes the following steps.

S210. A terminal or an application server sends a sensing request #1 to a sensing function. The sensing function receives the sensing request #1 from the terminal or the application server. The sensing request #1 includes first location information, and the first location information indicates a first location of a target object.

Optionally, the sensing request #1 is used to request to track the target object. In other words, the sensing request #1 is used to request to continuously track the target object. Optionally, the sensing request #1 includes a tracking indication, and the tracking indication indicates tracking (or continuous tracking). After learning of the tracking indication in the sensing request #1, the sensing function may determine that an object needs to be continuously tracked. Therefore, the sensing function may trigger S220 to obtain object distribution information in an area in which the first location is located. It may be understood that the sensing request #1 may directly indicate (by carrying the tracking indication) to track the target object, or may indirectly indicate (for example, by using a message type or a message name) to track the target object.

This application relates to a terminal that can be registered with a communication network, and in this application, a UE is used as an example for description. This application further relates to a terminal that cannot be registered with a communication network, and in this application, a non-UE is used as an example for description. It may be understood that the terminal in S210 is a UE. Optionally, whether the terminal can be registered with a communication network may also be understood as whether there is a universal subscriber identity module (universal subscriber identity module, USIM) card, or whether there is subscription of an operator user.

The target object may be understood as a to-be-sensed or to-be-tracked object. When the terminal sends the sensing request #1, the target object may be the terminal (the terminal requests to sense/track the terminal). Alternatively, the target object may not be the terminal (the terminal requests to sense/track another object). In this case, the target object may be a UE or a non-UE. Optionally, the non-UE may be replaced with an object that does not have a communication capability, an object having a poor communication capability, an object that does not have a network connection to a wireless communication system, or the like. Optionally, the UE may be replaced with an object having a communication capability, an object having a good communication capability, an object having a network connection to a wireless communication system, or the like.

The first location information may be represented in a plurality of manners. In a manner, the first location information indicates an absolute location of the target object. In this case, the first location information may specifically include the absolute location of the target object, or the first location information may include an absolute location of a reference object and a relative location between the target object and the reference object. The reference object may be the terminal that sends the sensing request #1, or the reference object may be another UE or a non-UE. For example, the first location includes a location #2 of the reference object and a relative direction (for example, right in front) and a relative distance (for example, 10 meters) between the target object and the reference object. In another manner, the first location information indicates an area in which the target object is located. In this case, the first location information may specifically include the area in which the target object is located, for example, an area with a location #1 as an origin and an angle range of 0 to 45 degrees, or an area with the location #1 as a center and a radius of 30 meters. Alternatively, the first location information may include the absolute location of the reference object, a size of the area in which the target object is located, and a relative location between the area in which the target object is located and the reference object. It may be understood that the first location indicated by the first location information may be the same as or different from (for example, due to movement of the target object or an error of the first location information) an actual location of the target object.

Optionally, the sensing request #1 includes a non-UE indication, and the non-UE indication indicates that the sensing request #1 is specific to a non-UE. In other words, the non-UE indication indicates that the sensing request #1 is a sensing request initiated for a non-UE. After receiving the sensing request #1, the sensing function may determine that an object that needs to be sensed is a non-UE. It may be understood that, a non-UE may be directly indicated to be continuously tracked, or a non-UE may be indirectly indicated to be continuously tracked (for example, indicated by using a message type or a message name). A manner of indicating to continuously track a non-UE is not limited in this embodiment of this application.

Optionally, the terminal or the application server sends the sensing request #1 to the sensing function via an access and mobility management function, and the sensing function receives the sensing request #1 from the terminal or the application server via the access and mobility management function. It may be understood that a sensing request received by the access and mobility management function and a sensing request sent by the access and mobility management function may be the same or different (for example, the access and mobility management function extracts information from the received sensing request and re-encapsulates the information). Optionally, the application server may directly send the sensing request #1 to the sensing function, and the sensing function receives the sensing request #1 from the application server. A device that sends the sensing request #1 is not limited in this embodiment of this application.

Optionally, that the application server sends the sensing request #1 to the sensing function via the access and mobility management function includes: The application server sends the sensing request #1 to the access and mobility management function, and the access and mobility management function sends the sensing request #1 to the sensing function. Optionally, that the application server sends the sensing request #1 to the access and mobility management function includes: The application server sends the sensing request #1 via a capability exposure function and a gateway mobile sensing center. Specifically, the application server sends the sensing request #1 to the capability exposure function. The capability exposure function performs an authorization check on the application server. If the authorization check performed by the capability exposure function on the application server succeeds, the capability exposure function sends the sensing request #1 to the gateway mobile sensing center. The gateway mobile sensing center selects an appropriate access and mobility management function, and sends the sensing request #1 to the access and mobility management function. Optionally, that the application server sends the sensing request #1 to the access and mobility management function includes: The application server sends the sensing request #1 via the capability exposure function. Specifically, the application server sends the sensing request #1 to the capability exposure function. The capability exposure function performs an authorization check on the application server, and selects an appropriate access and mobility management function. If the authorization check on the application server succeeds, the capability exposure function sends the sensing request #1 to the access and mobility management function. Optionally, that the application server sends the sensing request #1 to the access and mobility management function includes: The application server sends the sensing request #1 via the gateway mobile sensing center. Specifically, the application server sends the sensing request #1 to the gateway mobile sensing center. The gateway mobile sensing center performs an authorization check on the application server, and selects an appropriate access and mobility management function. If the authorization check on the application server succeeds, the gateway mobile sensing center sends the sensing request #1 to the access and mobility management function.

Optionally, in S210, the application server may send the sensing request #1 to the sensing function via the capability exposure function. Optionally, that the application server may send the sensing request #1 to the sensing function via the capability exposure function includes: The capability exposure function performs an authorization check on the application server. After the authorization check succeeds, the capability exposure function selects an appropriate sensing function, and sends the sensing request #1 to the sensing function.

Optionally, in S210, the application server may send the sensing request #1 via the capability exposure network element and the gateway mobile sensing center. Optionally, that the application server may send the sensing request #1 via the capability exposure network element and the gateway mobile sensing center includes: The application server may send the sensing request #1 to the capability exposure function. The capability exposure function performs an authorization check on the application server. After the authorization check succeeds, the capability exposure function sends the sensing request #1 to the gateway mobile sensing center. The gateway mobile sensing center selects an appropriate sensing function, and sends the sensing request #1 to the sensing function.

Optionally, in S210, the application server may send the sensing request #1 via the gateway mobile sensing center. Optionally, that the application server sends the sensing request #1 via the gateway mobile sensing center includes: The application server sends the sensing request #1 to the gateway mobile sensing center. The gateway mobile sensing center performs an authorization check on the application server, and selects an appropriate sensing function. After the authorization check succeeds, the gateway mobile sensing center sends the sensing request #1 to the sensing function.

It should be noted that the sensing request #1 may be replaced with a first message or the like. A name of the sensing request #1 is not limited in this embodiment of this application.

S220. The sensing function obtains object distribution information in a first area in which the first location is located.

Optionally, the object distribution information indicates distribution of objects in the first area, for example, locations at which the objects are distributed in the first area, or respective locations of the objects in the first area, or a total quantity of objects distributed in the first area. It may be understood that the object distribution information specifically includes location information of each object in the first area. For the location information, refer to the foregoing representation manners of the first location information. That is, the object distribution information may be replaced with object location information. Optionally, information indicating the first area and the object distribution information may be carried in one message.

The following describes the object distribution information in the first area in three cases.

Case 1: The sensing function may receive the object distribution information from the terminal or the application server.

Optionally, the sensing request #1 may further include the object distribution information. In other words, the sensing request #1 sent by the terminal may include the first location information and the object distribution information.

Optionally, the object distribution information may be sent to the sensing function by using another message independent of the sensing request #1. This is not limited in this embodiment of this application.

It may be understood that the terminal or the application server sends the object distribution information in the first area, and the first area covers the first location. In a possible implementation, the first location information indicates the absolute location of the target object, and the first area may be an area with the absolute location as a center and a specific radius, or the first area may be another area that can cover the absolute location. In another possible implementation, the first location information indicates the area in which the target object is located, and the first area may be the area, or the first area is greater than the area and covers the area, or the first area overlaps the area.

Case 2: The sensing function may obtain the object distribution information from first sensing data.

The first sensing data includes the object distribution information in the first area, and the sensing function may obtain the object distribution information from the first sensing data.

The sensing function may obtain the first sensing data in a plurality of manners. In a first manner, after S210, the sensing function triggers sensing on the first area, to obtain the first sensing data corresponding to the first area. Optionally, the sensing function may send the first location information to a sensing execution device, and the sensing execution device senses the first area to obtain the first sensing data. The first area can cover the absolute location of the target object indicated by the first location information or the area in which the target object is located. Then, the sensing execution device sends the first sensing data to the sensing function. Optionally, the sensing function may alternatively determine the first area based on the first location information, send the first area to the sensing execution device, and receive, from the sensing execution device, the first sensing data corresponding to the first area. In a second manner, the sensing function obtains the first sensing data from historical sensing data. The historical sensing data may be obtained before S210 or S220. The historical sensing data may be a set of sensing data of a plurality of areas, or may be sensing data of one area. The first sensing data may be a part or all of the historical sensing data. The historical sensing data may be public sensing data that is triggered by another sensing service and that is stored in the sensing function. This is not limited in this application. In a third manner, before S210, the sensing function is triggered in a prediction procedure to perform sensing, so that the first sensing data is obtained during S220, from which the object distribution information is obtained. Optionally, the sensing execution device may include an access network device and/or a terminal.

The following specifically describes the third manner.

Before S210, optionally, the sensing function may obtain predicted location information. The predicted location information indicates a predicted location of the target object. The sensing function triggers the sensing execution device to sense an area in which the predicted location is located. The sensing execution device senses the area in which the predicted location is located, and sends sensing data to the sensing function. Based on this, after S210, the sensing function may obtain, in time, the first sensing data corresponding to the area in which the predicted location is located, and obtain the object distribution information from the first sensing data. That is, the sensing execution device may sense in advance the area in which the predicted location is located, instead of being triggered after S210 to perform sensing. This improves efficiency of obtaining the object distribution information by the sensing function, and further improves accuracy of identifying the target object by the sensing function. For a specific representation manner of the predicted location information, refer to the first location information. Details are not described herein again. The first location is covered by the area in which the predicted location is located, or the first area in which the first location is located is covered by the area in which the predicted location is located. Optionally, the sensing function may receive a sensing request #2. The sensing request #2 includes the predicted location information, and the sensing request #2 is used to request to continuously track the target object. Optionally, the sensing function may first receive the sensing request #2, and then receive the sensing request #1. Optionally, the sensing request #2 may include a tracking indication, and the tracking indication indicates continuous tracking. Optionally, the sensing request #2 may include a tracking indication, and the sensing request #1 may not include a tracking indication. Alternatively, the sensing request #2 does not include a tracking indication, and the sensing request #1 may include a tracking indication. Alternatively, the sensing request #2 may include a tracking indication, and the sensing request #1 may also include a tracking indication. In other words, one or both of the sensing request #1 and the sensing request #2 may include a tracking indication. Optionally, sources of the sensing request #1 and the sensing request #2 are the same. To be specific, the sensing request #1 and the sensing request #2 are sent from a same sender along a same path. For example, both the sensing request #1 and the sensing request #2 may be from the application server, and the application server may send the sensing request #1 and the sensing request #2 to the sensing function via the capability exposure network element.

Optionally, that the sensing function triggers the sensing execution device to sense the area in which the predicted location is located includes: The sensing function sends the predicted location information to the sensing execution device, and the sensing execution device senses the area in which the predicted location indicated by the predicted location information is located, to obtain the first sensing data.

Optionally, before S210, the method further includes: The sensing function obtains information indicating a first moment or a first time range. The predicted location information corresponds to the information indicating the first moment or the first time range. That is, the predicted location indicated by the predicted location information corresponds to the first moment or the first time range. The sensing function may determine a third moment based on the first moment, or determine third time range information based on first time range information. The sensing function may trigger the sensing execution device to sense, from the third moment or within the third time range, the area in which the predicted location is located, so that the sensing execution device obtains sensing data in the area in which the predicted location is located within the third time range or from the third moment. The sensing function may store the sensing data in the area in which the predicted location is located within the third time range or from the third moment. Optionally, that the sensing function may determine the third moment based on the first moment includes: The sensing function, determines the third moment earlier than the first moment. Optionally, that the sensing function determine the third time range information based on the first time range information includes: The sensing function determines the third time range covering the first time range, or determines the third time range covering a start moment of the first time range. That is, the first sensing data is data obtained through sensing by the sensing execution device from the third moment or sensing data obtained through sensing by the sensing execution device within the third time range. Optionally, the third moment is earlier than the first moment, or a start moment of the third time range is earlier than the first moment, or the start moment of the third time range is earlier than the start moment of the first time range, or the start moment of the third time range is earlier than the first moment, or the third time range includes the first time range, or the start moment of the third time range is earlier than the start moment of the first time range and an end moment of the third time range is later than an end moment of the first time range. That is, after obtaining the first moment or the first time range, the sensing function may obtain the earlier third moment or third time range, and sense, from the third moment, the area in which the predicted location is located to obtain the first sensing data, or sense, within the third time range, the area in which the predicted location is located to obtain the first sensing data. In this way, sensing data in a prediction area can be obtained through sensing earlier. For example, the first moment is 10 o'clock, and the third moment may be 9:55; or the first time range is 10:00 to 10:05, and the third time range is 9:55 to 10:10.

Optionally, that the sensing function obtains the information indicating the first moment or the first time range includes: The sensing function obtains the information that is carried in the sensing request #2 and that indicates the first moment or the first time range. Optionally, the sensing request #2 may carry both the information indicating the first moment and the predicted location information, or may carry both the information indicating the first time range and the predicted location information. In this way, the sensing function may obtain, based on the sensing request #2, the information indicating the first moment and the predicted location information, or the information indicating the first time range and the predicted location information.

Optionally, the sensing request #1 in S210 further includes information indicating a second moment or a second time range. The second moment or the second time range corresponds to the first location. That is, the sensing function senses the target object in the first area in which the first location is located from the second moment or within the second time range. Therefore, object distribution information in the first area from the second moment or within the second time range needs to be obtained. That is, the sensing function needs to obtain, from the sensing data in the area in which the predicted location is located within the third time range or from the third moment, sensing data in the first area in which the first location is located from the second moment or sensing data in the first area in which the first location is located within the second time range, and obtain the object distribution information in the first area from the sensing data in the first area. To be specific, the sensing function may trigger in advance the sensing execution device to perform sensing from the third moment or the start moment of the third time range to obtain the sensing data in the area in which the predicted location is located. The sensing execution device may send, to the sensing function, the sensing data obtained through sensing in the area in which the predicted location is located. After receiving the sensing request #1, the sensing function obtains, from the sensing data sent by the sensing execution device, the sensing data of the first area from the second moment or the sensing data of the first area within the second time range, and obtains the object distribution information in the first area from the sensing data of the first area from the second moment or the sensing data of the first area within the second time range.

Optionally, the sensing request #1 may include the information indicating the second moment or the second time range, or may not include the information indicating the second moment or the second time range, where the information indicating the second moment or the second time range may be sent by using another message independent of the sensing request #1.

Optionally, the second moment is later than the third moment, or a start moment of the second time range is later than the third moment, or the second moment is covered by the third time range, or the start moment of the second time range is covered by the third time range, or the second time range is covered by the third time range, or the start moment of the second time range is later than the start moment of the third time range, or the start moment of the second time range is later than the start moment of the third time range and an end moment of the second time range is earlier than the end moment of the third time range. To be specific, the sensing function may trigger in advance the sensing execution device to start a sensing functionality. When the second moment arrives, the object distribution information may be directly obtained from sensing data from the second moment, or the object distribution information may be directly obtained from the sensing data within the second time range. For example, the first moment is 10 o'clock, the third moment may be 9:55, and the second moment may be 10:02. That is, the sensing function may obtain sensing data of the predicted location within a long time period through sensing, obtain, from the sensing data of the predicted location within the time period, the sensing data of the first area from the first moment in the sensing request #1 or the sensing data of the first area within the first time range in the sensing request #1, and obtain first object distribution information from the sensing data in the first area. For example, the third time range is 9:55 to 10:10, and the second time range is 10:02 to 10:05. The sensing function triggers the sensing execution device to perform sensing to obtain sensing data of the area in which the predicted location is located from 9:55 to 10:10, and sends the sensing data of the area in which the predicted location is located from 9:55 to 10:10 to the sensing function. The sensing function determines sensing data of the first area from 10:02 to 10:05 from the sensing data of the area in which the predicted location is located from 9:55 to 10:10, and determines the object distribution information of the first area from the sensing data of the first area. That is, the sensing execution device may obtain sensing data of a large prediction area within a large time range through sensing. The sensing function may obtain sensing data of a small first area within a small time range from the sensing data of the large prediction area within the large time range, and obtain object distribution information in the first area from the obtained sensing data of the small first area within the small time range.

It may be understood that the sensing function may directly use the first moment or the first time range instead of determining the third moment or the third time range based on the first moment or the first time range. In this case, the third moment in the foregoing solution may be replaced with the first moment, or the third time range in the foregoing solution may be replaced with the first time range.

Case 3: The sensing function may receive first object distribution information of the first area from the terminal or the application server, and obtain second object distribution information of the first area from the first sensing data. In this case, the first object distribution information and the second object distribution information in the case 3 jointly form the object distribution information in S230. That is, in S230, the sensing function may identify a first object in the first area based on the two pieces of distribution information.

Optionally, for the first object distribution information, refer to the descriptions of the case 1, and for the second object distribution information, refer to the descriptions of the case 2.

S230. The sensing function identifies a first object in the first area as the target object based on the first location and the object distribution information, and senses the target object.

Optionally, the sensing function may determine, based on the object distribution information, object distribution in the first area in which the first location is located, that is, locations at which objects are distributed in the first area; and determine, based on the object distribution, a first object that is in the first area and that is close to the first location or at the first location as the target object.

Optionally, that the sensing function senses the target object includes: The sensing function may send first indication information to the sensing execution device. The first indication information indicates to sense the target object. The sensing execution device may be an access network device related to the first area, for example, may be an access network device to which a cell corresponding to the first area belongs.

Optionally, if the sensing request #1 includes the tracking indication, the sensing the target object includes: continuously tracking the target object based on the tracking indication, to obtain a tracking result.

Optionally, after S230, the sensing function continuously tracks the first object to obtain a tracking result. Optionally, the sensing function may calibrate the tracking result through the following process: The terminal or the application server may send second location information to the sensing function. The sensing function may receive the second location information from the terminal or the application server. The second location information indicates a second location of the target object. The sensing function may continuously track the target object to obtain second sensing data, and then obtain a tracking result based on the second location and the second sensing data. That is, the second sensing data (or a tracking result obtained based on the second sensing data) may be calibrated by using the second location, to obtain an accurate or complete tracking result.

Optionally, after S230, the sensing function continuously tracks the first object to obtain a tracking result, and sends the tracking result to a corresponding receiver. For example, if the sensing request #1 in S210 is sent by the terminal or the application server to the sensing function via the access and mobility management function, the sensing function sends the tracking result to the terminal or the application server via the access and mobility management function. If the sensing request #1 in S210 is directly sent by the application server to the sensing function, the sensing function directly sends the tracking result to the application server. If the sensing request #1 in S210 is sent by the application server to the capability exposure function, the capability exposure function sends the sensing request #1 to the gateway mobile sensing center, and the gateway mobile sensing center sends the sensing request #1 to the sensing function, the sensing function sends the tracking result to the gateway mobile sensing center, the gateway mobile sensing center sends the tracking result to the capability exposure function, and the capability exposure function sends the tracking result to the application server. If in S210, the application server sends the sensing request #1 to the access and mobility management function via the gateway mobile sensing center, and the access and mobility management function sends the sensing request #1 to the sensing function, the sensing function sends the tracking result to the mobility management function, the mobility management function sends the tracking result to the gateway mobile sensing center, and the gateway mobile sensing center sends the tracking result to the sensing function. If in S210 the application server sends the sensing request #1 to the access and mobility management function via the capability exposure function, and the access and mobility management function sends the sensing request #1 to the sensing function, the sensing function sends the tracking result to the mobility management function, the mobility management function sends the tracking result to the capability exposure function, and the capability exposure function sends the tracking result to the sensing function. If in S210, the application server sends the sensing request #1 to the sensing function via the capability exposure function, the sensing function sends the tracking result to the application server via the capability exposure function. If in S210, the application server sends the sensing request #1 to the capability exposure function, and the capability exposure function sends the sensing request #1 to the gateway mobile sensing center, the sensing function sends the tracking result to the gateway mobile sensing center, the gateway mobile sensing center sends the tracking result to the capability exposure function, and the capability exposure function sends the tracking result to the application server. If in S210, the application server sends the sensing request #1 to the sensing function via the gateway mobile sensing center, the sensing function sends the tracking result to the application server via the gateway mobile sensing center.

Optionally, the communication method 200 further includes: obtaining location information of a UE in the first area. S230 includes: identifying the first object in the first area as the target object based on the first location, the object distribution information, and the location information of the UE. The target object is a non-user-equipment UE. Optionally, if the sensing request #1 includes a non-UE indication, the sensing function may learn that the sensing request #1 is specific to a non-UE. Therefore, the sensing function may be triggered to obtain the location information of the UE in the first area. In other words, after the sensing function learns that a non-UE is to be sensed, the sensing function may be triggered to obtain the location information of the UE in the first area, so that a non-UE in the first area is determined as the target object based on the location information of the UE.

Optionally, the identifying the first object in the first area as the target object based on the first location, the object distribution information, and the location information of the UE includes: The sensing function determines the distribution of the objects in the first area based on the object distribution information, excludes the UE in the first area based on the location information of the UE, and determines, in remaining non-UEs in the first area, the first object close to the first location or at the first location. In this case, the first object may be the target object.

Optionally, for the case 1 in S220, the sensing function determines the object distribution in the first area based on the object distribution information from the terminal or the application server, determines a location of the UE in the first area based on the location information of the UE, excludes the UE from the objects in the first area based on the location of the UE, and determines, from remaining non-UEs, the first object close to the first location or at the first location. In this case, the first object may be the target object.

Optionally, for the case 2 in S220, the sensing function determines the distribution of the objects in the first area based on the object distribution information in the first sensing data, excludes the location of the UE in the first area based on the location information of the UE, and determines, from remaining non-UEs, the first object close to the first location or at the first location. In this case, the first object may be the target object.

Optionally, for the case 3 in S220, the sensing function may determine first distribution of the objects in the first area based on the first object distribution information from the terminal or the application server, the sensing function may determine, based on the first sensing data, second distribution of objects in the area in which the predicted location is located, and the sensing function determines the target object based on the first distribution, the second distribution, and the location information of the UE. For example, the sensing function excludes the UE in the first distribution based on the location information of the UE, excludes the UE in the second distribution based on the location information of the UE, and determines, based on a remaining non-UE in the first distribution and a remaining non-UE in the second distribution, the first object at the first location or close to the first location. In this case, the first object may be the target object. For another example, the sensing function obtains object distribution in the first area based on the first distribution and the second distribution, then excludes the UE from the objects in the first area based on the location information of the UE, and finally determines, based on remaining non-UEs, the first object at the first location or close to the first location. In this case, the first object may be the target object.

It should be noted that there is no limitation on a sequence between S220 and the obtaining the location information of the UE in the first area, and S220 may be performed before, after, or at the same time when the location information of the UE in the first area is obtained.

Optionally, the object in the first area may include a non-UE, or may include a non-UE and a UE. Optionally, the object in the first area may include a terminal, or may not include a terminal. For example, if the terminal is the target object, the first area may include the terminal. If the terminal device is not the target object, the first area may include the terminal or may not include the terminal. Whether the first area includes a terminal is not limited in this embodiment of this application.

The following describes two manners in which the sensing function obtains the location information of the UE in the first area.

Manner 1: The access and mobility management function sends an identifier of the UE in the first area to the sensing function, the sensing function receives the identifier of the UE in the first area from the access and mobility management function, the sensing function sends the identifier of the UE to a positioning function, and the positioning function determines, based on the identifier of the UE, the location information corresponding to the identifier of the UE, and sends the location information corresponding to the identifier of the UE to the sensing function.

Optionally, that the sensing function sends the identifier of the UE to the positioning function includes: The sensing function directly sends the identifier of the UE to the positioning function. The positioning function determines, based on the identifier of the UE, the location information corresponding to the identifier of the UE.

Optionally, that the sensing function sends the identifier of the UE to the positioning function includes: The sensing function sends the identifier of the UE to the positioning function via the gateway mobile sensing center. The positioning function determines, based on the identifier of the UE, the location information corresponding to the identifier of the UE. The positioning function sends the location information corresponding to the identifier of the UE to the sensing function via the gateway mobile sensing center. Optionally, the sensing function sends the identifier of the UE to the positioning function via the gateway mobile sensing center. The sensing function sends a positioning request to the gateway mobile sensing center. The positioning request includes the identifier of the UE. The gateway mobile sensing center determines an access and mobility management function that serves the UE identified by the identifier of the UE. The gateway mobile sensing center sends the positioning request to the access and mobility management function that serves the UE. The access and mobility management function that serves the UE selects a positioning function, and sends the positioning request to the positioning function. The positioning request includes the identifier of the UE. The positioning function determines the location information of the UE identified by the identifier of the UE, and sends the location information of the UE to the access and mobility management function that serves the UE. The mobility management function sends the location information of the UE to the sensing function via the gateway mobile sensing center.

Optionally, that the sensing function sends the identifier of the UE to the positioning function includes: The sensing function sends the identifier of the UE to the positioning function via the access and mobility management function. The positioning function determines, based on the identifier of the UE, the location information corresponding to the identifier of the UE. The positioning function sends the location information corresponding to the identifier of the UE to the sensing function via the access and mobility management function. That the sensing function sends the identifier of the UE to the positioning function via the access and mobility management function includes: The sensing function determines the access and mobility management function that serves the UE identified by the identifier of the UE, and sends a positioning request to the access and mobility management function that serves the UE. The positioning request includes the identifier of the UE. The access and mobility management function that serves the UE selects a positioning function, and sends the positioning request to the positioning function. The positioning function determines the location information of the UE based on the positioning request, and sends the location information of the UE to the access and mobility management function that serves the UE. The access and mobility management function that serves the UE sends the location information of the UE to the sensing function.

Optionally, in the manner 1, before the access and mobility management function sends the identifier of the UE in the first area to the sensing function, the method further includes: The sensing function sends a request for the identifier of the UE in the first area to the access and mobility management function, and the access and mobility management function sends the identifier of the UE in the first area to the sensing function. To be specific, the sensing function may request the identifier of the UE in the first area from the access and mobility management function, and the access and mobility management network element determines the UE in the first area from UEs registered with the access and mobility management network element, and sends the identifier of the UE in the first area to the sensing function.

Optionally, in the manner 1, the access and mobility management function may obtain the identifier of the UE in the first area, and send the identifier of the UE in the first area to the sensing function in the sensing request #1, or may send the identifier of the UE in the first area to the sensing function in another message different from the sensing request #1. Optionally, the access and mobility management function may receive information indicating the first area. For example, the access and mobility management function may receive a sensing request #3, and the sensing request #3 may include the information indicating the first area. Alternatively, the access and mobility management function may send the first location information to the access network device, the access network device may determine the first area based on the first location indicated by the first location information, and the access network device sends, to the access and mobility management function, the information indicating the first area.

Manner 2: The access and mobility management function may send the location information of the UE in the first area to the sensing function, and the sensing function receives the location information of the UE in the first area from the access and mobility management function. Optionally, the sensing request #1 sent by the access and mobility management function to the sensing function may include the location information of the UE in the first area. The sensing request #1 may be from the terminal or the application server. That is, the terminal or the application server may further send the location information of the UE in the first area when sending the first location information. The sensing function may obtain the location information of the UE in the first area from the sensing request #1.

Optionally, the sensing request #1 may not include the location information of the UE in the first area. The terminal or the application server may send the location information of the UE in the first area in a message different from the sensing request #1. A manner in which the terminal or the application server sends the location information of the UE in the first area is not limited in this embodiment of this application.

In this embodiment of this application, the sensing function may identify the first object in the first area as the target object based on the first location of the target object and the object distribution information in the first area, so that the target object can be more accurately sensed or tracked. To be specific, when the target object is determined, calibration is performed for a possible error of the first location by using the object distribution information in the first area and the first location, to obtain more accurate location information of the target object, thereby improving tracking accuracy. In addition, the first object may be a non-UE. When determining the first object in the objects in the first area, the sensing function refers to the location information of the UE in the first area. In this way, the UE in the first area can be excluded, and the first object close to the first location can be determined as the target object within a smaller range or fewer objects after the exclusion, thereby improving accuracy of identifying the target object and further improving sensing or tracking accuracy.

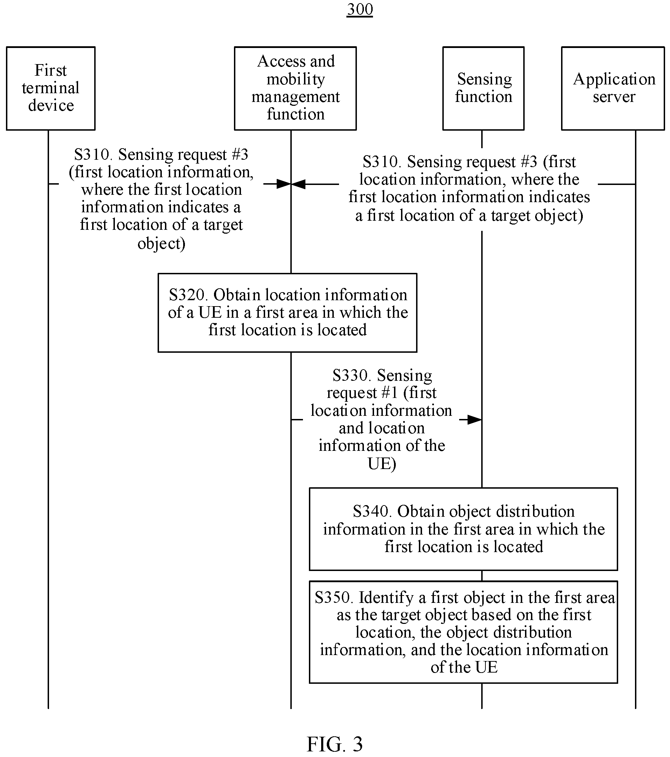

In the method 200, the access and mobility management function may be used as an intermediate device to receive the sensing request #1 from another device and send the sensing request #1 to the sensing function. The sensing function may obtain the first location information and/or the object distribution information in the first area from the sensing request #1. This solution is specifically described by using a communication method 300 shown in FIG. 3. As shown in FIG. 3, the communication method 300 includes the following steps.

S310. A terminal or an application server sends a sensing request #3 to an access and mobility management function. The access and mobility management function receives the sensing request #3 from the terminal or the application server. The sensing request #3 includes first location information, and the first location information indicates a first location of a target object.

Optionally, the sensing request #3 is used to request to continuously track the target object. In other words, the sensing request #3 is used to request to continuously track the target object. Similar to the sensing request #1, the sensing request #3 may also include a tracking indication. For details, refer to the descriptions of S210. To avoid repetition, details are not described again.

Optionally, similar to the sensing request #1, the sensing request #3 may also include a non-UE indication. For details, refer to the descriptions of S210. To avoid repetition, details are not described again.

Optionally, that the application server sends the sensing request #3 to the access and mobility management function in S310 includes: The application server sends the sensing request #3 to the access and mobility management function via a capability exposure function, and the access and mobility management function receives the sensing request #3 via the capability exposure function. Specifically, the application server sends the sensing request #3 to the capability exposure function. The capability exposure function performs an authorization check on the application server, and selects an appropriate access and mobility management function. If the authorization check on the application server succeeds, the capability exposure function sends the sensing request #3 to the access and mobility management function. Alternatively, that the application server sends the sensing request #3 to the access and mobility management function includes: The application server sends the sensing request #3 to the access and mobility management function via a gateway mobile sensing center, and the access and mobility management function receives the sensing request #3 from the application server via the gateway mobile sensing center. Specifically, the application server sends the sensing request #3 to the gateway mobile sensing center. The gateway mobile sensing center performs an authorization check on the application server, and selects an appropriate access and mobility management function. If the authorization check on the application server succeeds, the gateway mobile sensing center sends the sensing request #3 to the access and mobility management function. Alternatively, that the application server sends the sensing request #3 to the access and mobility management function includes: The application server sends the sensing request #3 to the access and mobility management function via the capability exposure function and the gateway mobile sensing center, and the access and mobility management function receives the sensing request #3 via the capability exposure function and the gateway mobile sensing center. Specifically, that the application server sends the sensing request #3 to the access and mobility management function via the capability exposure function and the gateway mobile sensing center includes: The application server sends the sensing request #3 to the capability exposure function. The capability exposure function performs an authorization check on the application server. If the authorization check performed by the capability exposure function on the application server succeeds, the capability exposure function sends the sensing request #3 to the gateway mobile sensing center. The gateway mobile sensing center selects an appropriate access and mobility management function, and sends the sensing request #3 to the access and mobility management function.

S310 triggers S320. After receiving the sensing request #3 in S310, the access and mobility management function learns that location information of a UE in a first area needs to be obtained, and therefore S320 may be triggered.

S320. The access and mobility management function obtains the location information of the UE in the first area in which the first location is located.

The following describes S320 in two cases.

Case 1: S320 includes: The access and mobility management function obtains an identifier of a UE that may be in the first area, and then sends the identifier of the UE to a positioning function. The positioning function positions the UE identified by the identifier of the UE, obtains location information of the UE, and returns the location information of the UE to the access and mobility management function. The access and mobility management function determines the location information of the UE in the first area based on the location information and the first area. That is, the access and mobility management function first determines UEs that may be in the first area, and then requests location information of these UEs from the positioning function. The determining the UEs that may be in the first area may be specifically as follows: The access and mobility management function obtains a corresponding tracking area (tracking area, TA) identity (identity), base station (identified by a RAN ID), and cell (identified by a cell identity) based on the first area. The access and mobility management function may obtain at least one of a current TA identity, base station identity, or cell identity of a UE in a connected state, and a TA(s) identity of a UE in a non-connected state (the UE is in one of TAs). Therefore, if the first area is equivalent to one or more TA ranges, the access and mobility management function first determines a UE in the connected state in the first area, then pages at least one UE(s) in the non-connected state that is in a TA(s) and that is in the first area, or a UE(s) in the non-connected state in an intersection set between the TA(s) and the first area, to obtain at least one of a TA identity, a base station identity, or a cell identity corresponding to the UE(s), and finally determines the UE belonging to the first area. If the first area is not equivalent to one or more TA ranges, base station ranges, or cell ranges, the access and mobility management function first determines a UE in the connected state in the first area (UE definitely in the first area), and then pages at least one UE(s) in the non-connected state that is in a TA(s) and that is included in or includes the first area, or a UE(s) in the non-connected state in an intersection set between the TA(s) and the first area, to obtain at least one of a TA identity, a base station identity, or a cell identity corresponding to the UE(s), and determines a possible approximate location of the paged UE(s) in the non-connected state based on the at least one of the TA identity, the base station identity, or the cell identity corresponding to the paged UE(s) in the non-connected state. For the UE(s) in the non-connected state, some are definitely in the first area (UEs definitely in the first area), some may be at a boundary of the first area, and the UE(s) in the non-connected state at the boundary of the first area is understood as a UE that may be in the first area.

Case 2: The sensing request #3 in S310 may include the location information of the UE in the first area. In this case, in S320, the access and mobility management function may obtain the location information of the UE in the first area from the sensing request #3.

S330. The access and mobility management function sends a sensing request #1 to a sensing function. The sensing function receives the sensing request #1 from the access and mobility management function. The sensing request #1 includes the first location information and the location information of the UE. The sensing request #1 is used to request to continuously track the target object.

Optionally, in S320, the sensing request #3 may include the location information of the UE in the first area, or may not include the location information of the UE in the first area.

Optionally, the sensing request #1 in S330 and the sensing request #3 in S310 may be a same sensing request. In this case, the access and mobility management function is responsible for forwarding (transparently transmitting without parsing) the sensing request #3 (or the sensing request #1) from the terminal or the application server to the sensing function.

Optionally, the sensing request #1 in S330 and the sensing request #3 in S310 may be different sensing requests. The access and mobility management function may extract information from the sensing request #3 in S310 and encapsulate the information (a message name or a structure may change) to obtain the sensing request #1 in S330. For example, the access and mobility management function may obtain the sensing request #1 in S330 by adding the location information of the UE in the first area to the sensing request #3 in S310.

Optionally, the sensing request #3 in S310 and the sensing request #1 in S330 may include object distribution information of the first area. That is, the sensing request #3 received by the access and mobility management function from the terminal or the application server may include the object distribution information of the first area, and the object distribution information of the first area may be carried in the sensing request #1 and sent to the sensing function. Specifically, for the object distribution information in the first area, refer to the descriptions of the case 1 in S220.

Optionally, the sensing request #3 in S310 and the sensing request #1 in S330 may include information indicating a second moment or a second time range. That is, the sensing request #1 and the sensing request #3 may include the first location information and the information indicating the second moment or the second time range. The second moment or the second time range corresponds to the first location or the first area in which the first location is located. That is, the sensing request #1 and the sensing request #3 may include the first location information and the information indicating the second moment or the second time range. Optionally, the sensing request #1 may include the information indicating the second moment or the second time range, or may not include the information indicating the second moment or the second time range, where the information indicating the second moment or the second time range may be sent by using another message independent of the sensing request #1. Specifically, for the information indicating the second moment or the second time range, refer to the descriptions of the method 200.

Optionally, before S310, the communication method 300 further includes: The access and mobility management function may receive predicted location information, and the access and mobility management function may send the predicted location information to the sensing function. Specifically, for the predicted location information, refer to the descriptions of the case 3 in S220.

S340. The sensing function obtains the object distribution information in the first area in which the first location is located.

For details about S340, refer to the descriptions of S220. Details are not described herein again.

S350. The sensing function identifies a first object in the first area as the target object based on the first location, the object distribution information, and the location information of the UE, and senses the target object.

The target object is a non-user-equipment UE. Optionally, if the sensing request #1 includes a non-UE indication, the sensing function may learn that the sensing request #1 is specific to a non-UE. In other words, after the sensing function learns that a non-UE is to be sensed, the sensing function may be triggered to perform S350.

Optionally, S350 includes: The sensing function determines distribution of objects in the first area based on the object distribution information, excludes the UE in the first area based on the location information of the UE, and determines, in remaining non-UEs in the first area, the first object close to the first location or at the first location. In this case, the first object may be the target object.

Specifically, for S340, refer to the descriptions of S230.

In the communication method 300, after receiving the sensing request #3 carrying the first location information, the access and mobility management function obtains the location information of the UE in the first area in which the first location indicated by the first location information is located, and sends the location information of the UE in the first area and the first location information to the sensing function, so that the sensing function may identify the first object in the first area as the target object based on the first location of the target object and the location information of the UE in the first area. Therefore, the target object can be more accurately sensed or tracked. To be specific, when the target object is determined, the UE in the first area is excluded by using the location information of the UE in the first area and the first location that are provided by the access and mobility management function, so that the first object close to the first location can be determined as the target object within a smaller range or fewer objects after the exclusion, and calibration is performed for a possible error of the first location, thereby improving accuracy of identifying the target object and improving sensing or tracking accuracy.

The following specifically describes a communication method 400 to a communication method 700. In the following specific descriptions, a first object may be a first non-UE. In the communication method 400 and the communication method 600, an AMF obtains, based on location information of a UE returned by an LMF, location information of a UE in a first area in which a first location is located, and an SF obtains the location information of the UE in the first area from the AMF. In the communication method 500 and the communication method 700, an SF obtains, based on location information of a UE returned by an LMF, location information of a UE in a first area in which a first location is located. In the communication method 400 and the communication method 500, the SF uses historical second object distribution information and/or first object distribution information from a UE or an AF when determining the first non-UE in the first area. In the communication method 600 and the communication method 700, the SF uses second object distribution information of an area in which a predicted location is located and/or first object distribution information from a UE or an AF when determining the first non-UE in the first area. In the following communication method 400 to communication method 700, an example in which a terminal is a UE, a sensing function is an SF, a sensing execution device is a RAN, an access and mobility management function is an AMF, a location management function is an LMF, a capability exposure function is an NEF, a gateway mobile sensing center is a GMSC, and an application server is an AF is used for description.

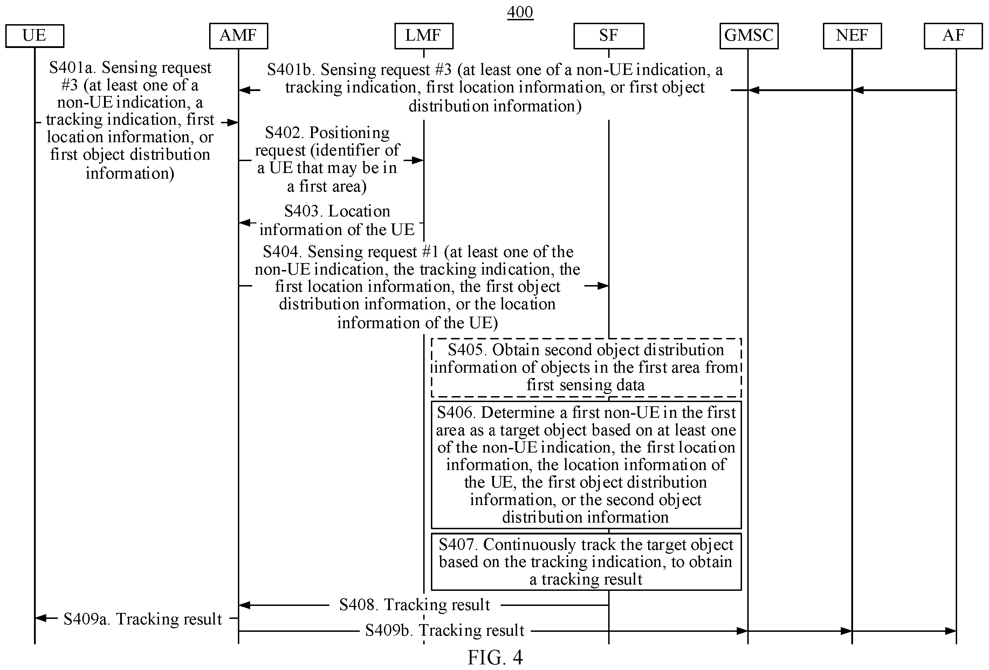

The communication method 400 corresponds to the case 1, the case 2, or the case 3 in S220 in the method 200 and corresponds to the case 1 in S320. As shown in FIG. 4, the communication method 400 includes the following steps.

S401a. The UE sends a sensing request #3 to the AMF. The AMF receives the sensing request #3 from the UE. Optionally, the sensing request #3 includes at least one of a non-UE indication, a tracking indication, first location information, or first object distribution information.

The non-UE indication indicates that the sensing request #3 is specific to a non-UE. The tracking indication indicates continuous tracking. Optionally, S401a may not include the non-UE indication or the tracking indication. A message type of the sensing request #3 may indicate to continuously track a non-UE. A manner of how to indicate to continuously track a non-UE is not limited in this embodiment of this application.

S401b. The AF sends a sensing request #3 to the AMF. The AMF receives the sensing request #3 from the UE.

For descriptions of the sensing request #3, refer to S401a.

Optionally, S401b includes: The AF sends the sensing request #3 to the AMF via the NEF and/or the GMSC. Optionally, that the AF sends the sensing request #3 to the AMF via the NEF includes: The AF sends the sensing request #3 to the NEF. The NEF performs an authorization check on the AF that sends the sensing request #3. If the authorization check performed by the NEF on the AF succeeds, the NEF selects an appropriate AMF, that is, the AMF in FIG. 4, and sends the sensing request #3 to the AMF. The AMF receives the sensing request #3 from the NEF. Optionally, that the AF sends the sensing request #3 to the AMF via the GMSC includes: The AF sends the sensing request #3 to the GMSC. The GMSC performs an authorization check on the AF that sends the sensing request #3. If the authorization check performed by the GMSC on the AF succeeds, the GMSC selects an appropriate AMF, that is, the AMF in FIG. 4, and sends the sensing request #3 to the AMF. The AMF receives the sensing request #3 from the GMSC. Optionally, that the AF sends the sensing request #3 to the AMF via the GMSC and the NEF includes: The AF sends the sensing request #3 to the NEF. The NEF performs an authorization check on the AF that sends the sensing request #3. If the authorization check performed by the NEF on the AF succeeds, the NEF sends the sensing request #3 to the GMSC. The GMSC selects an appropriate AMF, that is, the AMF in FIG. 4, and sends the sensing request #3 to the AMF.

Optionally, the sensing request #3 in S401a or S402b may include first object distribution information of a first area, or may not include the first object distribution information of the first area. If the sensing request #3 includes the first object distribution information of the first area, the first object distribution information may be the object distribution information in the case 1 in S230 or the first object distribution information in the case 3. The object distribution information may indicate distribution of objects in the first area, that is, locations at which the objects are distributed in the first area, and whether the objects are UEs or non-UEs may not be distinguished.

One of S401a and S401b may be performed. To be specific, the sensing request is initiated by the UE, or the sensing request is initiated by the AF.

It may be understood that, for ease of description, in S401a or S401b, the sensing request #3 includes the non-UE indication, the tracking indication, the first location information, and the first object distribution information. In some cases, the information may be included in different messages, or may be included in a same message. This is not limited in this embodiment of this application.

S402. The AMF sends a positioning request to the LMF. The LMF receives the positioning request from the AMF. The positioning request includes an identifier of a UE that may be in the first area.

Before S402, the AMF may determine the first area in which a first location is located, and obtain the identifier of the UE that may be in the first area. Specifically, for how the AMF obtains the identifier of the UE in the first area, refer to the descriptions of the case 1 in S320. There may be one or more UEs in the first area. Therefore, the positioning request may include identifiers of the one or more UEs.

Optionally, the AMF may trigger S402 based on the tracking indication and/or the non-UE indication in the sensing request #3. That is, the AMF learns, based on the tracking indication and/or the non-UE indication, that a non-UE is to be continuously tracked. In this case, location information of the UE in the first area in which the non-UE is located needs to be determined. Therefore, S402 may be performed.

S403. The LMF sends, to the AMF, the location information of the UE identified by the identifier of the UE. The AMF receives, from the LMF, the location information of the UE identified by the identifier of the UE.

Optionally, before S403, the LMF positions the UE identified by the identifier of the UE in the positioning request, to obtain the location information of the UE.

S404. The AMF sends a sensing request #1 to the SF. The SF receives the sensing request #1 from the AMF. Optionally, the sensing request #1 includes at least one of the non-UE indication, the tracking indication, the first location information, the first object distribution information, or the location information of the UE.

Optionally, the AMF determines the location information of the UE in the first area based on the first area and the location information returned by the LMF.

Optionally, if the sensing request #3 may include the object distribution information of the first area, the sensing request #1 in S404 may also include the object distribution information of the first area. That is, compared with the sensing request #3, the sensing request #1 additionally includes the location information of the UE in the first area.

It may be understood that, for ease of description, in S404, the sensing request #1 includes at least one of the non-UE indication, the tracking indication, the first location information, the first object distribution information, or the location information of the UE. In some cases, the information may be included in different messages, or may be included in a same message. This is not limited in this embodiment of this application.

Optionally, the sensing request #3 and the sensing request #1 may include the location information of the UE in the first area. In this case, S402 and S403 may not be performed. This corresponds to the case 2 in S320. That is, the location information of the UE in the first area may be from a requester, or may be obtained by the AMF.

Optionally, the sensing request #3 in S401a or S401b and the sensing request #1 in S404 may include information indicating a second moment or a second time range. The second moment or the second time range corresponds to the first location or the first area in which the first location is located, indicating that the SF needs to determine a first non-UE in the first area from the second moment or within the second time range as a target object in S406.

S405. The SF obtains second object distribution information of the objects in the first area from first sensing data.

The first sensing data of the SF may include the second object distribution information of the objects in the first area. Therefore, the SF may obtain the second object distribution information of the objects in the first area from the first sensing data. The first sensing data may be historical sensing data, may be sensing data previously obtained by the SF, and may include sensing data currently obtained by the SF.

Optionally, S405 includes: The SF determines the first location based on the first location information in the sensing request #1, determines the first area in which the first location is located, and obtains the second object distribution information of the objects in the first area from the first sensing data.

S406. The SF determines a first non-UE in the first area as a target object based on at least one of the non-UE indication, the first location information, the location information of the UE, the first object distribution information, or the second object distribution information.

S406 includes the following three cases: Optionally, if the sensing request #3 and the sensing request #1 include the first object distribution information, the SF determines the first non-UE in the first area as the target object based on the non-UE indication, the first location information, the location information of the UE, and the first object distribution information. In this case, S405 may not be performed. Alternatively, the SF determines the first non-UE in the first area as the target object based on the non-UE indication, the first location information, the location information of the UE, and the second object distribution information. In this case, the sensing request #3 and the sensing request #1 may not include the first object distribution information. Alternatively, the SF determines the first non-UE in the first area as the target object based on the non-UE indication, the first location information, the location information of the UE, the first object distribution information, and the second object distribution information. In this case, the sensing request #3 and the sensing request #1 include the first object distribution information, and S405 may be performed.

Optionally, S406 includes: The SF determines, based on the first location information, the first area in which the first location is located, and the SF determines object distribution in the first area based on the first object distribution information and/or the second object distribution information. Specifically, the SF determines first distribution of the objects in the first area based on the first object distribution information, and determines second distribution based on the second object distribution information. The SF determines the target object based on the first distribution, the second distribution, and the location information of the UE. For example, the SF excludes the UE in the first distribution based on the location information of the UE, excludes the UE in the second distribution based on the location information of the UE, and determines, based on a remaining non-UE in the first distribution and a remaining non-UE in the second distribution, a first object at the first location or close to the first location. In this case, the first object may be the target object. For another example, the SF obtains object distribution in the first area based on the first distribution and the second distribution, then excludes the UE from the objects in the first area based on the location information of the UE, and finally determines, based on remaining non-UEs, a first object at the first location or close to the first location. In this case, the first object may be the target object.

Optionally, if the sensing request #1 includes the information indicating the second moment or the second time range, that the SF determines the object distribution in the first area based on the first object distribution information and/or the second object distribution information includes: The SF determines the object distribution in the first area from the second moment or within the second time range based on the first object distribution information and/or the second object distribution information.

S407. The SF continuously tracks the target object based on the tracking indication, to obtain a tracking result.

Optionally, in S407, the SF sends second indication information to the RAN based on the tracking indication. The second indication information indicates to continuously track the target object. The RAN continuously tracks the target object based on the second indication information.

It may be understood that, in the communication method 400, the UE or the AF sends the sensing request #3. If an intermediate device (for example, the AMF) does not add the location information of the UE in the first area in a forwarding process, the sensing request #3 received by the sensing function may be the sensing request #1. If the intermediate device (for example, the AMF) adds the location information of the UE in the first area in the forwarding process based on the information included in the sensing request #3, information that is sent by the AMF and that includes the information in the sensing request #3 and the location information of the UE in the first area may be referred to as the sensing request #1. In other words, the intermediate device performs only the forwarding process. In this case, the information included in the sensing request #3 is the same as information included in the sensing request #1, and the sensing request #3 may also be referred to as the sensing request #1. If the intermediate device further adds other location information, the sensing request received by the SF may be referred to as the sensing request #1, and the sensing request sent by the UE or the AF may be referred to as the sensing request #3. In addition, when the sensing request #1 is forwarded by different network elements, the sensing request #1 may still be referred to as the sensing request #1.

Optionally, the SF may continuously sense the target object to obtain second sensing data. The SF may continue to receive second location information of the target object. The second location information indicates a second location of the target object. The SF may determine a tracking result based on the second location information and the second sensing data.

Optionally, if S401a is performed, the method further includes: The SF may further continue to request the UE to report a location of the target object, and the UE sends the second location of the target object based on the request. In this case, S407 includes: The SF determines the tracking result of the target object based on the second sensing data and the second location. Optionally, the SF may calibrate the second sensing data based on the second location, to obtain the tracking result of the target object. Alternatively, the UE may actively report the location of the target object, and the SF may not request the location. For example, the UE may periodically report the location of the target object. If S401b is performed, the method further includes: The SF may further continue to request the AF to report a location of the target object, and the AF sends the second location of the target object based on the request. In this case, S407 includes: The SF determines the tracking result of the target object based on the second sensing data and the second location. Optionally, the SF may calibrate the second sensing data based on the second location, to obtain the tracking result. That is, if the AF or the UE may actively or passively report the second location of the target object, the SF calibrates the second sensing data based on the reported second location of the target object, to obtain the tracking result. For example, when the SF continuously tracks the target object, the target object may fail to be tracked sometime. In this case, the reported second location may be used as the location of the target object at the time, so that tracking accuracy can be improved.

S408. The SF sends the tracking result to the AMF. The AMF receives the tracking result from the SF.

If S401a is performed, that is, the sensing request #3 is from the UE, S409a is performed.

S409a. The AMF sends the tracking result to the UE. The UE receives the tracking result from the AMF.

Optionally, S409a includes: The AMF sends a response message of the sensing request #3 to the UE, and the response message includes the tracking result.

If S401b is performed, that is, the sensing request #3 is from the AF, S409b is performed.

S409b. The AMF sends the tracking result to the AF. The AF receives the tracking result from the AMF.

Optionally, S409b includes: The AMF sends a response message of the sensing request #3 to the AF, and the response message includes the tracking result.

If in S401b, the AF sends the sensing request #3 to the AMF via the NEF and/or the GMSC, in S409b, the AMF sends the tracking result to the AF via the NEF and/or the GMSC. If in S401b, the AF sends the sensing request #3 to the NEF, and the NEF sends the sensing request #3 to the AMF, in S409b, the AMF sends the tracking result to the NEF, the NEF receives the tracking result from the AMF, the NEF sends the tracking result to the AF, and the AF receives the tracking result from the NEF. If in S401b, the AF sends the sensing request #3 to the GMSC, and the GMSC sends the sensing request #3 to the AMF, in S409b, the AMF sends the tracking result to the GMSC, and the GMSC sends the tracking result to the AF. If in S401b, the AF sends the sensing request #3 to the NEF, the NEF sends the sensing request #3 to the GMSC, and the GMSC sends the sensing request #3 to the AMF, in S409b, the AMF sends the tracking result to the GMSC, after the GMSC receives the tracking result, the GMSC sends the tracking result to the NEF, and after the NEF receives the tracking result, the NEF sends the tracking result to the AF. That is, a sending manner of the sensing request #3 from the AF in S401b corresponds to a sending manner of the tracking result in S409b.

In the communication method 400, the AMF may obtain the location information of the UE in the first area, and at least one of the tracking indication, the non-UE indication, the first location information, the first object distribution information, or the location information of the UE in the first area that is in the received sensing request #3 is carried in the sensing request #1 and sent to the SF. The SF may determine the first non-UE in the first area as the target object based on the sensing request #1, track the target object, and return the tracking result to the requester. Therefore, the first non-UE can be tracked, and a method for tracking a non-UE is provided.

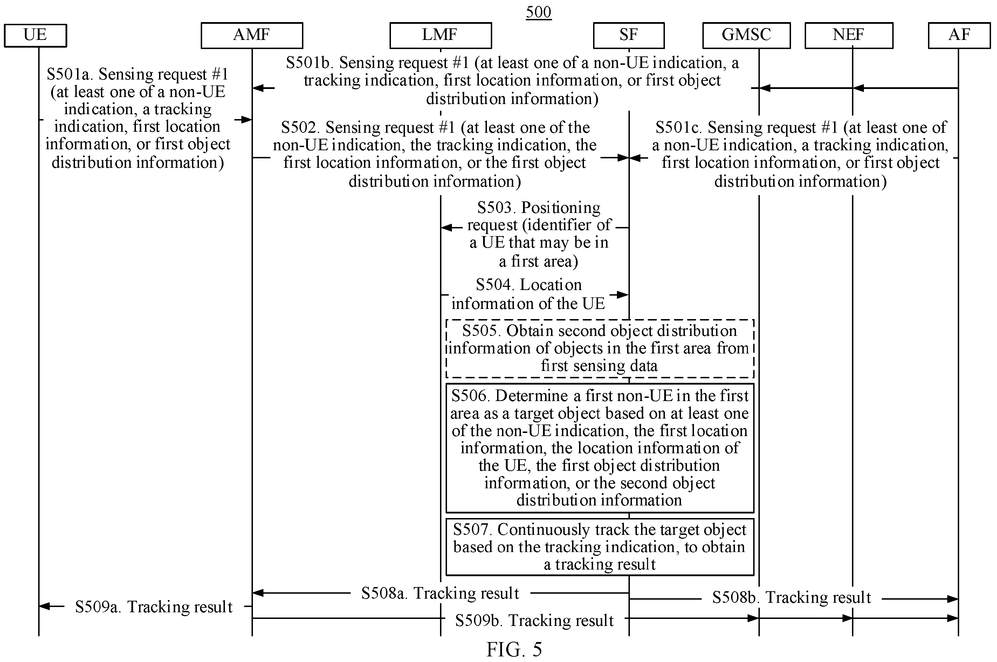

The communication method 500 corresponds to the case 1, the case 2, or the case 3 in S220 and the manner 1 in the two manners in which the sensing function obtains the location information of the UE in the first area in the method 200. As shown in FIG. 5, the communication method 500 includes the following steps.

S501a. The UE sends a sensing request #1 to the AMF. The AMF receives the sensing request #1 from the UE. Optionally, the sensing request #1 includes at least one of a non-UE indication, a tracking indication, first location information, and first object distribution information.

The non-UE indication indicates that the sensing request #1 is specific to a non-UE. The tracking indication indicates continuous tracking. Optionally, S501a may not include the non-UE indication or the tracking indication. A message type of the sensing request #1 may indicate to continuously track a non-UE. A manner of how to indicate to continuously track a non-UE is not limited in this embodiment of this application.

S501b. The AF sends a sensing request #1 to the AMF. The AMF receives the sensing request #1 from the AF.

For descriptions of the sensing request #1, refer to S501a.

Optionally, S501b includes: The AF sends the sensing request #1 to the AMF via the NEF and/or the GMSC. Optionally, that the AF sends the sensing request #1 to the AMF via the NEF includes: The AF sends the sensing request #1 to the NEF. The NEF performs an authorization check on the AF that sends the sensing request #1. If the authorization check performed by the NEF on the AF succeeds, the NEF selects an appropriate AMF, that is, the AMF in FIG. 5, and sends the sensing request #1 to the AMF. The AMF receives the sensing request #1 from the NEF. Optionally, that the AF sends the sensing request #1 to the AMF via the GMSC includes: The AF sends the sensing request #1 to the GMSC. The GMSC performs an authorization check on the AF that sends the sensing request #1. If the authorization check performed by the GMSC on the AF succeeds, the GMSC selects an appropriate AMF, that is, the AMF in FIG. 5, and sends the sensing request #1 to the AMF. The AMF receives the sensing request #1 from the GMSC. Optionally, that the AF sends the sensing request #1 to the AMF via the GMSC and the NEF includes: The AF sends the sensing request #1 to the NEF. The NEF performs an authorization check on the AF that sends the sensing request #1. If the authorization check performed by the NEF on the AF succeeds, the NEF sends the sensing request #1 to the GMSC. The GMSC selects an appropriate AMF, that is, the AMF in FIG. 5, and sends the sensing request #1 to the AMF.

S501c. The AF sends a sensing request #1 to the SF.

For descriptions of the sensing request #1, refer to S501a.

Optionally, S501c includes: The AF sends the sensing request #1 to the SF via the NEF and/or the GMSC. Optionally, that the AF sends the sensing request #1 to the SF via the NEF includes: The AF sends the sensing request #1 to the NEF. The NEF performs an authorization check on the AF that sends the sensing request #1. If the authorization check performed by the NEF on the AF succeeds, the NEF sends the sensing request #1 to the SF. The SF receives the sensing request #1 from the NEF. Optionally, that the AF sends the sensing request #1 to the SF via the GMSC includes: The AF sends the sensing request #1 to the GMSC. The GMSC performs an authorization check on the AF that sends the sensing request #1. If the authorization check performed by the GMSC on the AF succeeds, the GMSC sends the sensing request #1 to the SF. The SF receives the sensing request #1 from the GMSC. Optionally, the AF sends the sensing request #1 to the SF via the NEF and the GMSC. Optionally, that the AF sends the sensing request #1 to the SF via the NEF and the GMSC includes: The AF sends the sensing request #1 to the NEF. The NEF performs an authorization check on the AF, and sends the sensing request #1 to the GMSC after the authorization check succeed. The GMSC selects an appropriate SF, and sends the sensing request #1 to the SF.

When S501a or S501b is performed, S502 may be performed. If neither S501a nor S501b is performed, but S501c is performed, S502 is not included. To be specific, in S502, the AMF sends the sensing request #1 to the SF, but if the AF sends the sensing request #1 to the SF without the AMF, the AMF does not send the sensing request #1.

One of S501a, S501b, and S501c may be performed. To be specific, the sensing request is initiated by the UE to the AMF, or the sensing request is initiated by the AF to the AMF, or the sensing request is initiated by the AF to the SF.

S502. The AMF sends the sensing request #1 to the SF. The SF receives the sensing request #1 from the AMF.

Optionally, the AMF may transparently transmit the sensing request #1 in S502.

One of S502 and S501c is performed. To be specific, S501a, S501b, and S502 are optional steps, or S501c may be an optional step.

S503. The SF sends a positioning request to the LMF. The LMF receives the positioning request from the AMF. The positioning request includes an identifier of a UE that may be in a first area.

Optionally, after receiving the sensing request #1 in S502, the SF may request, from the AMF, the identifier of the UE that may be in the first area, and send, to the AMF, information indicating the first area. The AMF returns, to the SF based on the request, the identifier of the UE that may be in the first area. For a method of determining, by the AMF, the identifier of the UE that may be in the first area, refer to the descriptions of S320.

Optionally, when S501a or S501b is performed, the sensing request #1 in S501a or S501b may be replaced with a sensing request #3. In this case, in S502, after receiving the sensing request #3, the AMF may determine, based on a first location indicated by first location information, the first area in which the first location is located, determine the UE that may be in the first area, and send, to the SF, the identifier of the UE that may be in the first area or an identifier of a UE in the first area. Therefore, the SF may perform S503.

Optionally, the SF may trigger S503 based on the tracking indication and/or the non-UE indication in the sensing request #1. That is, the SF learns, based on the tracking indication and/or the non-UE indication, that a non-UE is to be continuously tracked. In this case, location information of the UE in the first area in which the non-UE is located needs to be determined. Therefore, S503 may be performed.

S504. The LMF sends the location information of the UE to the SF. The SF receives the location information of the UE from the LMF.

Optionally, before S504, the LMF positions the UE identified by the identifier of the UE in the positioning request, to obtain the location information of the UE.

S505 to S507 are respectively the same as S405 to S407.

If S501a or S501b is performed, that is, the sensing request #1 is from the AMF, S508a is performed.

S508a. The SF sends the tracking result to the AMF. The AMF receives the tracking result from the SF.

If S501c is performed, that is, the sensing request #1 is from the AF, S508b is performed.

S508b. The SF sends the tracking result to the AF. The AF receives the tracking result from the SF.

If S508a is performed, S509a may be performed.

Optionally, if in S501c, the AF sends the sensing request #1 to the SF via the NEF, in S508b, the SF sends the tracking result to the AF via the NEF. Optionally, if in S501c, the AF sends the sensing request #1 to the SF via the GMSC, in S508b, the SF sends the tracking result to the AF via the GMSC.

S509a. The AMF sends the tracking result to the UE. The UE receives the tracking result from the AMF.

Optionally, S509a includes: The AMF sends a response message of the sensing request #1 to the UE, and the response message includes the tracking result.

If S501b is performed, that is, the sensing request #1 is from the AF, S509b is performed.

S509b. The AMF sends the tracking result to the AF. The AF receives the tracking result from the AMF.

Optionally, S509b includes: The AMF sends a response message of the sensing request #1 to the AF, and the response message includes the tracking result.

If in S501b, the AF sends the sensing request #1 to the AMF via the NEF and/or the GMSC, in S509b, the AMF sends the tracking result to the AF via the NEF and/or the GMSC. If in S501b, the AF sends the sensing request #1 to the NEF, and the NEF sends the sensing request #1 to the AMF, in S509b, the AMF sends the tracking result to the NEF, the NEF receives the tracking result from the AMF, the NEF sends the tracking result to the AF, and the AF receives the tracking result from the NEF. If in S501b, the AF sends the sensing request #1 to the GMSC, and the GMSC sends the sensing request #1 to the AMF, in S509b, the AMF sends the tracking result to the GMSC, and the GMSC sends the tracking result to the AF. If in S501b, the AF sends the sensing request #1 to the NEF, the NEF sends the sensing request #1 to the GMSC, and the GMSC sends the sensing request #1 to the AMF, in S509b, the AMF sends the tracking result to the GMSC, after the GMSC receives the tracking result, the GMSC sends the tracking result to the NEF, and after the NEF receives the tracking result, the NEF sends the tracking result to the AF. That is, a sending manner of the sensing request #1 from the AF in S501b corresponds to a sending manner of the tracking result in S509b. If in S501c, the AF directly sends the sensing request #1 to the SF, in S508b, the SF may directly send the tracking result to the AF. If in S501c, the AF sends the sensing request #1 to the SF via the NEF and/or the GMSC, S508b includes: The SF sends the tracking result to the AF via the NEF and/or the GMSC. If in S501c, the AF sends the sensing request #1 to the NEF, the NEF sends the sensing request #1 to the GMSC, and the GMSC selects an appropriate SF and sends the sensing request #1 to the SF, S508b includes: The SF sends the tracking result to the GMSC, the GMSC sends the tracking result to the NEF, and the NEF sends the tracking result to the AF. If in S501c, the AF sends the sensing request #1 to the NEF, and the NEF sends the sensing request #1 to the SF, S508b includes: The SF sends the tracking result to the NEF, and the NEF sends the tracking result to the AF. If in S501c, the AF sends the sensing request #1 to the GMSC, and the GMSC sends the sensing request #1 to the SF, in S508b, the SF sends the tracking result to the GMSC, and the GMSC sends the tracking result to the AF. That is, a sending manner of the sensing request #1 from the AF in S501c corresponds to a sending manner of the tracking result in S508b.

In the communication method 500, the SF may obtain the location information of the UE in the first area, and the SF may determine the first non-UE in the first area as the target object based on the sensing request #1, track the target object, and return the tracking result to the requester. Therefore, the first non-UE can be tracked, and a method for tracking a non-UE is provided.

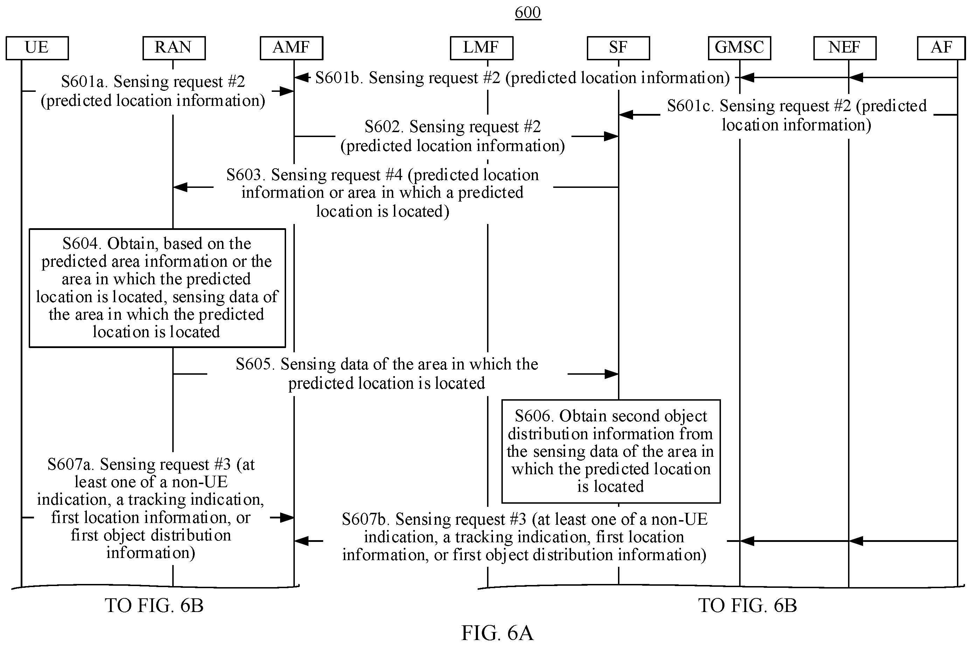

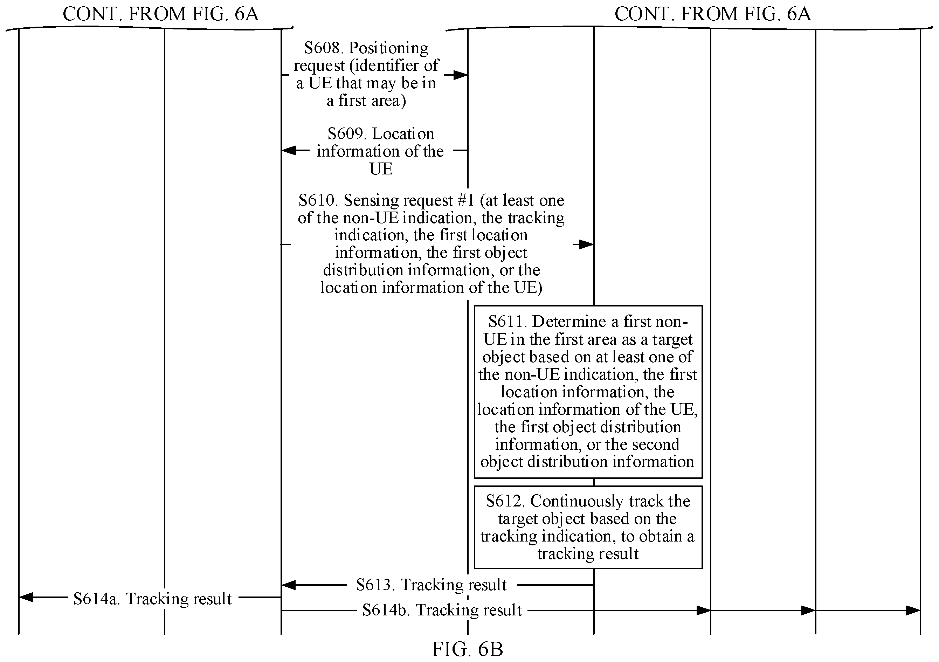

As shown in FIG. 6A and FIG. 6B, the communication method 600 includes the following steps.

S601a. The UE sends a sensing request #2 to the AMF. The AMF receives the sensing request #2 from the UE. The sensing request #2 includes predicted location information.

The predicted location information indicates a predicted location of a target object.

Optionally, the sensing request #2 may further include a non-UE indication and/or a tracking indication. The non-UE indication indicates that the sensing request #2 is specific to a non-UE. The tracking indication indicates continuous tracking.

Optionally, the sensing request #2 further includes information indicating a first moment or a first time range. The first moment or the first time range corresponds to the predicted location or an area in which the predicted location is located. The SF needs to obtain sensing data of the area in which the predicted location is located from the first moment or sensing data of the area in which the predicted location is located within the first time range. Optionally, the first time range may be a time period, and the first time range corresponds to a start moment and an end moment.

S601b. The AF sends a sensing request #2 to the AMF. The AMF receives the sensing request #2 from the AF. The sensing request #2 includes predicted location information.

For descriptions of the sensing request #2, refer to S601a.

Optionally, S601b includes: The AF sends the sensing request #2 to the AMF via the NEF and/or the GMSC. Optionally, that the AF sends the sensing request #2 to the AMF via the NEF includes: The AF sends the sensing request #2 to the NEF. The NEF performs an authorization check on the AF that sends the sensing request #2. If the authorization check performed by the NEF on the AF succeeds, the NEF selects an appropriate AMF, that is, the AMF in FIG. 6A and FIG. 6B, and sends the sensing request #2 to the AMF. The AMF receives the sensing request #2 from the NEF. Optionally, that the AF sends the sensing request #2 to the AMF via the GMSC includes: The AF sends the sensing request #2 to the GMSC. The GMSC performs an authorization check on the AF that sends the sensing request #2. If the authorization check performed by the GMSC on the AF succeeds, the GMSC selects an appropriate AMF, that is, the AMF in FIG. 6A and FIG. 6B, and sends the sensing request #2 to the AMF. The AMF receives the sensing request #2 from the GMSC. Optionally, that the AF sends the sensing request #2 to the AMF via the GMSC and the NEF includes: The AF sends the sensing request #2 to the NEF. The NEF performs an authorization check on the AF that sends the sensing request #2. If the authorization check performed by the NEF on the AF succeeds, the NEF sends the sensing request #2 to the GMSC. The GMSC selects an appropriate AMF, that is, the AMF in FIG. 6A and FIG. 6B, and sends the sensing request #2 to the AMF.

S601c. The AF sends a sensing request #2 to the SF. The SF receives the sensing request #2 from the AF. The sensing request #2 includes predicted location information.

For descriptions of the sensing request #2, refer to S601a.

Optionally, S601c includes: The AF sends the sensing request #2 to the SF via the NEF and/or the GMSC. Optionally, that the AF sends the sensing request #2 to the SF via the NEF includes: The AF sends the sensing request #2 to the NEF. The NEF performs an authorization check on the AF that sends the sensing request #2. If the authorization check performed by the NEF on the AF succeeds, the NEF sends the sensing request #2 to the SF. The SF receives the sensing request #2 from the NEF. Optionally, that the AF sends the sensing request #2 to the SF via the GMSC includes: The AF sends the sensing request #2 to the GMSC. The GMSC performs an authorization check on the AF that sends the sensing request #2. If the authorization check performed by the GMSC on the AF succeeds, the GMSC sends the sensing request #2 to the SF. The SF receives the sensing request #2 from the GMSC. Optionally, the AF sends the sensing request #2 to the SF via the NEF and the GMSC. Optionally, that the AF sends the sensing request #2 to the SF via the NEF and the GMSC includes: The AF sends the sensing request #2 to the NEF. The NEF performs an authorization check on the AF, and sends the sensing request #2 to the GMSC after the authorization check succeed. The GMSC selects an appropriate SF, and sends the sensing request #2 to the SF.

One of S601a, S601b, or S601c may be performed. To be specific, the sensing request may be initiated by the UE to the AMF, or the sensing request is initiated by the AF to the AMF, or the sensing request is initiated by the AF to the SF.

When S601a or S601b is performed, S602 may be performed. If neither S601a nor S601b is performed, but S601c is performed, S602 is not included. To be specific, in S602, the AMF sends the sensing request #4 to the SF, but if the AF directly sends the sensing request #4 to the SF, the AMF may not send the sensing request #4.

One of S601a, S601b, and S601c may be performed. To be specific, the sensing request is initiated by the UE to the AMF, or the sensing request is initiated by the AF to the AMF, or the sensing request is directly initiated by the AF to the SF.

S602. The AMF sends the sensing request #2 to the SF. The SF receives the sensing request #2 from the AMF. The sensing request #2 includes the predicted location information.

The AMF receives the sensing request #2 in S601a or S601b, and S602 may be triggered.

Optionally, if the sensing request #2 in S601a or S601b includes the tracking indication and/or the non-UE indication, the SF determines, based on the tracking indication and/or the non-UE indication, that a non-UE needs to be continuously tracked. Therefore, the SF may be triggered to send a sensing request #4 to the RAN based on the sensing request #2 in S603.

Optionally, alternatively, a message type of the sensing request #2 may indicate that a non-UE needs to be continuously tracked, so that the SF may be triggered to perform S603.

S603. The SF sends the sensing request #4 to the RAN. The RAN receives the sensing request #4 from the SF. The sensing request #4 includes the predicted location information or the area in which the predicted location is located.

Optionally, the SF may obtain, based on the predicted location information, the area in which the predicted location is located, and the sensing request #4 sent to the RAN may include the area in which the predicted location is located.

Optionally, S602 or S601c may trigger S603.

Optionally, if the sensing request #2 includes the information indicating the first moment or the first time range, the SF may determine a third moment or a third time range based on the first moment or the first time range. Optionally, the sensing request #4 in S603 may include information indicating the third moment or the third time range.

Optionally, if the sensing request #2 includes the information indicating the first moment or the first time range, the sensing request #4 in S603 may also include the information indicating the first moment or the first time range. The RAN may perform sensing to obtain sensing data of the area in which the predicted location is located from the first moment, or sensing data of the area in which the predicted location is located within the first time range. Alternatively, the RAN may determine the third moment or the third time range based on the first moment or the first time range, and the RAN may perform sensing to obtain sensing data of the area in which the predicted location is located from the third moment, or sensing data of the area in which the predicted location is located within the third time range.

S604. The RAN obtains, based on the predicted location information or the area in which the predicted location is located, sensing data of the area in which the predicted location is located.

Optionally, if the sensing request #4 in S603 includes the obtained area in which the predicted location is located, in S604, the RAN obtains the sensing data of the area in which the predicted location is located.

Optionally, if the sensing request #4 in S603 includes the predicted location information but does not include the area in which the predicted location is located, in S604, the RAN may determine, based on the predicted location information, the area in which the predicted location is located, and obtain the sensing data of the area in which the predicted location is located.

Optionally, the sensing request #4 includes the information indicating the third moment or the third time range, or the sensing request #4 includes the information indicating the first moment or the first time range, and the RAN determines the third moment or the third time range based on the first moment or the first time range. Then in S604, the RAN may obtain the sensing data of the area in which the predicted location is located from the third moment or within the third time range. That is, the RAN may obtain, based on the predicted location information, the sensing data in the area in which the predicted location is located. The sensing data of the area in which the predicted location is located may include distribution of objects in the area in which the predicted location is located. Optionally, the sensing data of the area in which the predicted location is located may further include other data. This is not limited in this embodiment of this application. For example, the third moment is 10:05, and the RAN may perform sensing from 10:05 to obtain sensing data of the area in which the predicted location is located. For example, if the third time range is 9:55 to 10:05, the RAN may obtain sensing data of the area in which the predicted location is located within 9:55 to 10:05.

S605. The RAN sends, to the SF, the sensing data of the area in which the predicted location is located. The SF receives, from the RAN, the sensing data of the area in which the predicted location is located.

Optionally, in S605, the RAN may send a response message of the sensing request #4 to the SF, and the response message includes the sensing data of the area in which the predicted location is located. Alternatively, the sensing data of the area in which the predicted location is located may be sent to the SF in another manner, for example, through a data plane transmission channel established between the RAN and the SF.

S606. The SF obtains second object distribution information from the sensing data of the area in which the predicted location is located.

The second object distribution information in S606 may be the object distribution information in the case 2 in S230 or the second object distribution information in the case 3 in S230.

The sensing data of the area in which the predicted location is located may also be referred to as first sensing data, or the first sensing data may include the sensing data of the area in which the predicted location is located. The SF may include the distribution of the objects in the area in which the predicted location is located into the sensing data of the area in which the predicted location is located. Therefore, the SF may obtain, based on the distribution of the objects in the area in which the predicted location is located, the second object distribution information of the area in which the predicted location is located.

Optionally, if the sensing request #4 includes the information indicating the third moment or the third time range, in S605, the SF may obtain the sensing data of the area in which the predicted location is located from the third moment or the sensing data of the area in which the predicted location is located within the third time range. The sensing data of the area in which the predicted location is located from the third moment or the sensing data of the area in which the predicted location is located within the third time range may be the first sensing data. The SF obtains the second object distribution information from the first sensing data.

If S601a is performed, S607a may be performed.

S607a. The UE sends a sensing request #3 to the AMF. The AMF receives the sensing request #3 from the UE. Optionally, the sensing request #3 includes at least one of a non-UE indication, a tracking indication, first location information, or first object distribution information.

That is, in S604, the RAN obtains, through sensing, the sensing data of the area in which the predicted location is located from the third time range or within the third moment. In S605, the RAN may send, to the SF, the sensing data of the area in which the predicted location is located from the third time range or within the third moment. After receiving the sensing request #3 message in S607a, the SF obtains, from the sensing data of the area in which the predicted location is located from the third time range or within the third moment in S605, sensing data of an area in which a first location is located from a second moment or within a second time range, and obtains the second object distribution information from the sensing data of the area in which the first location is located from the second moment or within the second time range. The second object distribution information may be object distribution information of the area in which the first location is located from the second moment or within the second time range.

Optionally, the sensing data of the area in which the predicted location is located from the third moment or the sensing data of the area in which the predicted location is located within the third time range includes sensing data of the area in which the predicted location is located from the second moment or sensing data of the area in which the predicted location is located within the second time range, or includes the sensing data of the first area in which the first location is located from the second moment or the sensing data of the first area in which the first location is located within the second time range. The area in which the predicted location is located covers the first location, or the area in which the predicted location is located covers the first area in which the first location is located.

Optionally, after S607a, the SF may obtain, from the sensing data of the first area in which the first location is located from the second moment or the sensing data of the first area in which the first location is located within the second time range, the second object distribution information of the area in which the first location is located.

Optionally, if the sensing request #2 in S601a includes a tracking indication and a non-UE indication, the sensing request #3 in S607a may not include a tracking indication or a non-UE indication. Alternatively, the sensing request #2 in S601a does not include a tracking indication or a non-UE indication, and the sensing request #3 in S607a includes a tracking indication and a non-UE indication. Alternatively, both the sensing request #2 in S601a and the sensing request #3 in S607a may include a tracking indication and a non-UE indication. Alternatively, the sensing request #2 in S601a includes a tracking indication, and the sensing request #3 in S607a includes a non-UE indication. Alternatively, the sensing request #2 in S601a includes a non-UE indication, and the sensing request #3 in S607a includes a tracking indication. This is not limited in this embodiment of this application.

Optionally, the sensing request #3 in S607a may not include the first object distribution information. In this case, the method 600 corresponds to the case 2 in S230. If the sensing request #3 in S607a includes the first object distribution information, the method 600 corresponds to the case 3 in S230. S601a to S606 or S601b to S606 are a process in which the SF obtains the second object distribution information. Alternatively, S601a to S606 or S601b to S606 may not be performed. In this case, the method 600 corresponds to the case 1 of S230.

S607b. The AF sends a sensing request #3 to the AMF. The AMF receives the sensing request #3 from the AF.

For descriptions of the sensing request #3, refer to the descriptions of S607a.

One of S607a and S607b may be performed. To be specific, the sensing request is initiated by the UE, or the sensing request is initiated by the AF.

It may be understood that, for ease of description, in S607a or S607b, the sensing request #3 includes at least one of the non-UE indication, the tracking indication, the first location information, or the first object distribution information. In some cases, the information may be included in different messages, or may be included in a same message. This is not limited in this embodiment of this application.

For example, the first time range is 10:00 to 10:05, the third time range is 9:55 to 10:10, and the second time range may be 9:59 to 10:05 or 9:59 to 10:00. That is, in the process of S601a or S601b to S606, sensing data in the area in which the predicted location is located within 9:55 to 10:10 is predicted, but the SF determines the target object by using sensing data of objects in the first area in which the first location is located within 9:59 to 10:05 or 9:59 to 10:00, and the SF obtains the second object distribution information of the objects based on the sensing data of the objects in the first area in which the first location is located within 9:59 to 10:05 or 9:59 to 10:00.

S608 to S610 are respectively the same as S402 to S404.

S611 to S613 are respectively the same as S406 to S408.

S614a is the same as S409a.

S614b is the same as S409b.

One step of S614a or S614b is performed.

In the method 600, the SF may obtain the second object distribution information of the area in which the first location is located, the AMF may obtain the location information of the UE in the first area from the LMF, and the SF may determine the first non-UE in the first area as the target object based on at least one of the non-UE indication, the first location information, the first object distribution information, or the second object distribution information, and continuously track the target object. Therefore, a method for tracking a non-UE is provided.

In the method 600, the SF obtains the second object distribution information of the area in which the first location is located. The second object distribution information indicates the distribution of the objects in the area in which the first location is located. In some scenarios, the method 600 may be replaced with the following alternative solution: After S601a or S601b, the AMF may obtain location information of a UE in the area in which the predicted location is located, which is similar to obtaining the location information of the UE in the first area. After obtaining the location information of the UE in the area in which the predicted location is located, the AMF may send, to the SF in S602 or another step earlier than S611, the location information of the UE in the area in which the predicted location is located, and the SF determines, based on the distribution of the objects in the area in which the predicted location is located and the location information of the UE in the area in which the predicted location is located, a non-UE in the area in which the predicted location is located. That is, in the current method 600, the second object distribution information in the area in which the predicted location is located is determined, while in the alternative solution, the SF may exclude, based on the object distribution information in the area in which the predicted location is located and the location information of the UE in the area in which the predicted location is located, the UE in the area in which the predicted location is located, and determine the non-UE in the area in which the predicted location is located, and then in S611, the SF may determine the first non-UE at the first location as the target object based on the non-UE indication, the first location information, the first distribution information, and the non-UE in the area in which the predicted location is located.

It should be noted that in the method 400 to the method 600, when the SF determines the target object, if the first object distribution information exists but the second object distribution information does not exist, the SF may determine the target object based on the first object distribution information. That is, steps related to the second object distribution information are optional steps. When the second object distribution information exists but the first object distribution information does not exist, the SF may determine the target object based on the second object distribution information. That is, steps related to the first object distribution information are optional steps. When the first object distribution information and the second object distribution information exist, the SF may determine the target object based on the first object distribution information and the second object distribution information.

It should be noted that, in embodiments of this application, the UE and the non-UE in the first area or the area in which the predicted location is located are relative concepts. The UE in the first area or the area in which the predicted location is located may be understood as a device that has a communication capability or can establish a network connection to the access and mobility management function in embodiments of this application, and the non-UE is a device that does not have a communication capability or cannot establish a network connection to the access and mobility management function in embodiments of this application.

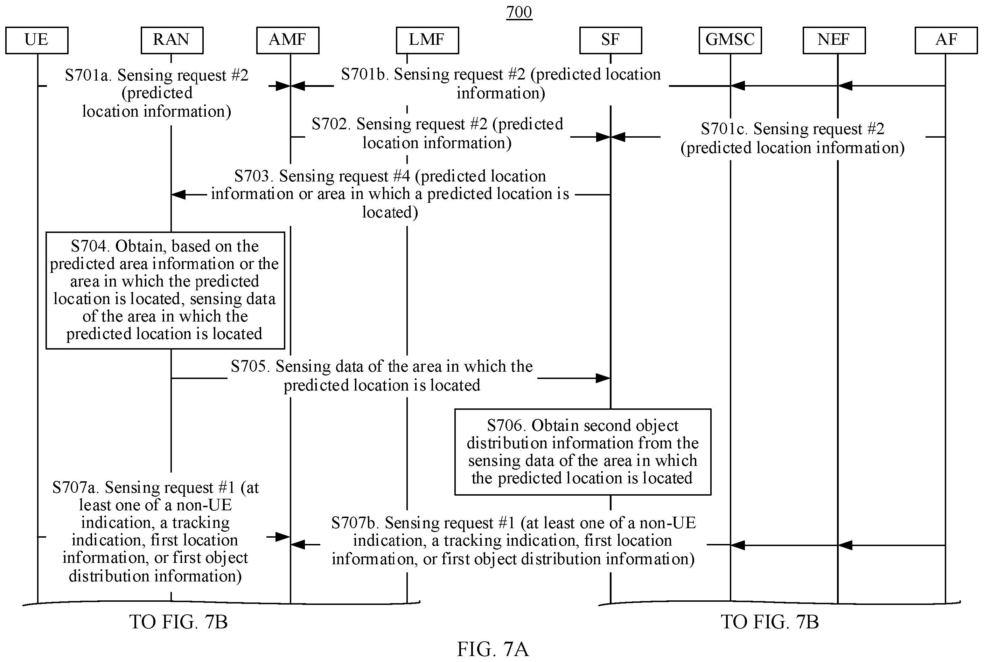

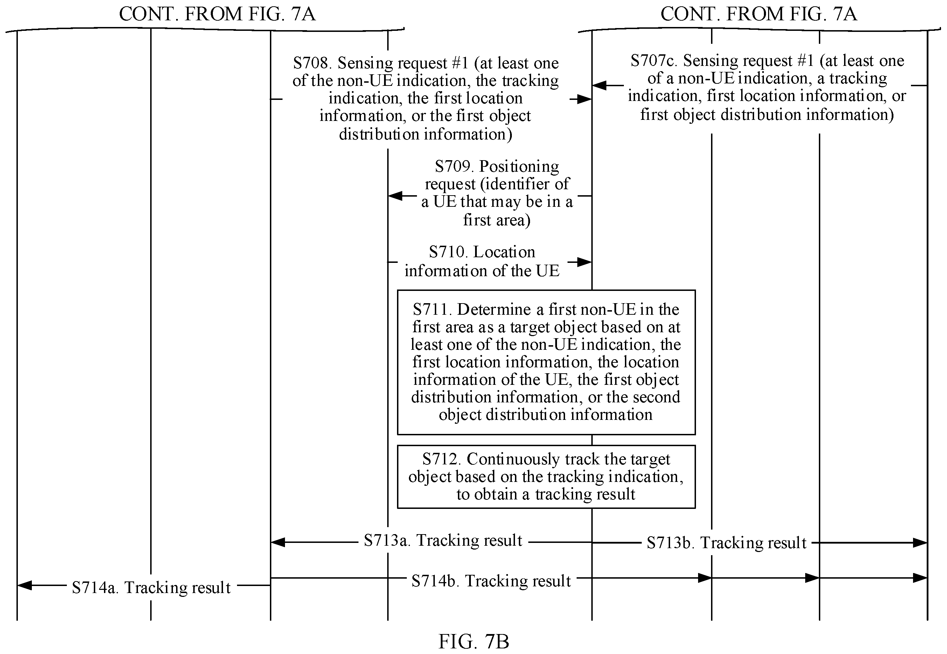

As shown in FIG. 7A and FIG. 7B, the method 700 includes the following steps.

S701a is the same as S601a.

S701b is the same as S601b.

S701c is the same as S601c.

S702 to S706 are respectively the same as S602 to S606.

S707a is the same as S501a.

S707b is the same as S501b.

S707c is the same as S501c.

S708 to S710 are respectively the same as S502 to S504.

S711 and S712 are respectively the same as S506 and S507.

S713a is the same as S508a.

S713b is the same as S508b.

S714a is the same as S509a.

S714b is the same as S509b.

In the method 700, the SF may obtain the second object distribution information in the sensing data of the area in which the predicted location is located, the SF may obtain the location information of the UE in the first area from the LMF, and the SF may determine the first non-UE in the first area as the target object based on the non-UE indication, the first location information, the location information of the UE, and the first object distribution information and/or the second object distribution information, and continuously track the first non-UE based on the tracking indication. Therefore, a method for tracking a non-UE is provided.

In the method 700, the SF obtains the second object distribution information of the area in which the predicted location is located. The second object distribution information indicates the distribution of the objects in the area in which the predicted location is located. In some scenarios, the method 700 may be replaced with the following alternative solution: After S702, the SF may obtain location information of a UE in the area in which the predicted location indicated by the predicted location information is located, which is similar to obtaining the location information of the UE in the first area. After the SF obtains the location information of the UE in the area in which the predicted location is located, the SF determines, based on the distribution of the objects in the area in which the predicted location is located and the location information of the UE in the area in which the predicted location is located, a non-UE in the area in which the predicted location is located. That is, in the current method 700, the second object distribution information of the area in which the first location is located is determined, while in the alternative solution, the SF may exclude, based on the object distribution information in the area in which the predicted location is located and the location information of the UE in the area in which the predicted location is located, the UE in the area in which the predicted location is located, and determine the non-UE in the area in which the predicted location is located, and then in S711, the SF may determine the first non-UE in the first area as the target object based on the area information, the location information, the first object distribution information, and the non-UE in the area in which the predicted location is located.

Optionally, the sensing request #1, the sensing request #3, or the like in the foregoing embodiments may include sensing service description information. The sensing service description information is used to describe a service requirement or the like. For example, the sensing service description information may include at least one of a service type, sensing accuracy, resolution, latency, a missed detection probability, a false alarm probability, or a refreshing rate. The service type may be a tracking service type, and may indicate to continuously track the target object. If the sensing service description information includes the tracking service type, and the sensing request #1 or the sensing request #3 includes the tracking indication, the access and mobility management function or the sensing function determines, based on the tracking service type and/or the tracking indication, that the target object needs to be continuously tracked.

A same noun in the following method embodiments and the foregoing method embodiments may represent different meanings. For example, the sensing request #1 in the foregoing method embodiments and the sensing request #1 in the following method embodiments represent different meanings, the sensing request #2 in the foregoing method embodiments and the sensing request #2 in the following method embodiments represent different meanings, and first information in the foregoing method embodiments and first information in the following method embodiments represent different meanings.

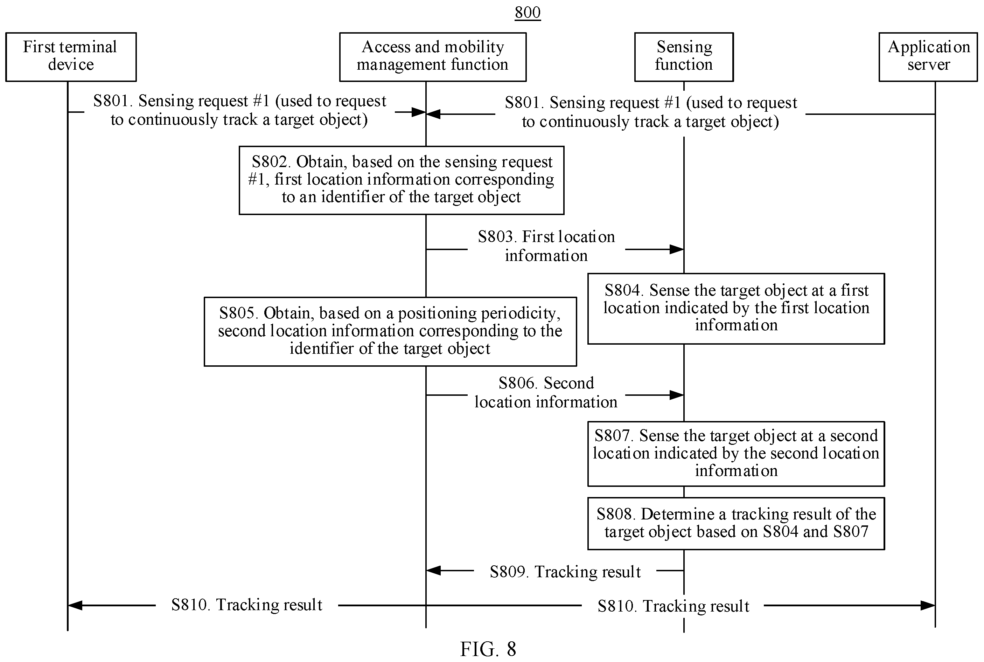

In the descriptions of the foregoing method embodiments, the target object may not have a communication capability. In some scenarios, an object having a communication capability may also be tracked. The object having the communication capability may be positioned, to obtain location information of the object having the communication capability. In this way, an object at a location indicated by location information can be tracked. This is described below with reference to a method 800. As shown in FIG. 8, the method 800 includes the following steps.

S801. A terminal or an application server sends a sensing request #1 to an access and mobility management function. The access and mobility management function receives the sensing request #1 from the terminal or the application server. The sensing request #1 is used to request to continuously track a target object.

Optionally, the sensing request #1 may include sensing service description information.

Optionally, the sensing request #1 may include an identifier of the target object.

Optionally, the sensing request #1 may not include the identifier of the target object. For example, the terminal sends the sensing request #1 to the access and mobility management function, and the target object may be the terminal. Because the terminal has established a connection to the access and mobility management function, the access and mobility management function can learn of the identifier of the target object. Therefore, when the terminal sends the sensing request #1, it indicates that the terminal is to be sensed.

The sensing request #1 is a request for sensing the target object.

Alternatively, the sensing request #1 includes first information, and the first information includes the identifier of the target object. In this case, the first information may be introduced.

Optionally, the sensing service description information is used to describe a service requirement or the like. For example, the sensing service description information may include at least one of a service type, sensing accuracy, resolution, latency, a missed detection probability, a false alarm probability, or a refreshing rate. The service type may be a tracking service type, and may indicate to continuously track the target object.

Optionally, the sensing request #1 includes a tracking indication, and the tracking indication indicates to continuously track the target object.

Optionally, that the application server sends the sensing request #1 to the access and mobility management function includes: The application server sends the sensing request #1 via a capability exposure function and a gateway mobile sensing center. Specifically, the application server sends the sensing request #1 to the capability exposure function. The capability exposure function performs an authorization check on the application server. If the authorization check performed by the capability exposure function on the application server succeeds, the capability exposure function sends the sensing request #1 to the gateway mobile sensing center. The gateway mobile sensing center selects an appropriate access and mobility management function, and sends the sensing request #1 to the access and mobility management function. Optionally, that the application server sends the sensing request #1 to the access and mobility management function includes: The application server sends the sensing request #1 via the capability exposure function. Specifically, the application server sends the sensing request #1 to the capability exposure function. The capability exposure function performs an authorization check on the application server, and selects an appropriate access and mobility management function. If the authorization check on the application server succeeds, the capability exposure function sends the sensing request #1 to the access and mobility management function. Optionally, that the application server sends the sensing request #1 to the access and mobility management function includes: The application server sends the sensing request #1 via the gateway mobile sensing center. Specifically, the application server sends the sensing request #1 to the gateway mobile sensing center. The gateway mobile sensing center performs an authorization check on the application server, and selects an appropriate access and mobility management function. If the authorization check on the application server succeeds, the gateway mobile sensing center sends the sensing request #1 to the access and mobility management function.

Optionally, in S801, the application server may send the sensing request #1 to a sensing function via the capability exposure function. Optionally, that the application server may send the sensing request #1 to the sensing function via the capability exposure function includes: The capability exposure function performs an authorization check on the application server. After the authorization check succeeds, the capability exposure function selects an appropriate sensing function, and sends the sensing request #1 to the sensing function.

Optionally, in S801, the application server may send the sensing request #1 via the capability exposure network element and the gateway mobile sensing center. Optionally, that the application server may send the sensing request #1 via the capability exposure network element and the gateway mobile sensing center includes: The application server may send the sensing request #1 to the capability exposure function. The capability exposure function performs an authorization check on the application server. After the authorization check succeeds, the capability exposure function sends the sensing request #1 to the gateway mobile sensing center. The gateway mobile sensing center selects an appropriate sensing function, and sends the sensing request #1 to the sensing function.

Optionally, in S801, the application server may send the sensing request #1 via the gateway mobile sensing center. Optionally, that the application server sends the sensing request #1 via the gateway mobile sensing center includes: The application server sends the sensing request #1 to the gateway mobile sensing center. The gateway mobile sensing center performs an authorization check on the application server, and selects an appropriate sensing function. After the authorization check succeeds, the gateway mobile sensing center sends the sensing request #1 to the sensing function.

S802. The access and mobility management function obtains, based on the sensing request #1, first location information corresponding to the identifier of the target object.

Optionally, the access and mobility management function determines a positioning periodicity based on the sensing service description information, and S802 includes: The access and mobility management function obtains, based on the positioning periodicity and the sensing request #1, the first location information corresponding to the identifier of the target object.

Optionally, the first location information corresponding to the identifier of the target object may be first location information of an object identified by the identifier of the target object.

Optionally, if the sensing service description information may include at least one of the service type, the sensing accuracy, the resolution, the latency, the missed detection probability, the false alarm probability, or the refreshing rate, that the access and mobility management function determines the positioning periodicity based on the sensing service description information includes: The access and mobility management function determines the positioning periodicity based on the sensing accuracy, the resolution, the latency, the missed detection probability, the false alarm probability, or the refreshing rate. For example, if the sensing service description information includes the refreshing rate, it may be determined that the positioning periodicity is equal to the refreshing rate or is less than the refreshing rate (when the refreshing rate is represented by a time periodicity).

Optionally, that the access and mobility management function obtains the first location information corresponding to the identifier of the target object includes: The access and mobility management function sends a first positioning request to a location management function. The first positioning request includes the identifier of the target object. After receiving the first positioning request, the location management function may position the target object identified by the identifier of the target object, to obtain the first location information of the target object, and send the first location information of the target object to the access and mobility management function.

Optionally, if the sensing request #1 includes the sensing service description information and/or the tracking indication, and the sensing service description information includes the tracking service type, the access and mobility management function determines the positioning periodicity based on the sensing service description information and the tracking indication. To be specific, the access and mobility management function determines, based on the tracking service type and/or the tracking indication, that the target object needs to be continuously tracked, and therefore, the access and mobility management function learns that the target object needs to be positioned a plurality of times, and may determine the positioning periodicity based on the sensing service description information. In other words, the tracking indication and/or the tracking service type may trigger the access and mobility management function to determine the positioning periodicity based on the sensing service description information.

S803. The access and mobility management function sends the first location information to the sensing function. The sensing function receives the first location information from the access and mobility management function.

Optionally, S803 includes: The access and mobility management function sends a sensing request #2 to the sensing function. The sensing function receives the sensing request #2 from the access and mobility management function. The sensing request #2 includes the first location information.

Alternatively, the sensing request #2 may include second information, and the second information may include the first location information. In this case, the second information may be introduced in S803.

Optionally, if the sensing request #1 includes the tracking indication, the sensing request #2 may also include the tracking indication. The tracking indication indicates to continuously track the target object.

Optionally, when the sensing request #1 includes the sensing service description information, the sensing request #2 may also include the sensing service description information.

Optionally, if the access and mobility management function determines the positioning periodicity, periodically obtained first location information may be sent to the sensing function in S803. That is, the first location information may be location information in a periodicity.

S804. The sensing function senses the target object at a first location indicated by the first location information.

Optionally, if the sensing request #2 includes the tracking indication, S804 includes: The sensing function senses, based on the tracking indication, the target object at the first location indicated by the first location information.

Optionally, when the sensing request #2 includes the sensing service description information, the method 800 further includes: The sensing function determines the sensing periodicity based on the sensing service description information. The sensing periodicity may also be referred to as a tracking periodicity. S804 includes: The sensing function indicates, based on the sensing periodicity, a sensing execution device to track the target object at the first location indicated by the first location information.

Optionally, if the access and mobility management function determines the positioning periodicity, S805 may be performed.

S805. The access and mobility management function obtains, based on the positioning periodicity, second location information corresponding to the identifier of the target object.

Optionally, the second location information may indicate a second location of the target object.

Optionally, after S802, the access and mobility management function may send the positioning periodicity to the location management function. For example, the first positioning request may include the positioning periodicity. The location management function may periodically send location information of the target object to the access and mobility management function based on the positioning periodicity. For example, after the location management function obtains the first location information in S803, the location management function may continue to send the second location information to the access and mobility management function in a next periodicity. Therefore, in S805, the access and mobility management function may obtain the second location information.

Optionally, S805 includes: The access and mobility management function periodically requests the location information of the target object from the location management function based on the positioning periodicity, and the location management function sends the second location information of the target object to the access and mobility management function based on the request of the access and mobility management function. That is, the access and mobility management function may not send the positioning periodicity to the location management function. For example, after receiving the first location information, the access and mobility management function may continue to send the first positioning request to the location management function. The first positioning request may include the identifier of the target object. Then, the access and mobility management function receives the second location information of the target object from the location management function.

S806. The access and mobility management function sends the second location information to the sensing function. The sensing function receives the second location information from the access and mobility management function.

The second location information is updated first location information. That is, the first location information and the second location information are location information of the target object in two different periodicities that is obtained by the access and mobility management function based on the positioning periodicity.

Optionally, if the access and mobility management function determines the positioning periodicity, periodically obtained second location information may be sent to the sensing function in S806. That is, the second location information may be location information in a periodicity.

Optionally, S806 includes: The access and mobility management function sends a sensing request #3 to the sensing function. The sensing function receives the sensing request #3 from the access and mobility management function. The sensing request #3 includes the second location information.

Optionally, the method further includes: S807. The sensing function senses the target object at the second location indicated by the second location information.

Optionally, if the sensing request #2 includes the tracking indication, S806 includes: The sensing function senses, based on the tracking indication, the target object at the second location indicated by the updated first location information.

Optionally, when the sensing function determines the sensing periodicity based on the sensing service description information, S808 includes: The sensing function senses, based on the sensing periodicity, the target object at the second location indicated by the second location information.

S808. The sensing function determines a tracking result of the target object based on S804 and S807.

Optionally, the sensing function may obtain the tracking result based on the sensing performed in S804 by the sensing function on the target object at the first location indicated by the first location information, and the sensing performed by the sensing function on the target object at the second location indicated by the second location information.

Optionally, S808 includes: The sensing function obtains an initial tracking result based on the sensing performed in S804 by the sensing function on the target object at the first location indicated by the first location information, and calibrates the initial tracking result by using the second location indicated by the second location information, to obtain a final tracking result. In this case, the tracking result in S808 is the final tracking result.

Optionally, a process similar to S805 to S807 may continue to be repeatedly performed, so that the target object may be sensed a plurality of times, and a tracking result may be obtained.

Optionally, the sensing function may sense the target object based on the first location information in S804. In this case, steps related to the second location information may not be performed. That is, S805, S806, and S807 are optional steps.

S809. The sensing function sends the tracking result to the access and mobility management function. The access and mobility management function receives the tracking result from the sensing function.

S810. The access and mobility management function sends the tracking result to the terminal or the application server. The terminal or the application server receives the tracking result from the access and mobility management function.

Optionally, if in S801, the application server sends the sensing request #1 to the access and mobility management function via the capability exposure function and/or the gateway mobile sensing center, in S810, the access and mobility management function sends the tracking result to the application server via the capability exposure function and/or the gateway mobile sensing center. If the sensing request #1 in S801 is sent by the application server to the capability exposure function, the capability exposure function sends the sensing request #1 to the gateway mobile sensing center, and the gateway mobile sensing center sends the sensing request #1 to the access and mobility management function, in S810, the access and mobility management function sends the tracking result to the gateway mobile sensing center, the gateway mobile sensing center sends the tracking result to the capability exposure function, and the capability exposure function sends the tracking result to the application server. If in S801, the application server sends the sensing request #1 to the access and mobility management function via the gateway mobile sensing center, in S810, the mobility management function sends the tracking result to the gateway mobile sensing center, and the gateway mobile sensing center sends the tracking result to the sensing function. If in S801, the application server sends the sensing request #1 to the access and mobility management function via the capability exposure function, in S810, the mobility management function sends the tracking result to the capability exposure function, and the capability exposure function sends the tracking result to the sensing function. If in S801, the application server sends the sensing request #1 to the sensing function via the capability exposure function, in S810, the sensing function sends the tracking result to the application server via the capability exposure function. If in S801, the application server sends the sensing request #1 to the capability exposure function, and the capability exposure function sends the sensing request #1 to the gateway mobile sensing center, in S810, the sensing function sends the tracking result to the gateway mobile sensing center, the gateway mobile sensing center sends the tracking result to the capability exposure function, and the capability exposure function sends the tracking result to the application server. If in S801, the application server sends the sensing request #1 to the sensing function via the gateway mobile sensing center, in S810, the sensing function sends the tracking result to the application server via the gateway mobile sensing center.

Optionally, in the method 800, the access and mobility management function may alternatively obtain the first location information and/or the second location information of the target object from the terminal or the application server. For example, the first location information is obtained from the sensing request #1, and the second location information is obtained from another sensing request sent by the terminal or the application server. In this case, the access and mobility management function may not determine the positioning periodicity.

Optionally, the target object in the method 800 may be an object having a communication capability. Therefore, the location management function may obtain the first location information and the updated first location information of the target object, so that the sensing function may sense the target object based on the first location information and the updated first location information.

In the method 800, the access and mobility management function may periodically obtain the first location information of the target object, and the sensing function may continuously track the target object, thereby providing a method for continuously tracking the target object.

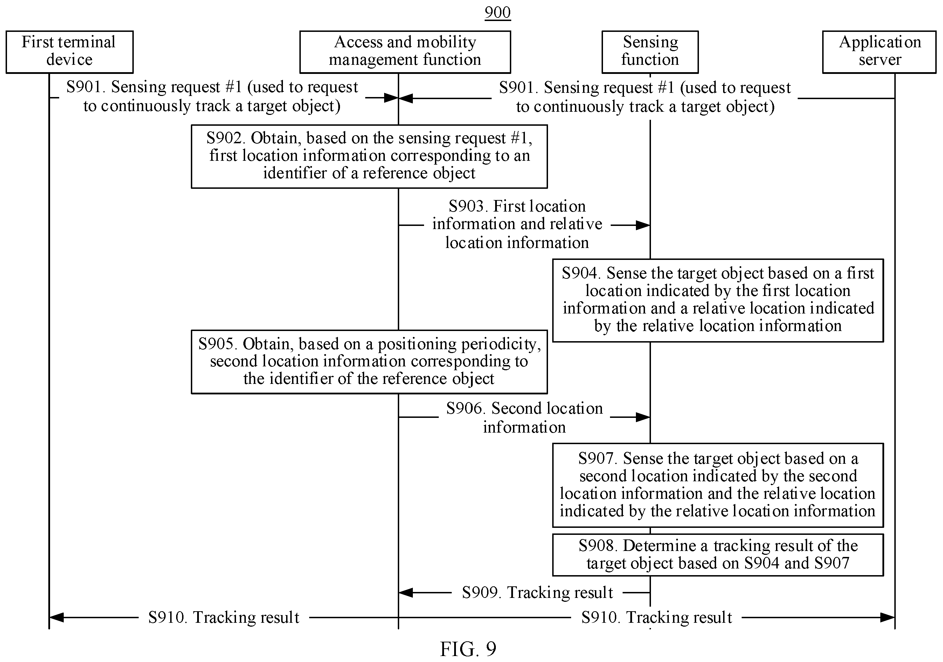

In the method 800, the target object is sensed. In a sensing method 900 similar to the method 800, the sensing function may sense the target object based on location information of a reference object and relative location information between the target object and the reference object. As shown in FIG. 9, the method 900 includes the following steps.

S901. A terminal or an application server sends a sensing request #1 to an access and mobility management function. The access and mobility management function receives the sensing request #1 from the terminal or the application server. The sensing request #1 is used to request to continuously track a target object.

Optionally, the sensing request #1 includes sensing service description information.

Optionally, the sensing request #1 may include an identifier of a reference object and relative location information between the target object and the reference object.

Optionally, the sensing request #1 may not include the identifier of the reference object. For example, the terminal sends the sensing request #1 to the access and mobility management function, and the reference object is the terminal. Because the terminal has established a connection to the access and mobility management function, the access and mobility management function can learn of the identifier of the reference object. Therefore, when the terminal sends the sensing request #1, it indicates that the reference object corresponding to the to-be-sensed target object is the terminal.

Optionally, the relative location information indicates a relative location between the target object and the reference object.

The sensing request #1 is a request for sensing the target object, that is, a to-be-tracked object is the target object. The location information of the reference object and the relative location information between the target object and the reference object may be used to represent location information of the target object, so that the target object can be tracked. For example, the target object is a criminal vehicle, the reference object is a police vehicle, and a relative location between the police vehicle and the criminal vehicle is definite. For example, a distance between the police vehicle and the criminal vehicle is 200 meters, and an angle between the police vehicle and the criminal vehicle is 15 degrees. Therefore, the sensing request #1 may include the sensing service description information, an identifier of the police vehicle, 200 meters, and 15 degrees.

Optionally, the target object may be an area. In other words, the to-be-tracked object may be a specific object, or may be a specific area. If the to-be-tracked object is a specific area, as the reference object moves, the specific area also moves. Therefore, the specific area may be determined by determining a location of the reference object. Optionally, the specific area is an area formed by using the reference object as a center. Alternatively, the specific area may be an area formed by using a reference area as a reference point. For example, for vehicle self-driving assistance, a vehicle needs to obtain road condition information in a 50-meter radius area with an angle range of 0 to 15 degrees. In this case, the reference object is the vehicle, and the target object or a target area is the area with the vehicle as an origin, the 50-meter radius, and the angle range of 0 to 15 degrees.

Alternatively, the sensing request #1 includes first information, and the first information includes the identifier of the reference object and the relative location information between the target object and the reference object. In this case, the first information may be introduced.

Optionally, the sensing service description information is used to describe a service requirement or the like. For example, the sensing service description information may include at least one of a sensing service type, sensing accuracy, resolution, latency, a missed detection probability, a false alarm probability, or a refreshing rate. The service type may be a tracking service type, and may indicate to continuously track the target object.

Optionally, the sensing request #1 includes a tracking indication, and the tracking indication indicates to continuously track the target object.

Optionally, that the application server sends the sensing request #1 to the access and mobility management function includes: The application server sends the sensing request #1 via a capability exposure function and a gateway mobile sensing center. Specifically, the application server sends the sensing request #1 to the capability exposure function. The capability exposure function performs an authorization check on the application server. If the authorization check performed by the capability exposure function on the application server succeeds, the capability exposure function sends the sensing request #1 to the gateway mobile sensing center. The gateway mobile sensing center selects an appropriate access and mobility management function, and sends the sensing request #1 to the access and mobility management function. Optionally, that the application server sends the sensing request #1 to the access and mobility management function includes: The application server sends the sensing request #1 via the capability exposure function. Specifically, the application server sends the sensing request #1 to the capability exposure function. The capability exposure function performs an authorization check on the application server, and selects an appropriate access and mobility management function. If the authorization check on the application server succeeds, the capability exposure function sends the sensing request #1 to the access and mobility management function. Optionally, that the application server sends the sensing request #1 to the access and mobility management function includes: The application server sends the sensing request #1 via the gateway mobile sensing center. Specifically, the application server sends the sensing request #1 to the gateway mobile sensing center. The gateway mobile sensing center performs an authorization check on the application server, and selects an appropriate access and mobility management function. If the authorization check on the application server succeeds, the gateway mobile sensing center sends the sensing request #1 to the access and mobility management function.

Optionally, in S901, the application server may send the sensing request #1 to a sensing function via the capability exposure function. Optionally, that the application server may send the sensing request #1 to the sensing function via the capability exposure function includes: The capability exposure function performs an authorization check on the application server. After the authorization check succeeds, the capability exposure function selects an appropriate sensing function, and sends the sensing request #1 to the sensing function.

Optionally, in S901, the application server may send the sensing request #1 via the capability exposure network element and the gateway mobile sensing center. Optionally, that the application server may send the sensing request #1 via the capability exposure network element and the gateway mobile sensing center includes: The application server may send the sensing request #1 to the capability exposure function. The capability exposure function performs an authorization check on the application server. After the authorization check succeeds, the capability exposure function sends the sensing request #1 to the gateway mobile sensing center. The gateway mobile sensing center selects an appropriate sensing function, and sends the sensing request #1 to the sensing function.

Optionally, in S901, the application server may send the sensing request #1 via the gateway mobile sensing center. Optionally, that the application server sends the sensing request #1 via the gateway mobile sensing center includes: The application server sends the sensing request #1 to the gateway mobile sensing center. The gateway mobile sensing center performs an authorization check on the application server, and selects an appropriate sensing function. After the authorization check succeeds, the gateway mobile sensing center sends the sensing request #1 to the sensing function.

S902. The access and mobility management function obtains, based on the sensing request #1, first location information corresponding to the identifier of the reference object.

Optionally, the access and mobility management function determines a positioning periodicity based on the sensing service description information, and S902 includes: The access and mobility management function obtains, based on the positioning periodicity and the sensing request #1, the first location information corresponding to the identifier of the reference object.

Optionally, the first location information corresponding to the identifier of the reference object may be first location information of the reference object identified by the identifier of the reference object.

Optionally, if the sensing service description information may include at least one of the service type, the sensing accuracy, the resolution, the latency, the missed detection probability, the false alarm probability, or the refreshing rate, that the access and mobility management function determines the positioning periodicity based on the sensing service description information includes: The access and mobility management function determines the positioning periodicity based on the sensing accuracy, the resolution, the latency, the missed detection probability, the false alarm probability, or the refreshing rate. For example, if the sensing service description information includes the refreshing rate, it may be determined that the positioning periodicity is equal to the refreshing rate or is less than the refreshing rate (when the refreshing rate is represented by a time periodicity).

Optionally, the first location information indicates a first location of the reference object.

Optionally, that the access and mobility management function obtains the first location information corresponding to the identifier of the reference object includes: The access and mobility management function sends a first positioning request to a location management function. The first positioning request includes the identifier of the reference object. After receiving the first positioning request, the location management function may position the reference object identified by the identifier of the reference object, to obtain the first location information of the reference object, and send the first location information of the reference object to the access and mobility management function.

Optionally, if the sensing request #1 includes the sensing service description information and/or the tracking indication, and the sensing service description information includes the tracking service type, the access and mobility management function determines the positioning periodicity based on the sensing service description information and the tracking indication. To be specific, the access and mobility management function determines, based on the tracking service type and/or the tracking indication, that the target object needs to be continuously tracked, and therefore, the access and mobility management function learns that the reference object needs to be positioned a plurality of times, and may determine the positioning periodicity based on the sensing service description information. In other words, the tracking indication and/or the tracking service type may trigger the access and mobility management function to determine the positioning periodicity based on the sensing service description information.

S903. The access and mobility management function sends the first location information and the relative location information to the sensing function. The sensing function receives the first location information and the relative location information from the access and mobility management function.

Optionally, S903 includes: The access and mobility management function sends a sensing request #2 to the sensing function. The sensing function receives the sensing request #2 from the access and mobility management function. The sensing request #2 includes the first location information and the relative location information.

Alternatively, the sensing request #2 may include second information, and the second information may include the first location information and the relative location information. In this case, the second information may be introduced in S903.

Optionally, if the sensing request #1 includes the tracking indication, the sensing request #2 may also include the tracking indication. The tracking indication indicates to continuously track the target object.

Optionally, when the sensing request #1 includes the sensing service description information, the sensing request #2 in S903 may also include the sensing service description information.

Alternatively, the sensing request #2 may include a location of the target object. Before S903, the access and mobility management function may determine the location of the target object based on the first location indicated by the first location information and the relative location indicated by the relative location information. That is, in the sensing request #2 in S903, two parameters may be sent, or a result obtained based on the two parameters may be sent.

Optionally, if the access and mobility management function determines the positioning periodicity, periodically obtained first location information may be sent to the sensing function in S903. That is, the first location information may be location information in a periodicity.

S904. The sensing function senses the target object based on the first location indicated by the first location information and the relative location indicated by the relative location information.

Optionally, S904 includes: The sensing function determines the location of the target object based on the first location of the reference object and the relative location, and senses the location of the target object. For example, if the first location of the reference object is (x1, y1), and the relative location is (d1, d2), the location of the target object may be (x1+d1, y1+d2).

Optionally, if the sensing request #2 includes the tracking indication, S904 includes: The sensing function senses, based on the tracking indication, the target object at the location determined based on the first location and the relative location.

Optionally, when the sensing request #2 includes the sensing service description information, the method 900 further includes: The sensing function determines the sensing periodicity based on the sensing service description information. S904 includes: The sensing function indicates, based on the sensing periodicity, a sensing execution device to sense the target object at the location determined based on the first location and the relative location.

Alternatively, if the sensing request #2 may include the location of the target object in S903, and the location of the target object is obtained based on the first location indicated by the first location information and the relative location indicated by the relative location information, in an alternative manner of S904, the sensing function senses the target object based on the location of the target object.

When the access and mobility management function determines the positioning periodicity, S905 may be performed.

S905. The access and mobility management function obtains, based on the positioning periodicity, second location information corresponding to the identifier of the reference object.

Optionally, the second location information may indicate a second location of the reference object.

Optionally, after S902, the access and mobility management function may send the positioning periodicity to the location management function. For example, the first positioning request may include the positioning periodicity. The location management function may periodically send location information of the reference object to the access and mobility management function based on the positioning periodicity. For example, after the location management function obtains the first location information in S903, the location management function may continue to send the second location information to the access and mobility management function in a next periodicity. Therefore, in S905, the access and mobility management function may obtain the second location information.

Optionally, S905 includes: The access and mobility management function periodically requests the location information of the reference object from the location management function based on the positioning periodicity, and the location management function sends the second location information of the reference object to the access and mobility management function based on the request of the access and mobility management function. That is, the access and mobility management function may not send the positioning periodicity to the location management function. For example, after receiving the first location information, the access and mobility management function may continue to send the first positioning request to the location management function. The first positioning request may include the identifier of the reference object. Then, the access and mobility management function receives the second location information of the reference object from the location management function.

S906. The access and mobility management function sends the second location information to the sensing function. The sensing function receives the second location information from the access and mobility management function.

The second location information is updated first location information. That is, the first location information and the second location information are location information of the target object in two different periodicities that is obtained by the access and mobility management function based on the positioning periodicity.

Optionally, S906 includes: The access and mobility management function sends a sensing request #3 to the sensing function. The sensing function receives the sensing request #3 from the access and mobility management function. The sensing request #3 includes the second location information.

Optionally, in S906, the access and mobility management function may send the second location information and relative location information to the sensing function. Optionally, if the relative location between the reference object and the target object remains unchanged, the relative location indicated by the relative location information in S901 and S903 is the same as a relative location indicated by the relative location information in S906. In this case, S906 may not include the relative location information, but include only the second location information. That is, in a scenario in which the relative location between the target object and the reference object remains unchanged, but the reference object moves, the access and mobility management function may send the relative location information in S903 once for all, no relative location information needs to be sent in S906. When the relative location between the target object and the reference object changes relative to that in S903, the access and mobility management function may send changed relative location information in S906. In this way, the sensing function may determine the location of the target object based on the second location information and the changed relative location information. Optionally, the changed relative location information may be from the terminal or the application server. If S901 is from the terminal, the changed relative location information may also be from the terminal. That is, after sensing that the relative location between the reference object and the target object changes, the terminal may send the changed relative location information to the access and mobility management function. If S901 is from the application server, the changed relative location information may also be from the application server. That is, after sensing that the relative location between the reference object and the target object changes, the application server may send the changed relative location information to the access and mobility management function.

Optionally, in an alternative manner in which the access and mobility management function may send the second location information and the relative location information to the sensing function, the access and mobility management function may send an updated location of the target object to the sensing function. The access and mobility management function may determine the updated location of the target object based on the second location indicated by the second location information and the relative location indicated by the relative location information. That is, in S906, two parameters may be sent, or a result obtained based on the two parameters may be sent.

Optionally, in an alternative manner in which the access and mobility management function may send the second location information and the changed relative location information to the sensing function, the access and mobility management function may send an updated location of the target object to the sensing function. The access and mobility management function may determine the updated location of the target object based on the second location indicated by the second location information and the relative location indicated by the changed relative location information. That is, in S906, two parameters may be sent, or a result obtained based on the two parameters may be sent.

Optionally, the method further includes: S907: The sensing function senses the target object based on the second location indicated by the second location information and the relative location indicated by the relative location information.

Optionally, S907 includes: The sensing function determines the location of the target object based on the second location of the reference object and the relative location, and senses the location of the target object. For example, if the second location of the reference object is (x2, y2), and the relative location is (d1, d2), the location of the target object may be (x2+d1, y2+d2). If the access and mobility management function further sends the changed relative location information to the sensing function in S906, the changed relative location information may indicate a changed relative location between the reference object and the target object. For example, the second location of the reference object is (x2, y2), the relative location is (d3, d4), and the location of the target object may be (x2+d3, y2+d3).

Optionally, if the sensing request #2 includes the tracking indication, S906 includes: The sensing function senses, based on the tracking indication, the target object at the location determined based on the second location and the relative location.

Optionally, when the sensing function determines the sensing periodicity based on the sensing service description information, S908 includes: The sensing function senses, based on the sensing periodicity, the target object at the location determined based on the second location and the relative location.

Alternatively, if the access and mobility management function sends the updated location of the target object to the sensing function in S906, and the updated location of the target object is obtained based on the second location indicated by the second location information and the relative location indicated by the relative location information (or the changed relative location information), in an alternative manner of S907, the sensing function senses the target object based on the updated location of the target object.

S908. The sensing function determines a tracking result of the target object based on S904 and S907.

Optionally, the sensing function may obtain the tracking result based on the sensing performed in S904 by the sensing function on the target object at the first location indicated by the first location information, and the sensing performed by the sensing function on the target object at the second location indicated by the second location information.

Optionally, S908 includes: The sensing function obtains an initial tracking result based on the sensing performed in 904 by the sensing function on the target object at the first location indicated by the first location information, and calibrates the initial tracking result by using the second location indicated by the second location information, to obtain a final tracking result. In this case, the tracking result in S908 is the final tracking result.

Optionally, a process similar to S905 to S907 may continue to be repeatedly performed, so that the target object may be sensed a plurality of times, and a tracking result may be obtained.

Optionally, the sensing function may sense the target object based on the first location information in S904. In this case, steps related to the second location information may not be performed. That is, S905, S906, and S907 are optional steps.

S909. The sensing function sends the tracking result to the access and mobility management function. The access and mobility management function receives the tracking result from the sensing function.

S910. The access and mobility management function sends the tracking result to the terminal or the application server. The terminal or the application server receives the tracking result from the access and mobility management function.

Optionally, if in S901, the application server sends the sensing request #1 to the access and mobility management function via the capability exposure function and/or the gateway mobile sensing center, in S910, the access and mobility management function sends the tracking result via the capability exposure function and/or the gateway mobile sensing center. If the sensing request #1 in S901 is sent by the application server to the capability exposure function, the capability exposure function sends the sensing request #1 to the gateway mobile sensing center, and the gateway mobile sensing center sends the sensing request #1 to the access and mobility management function, in S910, the access and mobility management function sends the tracking result to the gateway mobile sensing center, the gateway mobile sensing center sends the tracking result to the capability exposure function, and the capability exposure function sends the tracking result to the application server. If in S901, the application server sends the sensing request #1 to the access and mobility management function via the gateway mobile sensing center, in S910, the mobility management function sends the tracking result to the gateway mobile sensing center, and the gateway mobile sensing center sends the tracking result to the sensing function. If in S901, the application server sends the sensing request #1 to the access and mobility management function via the capability exposure function, in S910, the mobility management function sends the tracking result to the capability exposure function, and the capability exposure function sends the tracking result to the sensing function. If in S901, the application server sends the sensing request #1 to the sensing function via the capability exposure function, in S910, the sensing function sends the tracking result to the application server via the capability exposure function. If in S901, the application server sends the sensing request #1 to the capability exposure function, and the capability exposure function sends the sensing request #1 to the gateway mobile sensing center, in S910, the sensing function sends the tracking result to the gateway mobile sensing center, the gateway mobile sensing center sends the tracking result to the capability exposure function, and the capability exposure function sends the tracking result to the application server. If in S901, the application server sends the sensing request #1 to the sensing function via the gateway mobile sensing center, in S910, the sensing function sends the tracking result to the application server via the gateway mobile sensing center.

Optionally, in the method 900, the access and mobility management function may alternatively obtain the first location information and/or the second location information of the reference object from the terminal or the application server. For example, the first location information is obtained from the sensing request #1, and the second location information is obtained from another sensing request sent by the terminal or the application server. In this case, the sensing request #1 may not include the sensing service description information, and the access and mobility management function may not determine the positioning periodicity.

Optionally, the reference object in the method 900 may be an object having a communication capability. Therefore, the location management function may obtain the first location information and the updated first location information of the reference object, so that the sensing function may sense the target object based on the first location information, the updated first location information, and the relative location information.

In the method 900, the access and mobility management function may periodically obtain the first location information of the reference object, and the sensing function may continuously track the target object, thereby providing a method for continuously tracking the target object. Because the target object is sensed based on the location information, sensing accuracy is high.

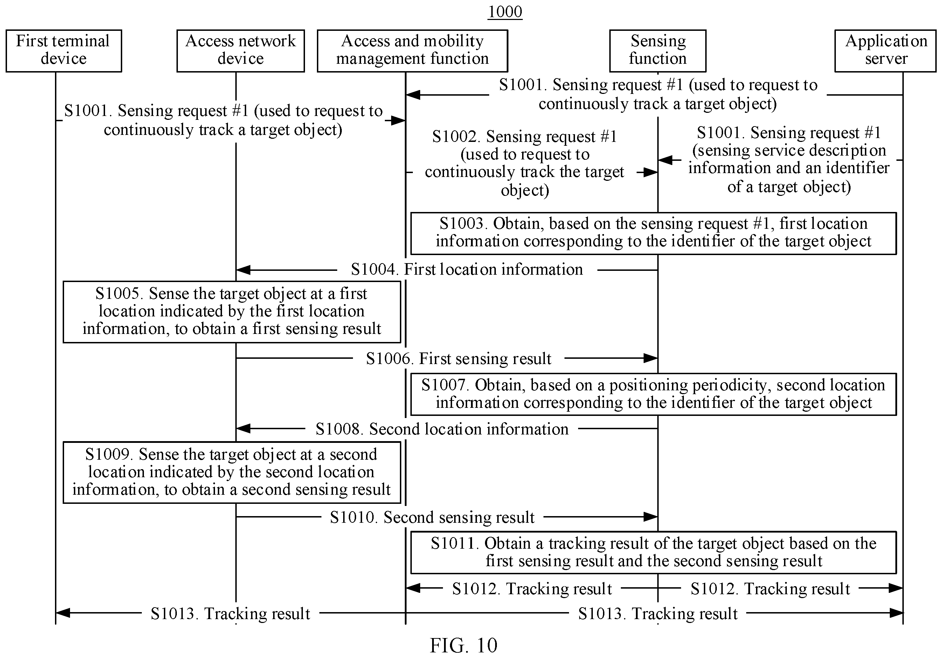

In the method 800 and the method 900, the access and mobility management function obtains the first location information of the target object or the first location information of the reference object. In some embodiments, the sensing function may alternatively obtain the first location information of the target object or the first location information of the reference object. In descriptions of the following method 1000, the sensing function obtains the first location information of the target object, and in descriptions of the following method 1100, the sensing function obtains the first location information of the reference object. As shown in FIG. 10, the method 1000 includes the following steps.

S1001. A terminal or an application server sends a sensing request #1 to an access and mobility management function. The access and mobility management function receives the sensing request #1 from the terminal or the application server. Alternatively, the application server sends the sensing request #1 to a sensing function. The sensing request #1 is used to request to continuously track a target object.

Optionally, the sensing request #1 includes sensing service description information.

Optionally, the sensing request #1 may include an identifier of the target object.

Optionally, the sensing request #1 may not include the identifier of the target object. For example, the terminal sends the sensing request #1 to the access and mobility management function, and the target object may be the terminal. Because the terminal has established a connection to the access and mobility management function, the access and mobility management function can learn of the identifier of the target object. Therefore, when the terminal sends the sensing request #1, it indicates that the terminal is to be sensed.

The sensing request #1 is a request for sensing the target object.

Alternatively, the sensing request #1 includes first information, and the first information includes the identifier of the target object. In this case, the first information may be introduced.

Optionally, the sensing service description information is used to describe a service requirement or the like. For example, the sensing service description information may include at least one of a service type, sensing accuracy, resolution, latency, a missed detection probability, a false alarm probability, or a refreshing rate. The service type may be a tracking service type, and may indicate to continuously track the target object.

Optionally, the sensing request #1 includes a tracking indication, and the tracking indication indicates to continuously track the target object.

That is, S1001 includes three cases. In a first case, the terminal sends the sensing request #1 to the access and mobility management function. In a second case, the application server sends the sensing request #1 to the mobility management function. In a third case, the application server sends the sensing request #1 to the sensing function.

Optionally, for the second case of S1001, that the application server sends the sensing request #1 to the access and mobility management function includes: The application server sends the sensing request #1 via a capability exposure function and a gateway mobile sensing center. Specifically, the application server sends the sensing request #1 to the capability exposure function. The capability exposure function performs an authorization check on the application server. If the authorization check performed by the capability exposure function on the application server succeeds, the capability exposure function sends the sensing request #1 to the gateway mobile sensing center. The gateway mobile sensing center selects an appropriate access and mobility management function, and sends the sensing request #1 to the access and mobility management function. Optionally, that the application server sends the sensing request #1 to the access and mobility management function includes: The application server sends the sensing request #1 via the capability exposure function. Specifically, the application server sends the sensing request #1 to the capability exposure function. The capability exposure function performs an authorization check on the application server, and selects an appropriate access and mobility management function. If the authorization check on the application server succeeds, the capability exposure function sends the sensing request #1 to the access and mobility management function. Optionally, that the application server sends the sensing request #1 to the access and mobility management function includes: The application server sends the sensing request #1 via the gateway mobile sensing center. Specifically, the application server sends the sensing request #1 to the gateway mobile sensing center. The gateway mobile sensing center performs an authorization check on the application server, and selects an appropriate access and mobility management function. If the authorization check on the application server succeeds, the gateway mobile sensing center sends the sensing request #1 to the access and mobility management function.

Optionally, for the third case of S1001, that the application server sends the sensing request #1 to the sensing function includes: The application server sends the sensing request #1 to the sensing function via the capability exposure function and/or the gateway mobile sensing center. Optionally, that the application server sends the sensing request #1 to the sensing function via the capability exposure function includes: The application server sends the sensing request #1 to the capability exposure function. The capability exposure function performs an authorization check on the application server that sends the sensing request #1. If the authorization check performed by the capability exposure function on the application server succeeds, the capability exposure function sends the sensing request #1 to the sensing function, and the sensing function receives the sensing request #1 from the capability exposure function. Optionally, that the application server sends the sensing request #1 to the sensing function via the gateway mobile sensing center includes: The application server sends the sensing request #1 to the gateway mobile sensing center. The gateway mobile sensing center performs an authorization check on the application server that sends the sensing request #1. If the authorization check performed by the gateway mobile sensing center on the application server succeeds, the gateway mobile sensing center sends the sensing request #1 to the sensing function. The sensing function receives the sensing request #1 from the gateway mobile sensing center. The application server may send the sensing request #1 via the capability exposure network element and the gateway mobile sensing center. Optionally, that the application server may send the sensing request #1 via the capability exposure network element and the gateway mobile sensing center includes: The application server may send the sensing request #1 to the capability exposure function. The capability exposure function performs an authorization check on the application server. After the authorization check succeeds, the capability exposure function sends the sensing request #1 to the gateway mobile sensing center. The gateway mobile sensing center selects an appropriate sensing function, and sends the sensing request #1 to the sensing function.

In the first case or the second case of S1001, S1001 may be performed. If neither the first case nor the second case exists, S1002 may not be included. To be specific, in S1002, the access and mobility management function sends the sensing request #1 to the sensing function, but if the application server sends the sensing request #1 to the sensing function in the third case, the access and mobility management function may not send the sensing request #1. Therefore, S1002 is not performed.

One of the first case, the second case, and the third case in S1001 may exist. To be specific, the sensing request is initiated by the terminal to the access and mobility management function, or the sensing request is initiated by the application server to the access and mobility management function, or the sensing request is initiated by the application server to the sensing function.

S1002. The access and mobility management function sends the sensing request #1 to the sensing function. The sensing function receives the sensing request #1 from the access and mobility management function.

Optionally, in S1002, the access and mobility management function transparently transmits the sensing request #1.

S1003. The sensing function obtains, based on the sensing request #1, first location information corresponding to the identifier of the target object.

Optionally, if the sensing request #1 includes the sensing service description information, S1003 includes: The sensing function determines a positioning periodicity based on the sensing service description information, and obtains, based on the positioning periodicity, the first location information corresponding to the identifier of the target object.

Optionally, the first location information corresponding to the identifier of the target object may be first location information of an object identified by the identifier of the target object.

Optionally, if the sensing service description information may include at least one of the service type, the sensing accuracy, the resolution, the latency, the missed detection probability, the false alarm probability, or the refreshing rate, that the sensing function determines the positioning periodicity based on the sensing service description information includes: The sensing function determines the positioning periodicity based on the sensing accuracy, the resolution, the latency, the missed detection probability, the false alarm probability, or the refreshing rate. For example, if the sensing service description information includes the refreshing rate, it may be determined that the positioning periodicity is equal to the refreshing rate or is less than the refreshing rate (when the refreshing rate is represented by a time periodicity).

Optionally, the first location information indicates a first location of the target object.

Optionally, that the sensing function obtains the first location information corresponding to the identifier of the target object includes: The sensing function sends a first positioning request to a location management function. The first positioning request includes the identifier of the target object. After receiving the first positioning request, the location management function may position the target object identified by the identifier of the target object, to obtain the first location information of the target object, and send the first location information of the target object to the sensing function.

Optionally, if the sensing request #1 includes the sensing service description information and/or the tracking indication, and the sensing service description information includes the tracking service type, the access and mobility management function determines the positioning periodicity based on the sensing service description information and the tracking indication. To be specific, the access and mobility management function determines, based on the tracking service type and/or the tracking indication, that the target object needs to be continuously tracked, and therefore, the access and mobility management function learns that the target object needs to be positioned a plurality of times, and may determine the positioning periodicity based on the sensing service description information. In other words, the tracking indication and/or the tracking service type may trigger the access and mobility management function to determine the positioning periodicity based on the sensing service description information.

Optionally, in S1003, for the first case of S1001 and S1002, it may be understood that the sensing request #1 is from the terminal. For the second case of S1001 and S1002, or the third case of S1001, it may be understood that the sensing request #1 is from the application server.

S1004. The sensing function sends the first location information to an access network device. The access network device receives the first location information from the sensing function.

A sensing execution device may include the access network device.

Optionally, S1004 includes: The sensing function sends a sensing request #2 to the access network device. The access network device receives the sensing request #2 from the sensing function. The sensing request #2 includes the first location information.

Alternatively, the sensing request #2 may include second information, and the second information may include the first location information. In this case, the second information may be introduced in S1104.

Optionally, if the sensing function determines the positioning periodicity, the sensing function may send periodically obtained first location information in S1004. That is, the first location information may be location information in a periodicity.

S1005. The access network device senses the target object at the first location indicated by the first location information, to obtain a first sensing result.

S1006. The access network device sends the first sensing result to the sensing function. The sensing function receives the first sensing result from the access network device.

Optionally, in S1006, the access network device may send a response message of the sensing request #2 to the sensing function, the sensing function receives the response message from the access network device, and the response message includes the first sensing result.

S1007. The sensing function obtains, based on the positioning periodicity, second location information corresponding to the identifier of the target object.

Optionally, the second location information may indicate a second location of the target object.

The second location information is updated first location information. That is, the first location information and the second location information are location information of the target object in two different periodicities that is obtained by the sensing function based on the positioning periodicity.

Optionally, if the sensing function determines the positioning periodicity, the sensing function may send periodically obtained second location information in S1007. That is, the second location information may be location information in a periodicity.

Optionally, after S1003, the sensing function may send the positioning periodicity to the location management function. For example, the first positioning request may include the positioning periodicity. The location management function may periodically send location information of the target object to the sensing function based on the positioning periodicity. For example, after the location management function obtains the first location information in S1004, the location management function may continue to send the second location information to the sensing function in a next periodicity. Therefore, in S1007, the sensing function may obtain the second location information.

Optionally, S1007 includes: The sensing function periodically requests the location information of the target object from the location management function based on the positioning periodicity, and the location management function sends the second location information of the target object to the sensing function based on the request of the sensing function. That is, the sensing function may not send the positioning periodicity to the location management function. For example, after receiving the first location information, the sensing function may continue to send the first positioning request to the location management function. The first positioning request may include the identifier of the target object. Then, the sensing function receives the second location information of the target object from the location management function.

S1008. The sensing function sends the second location information to the access network device. The access network device receives the second location information from the sensing function.

Optionally, S1008 includes: The sensing function sends a sensing request #3 to the access network device. The access network device receives the sensing request #3 from the sensing function. The sensing request #3 includes the second location information.

S1009. The access network device senses the target object at the second location indicated by the second location information, to obtain a second sensing result.

S1010. The access network device sends the second sensing result to the sensing function. The sensing function receives the second sensing result from the access network device.

Optionally, in S1008, the access network device may send the sensing request #3 to the sensing function, and the sensing request #3 includes the second location information. In this case, in S1010, the access network device may send a response message of the sensing request #3 to the sensing function, the sensing function receives the response message from the access network device, and the response message includes the second sensing result.

Optionally, S1006 and S1010 may be performed at the same time, or may be performed separately. That is, each time the access network device obtains one sensing result, the access network device may send the sensing result to the sensing function, or the access network device may send a plurality of sensing results to the sensing function together.

S1011. The sensing function obtains a tracking result of the target object based on the first sensing result and the second sensing result.

Optionally, a process similar to S1007 to S1010 may continue to be repeatedly performed, so that the target object may be sensed a plurality of times, and a tracking result may be obtained.

Optionally, S1008 to S1010 are optional steps. That is, the first sensing result in S1006 may be a final tracking result of the target object. To be specific, a tracking result in S1012 may be the first sensing result, and the sensing function may not obtain the second sensing result. In some embodiments, S1007 may be performed. The sensing function may calibrate the first sensing result in S1006 based on the second location indicated by the second location information, to obtain a final sensing result. In this case, the tracking result in S1012 may be obtained by calibrating the first sensing result.

S1012. The sensing function sends the tracking result to the access and mobility management function or the application server. The access and mobility management function or the application server receives the tracking result from the sensing function.

For the first case or the second case in S1001, in S1012, the sensing function sends the tracking result to the access and mobility management function, and the access and mobility management function receives the tracking result from the sensing function. In this case, S1013 may be further included. For the third case in S1001, in S1012, the sensing function sends the tracking result to the application server, and the application server receives the tracking result from the sensing function. That the sensing function sends the tracking result to the application server, and the application server receives the tracking result from the sensing function includes: If in S1001, the application server sends the sensing request #1 to the sensing function via the capability exposure function, in S1012, the sensing function sends the tracking result to the application server via the capability exposure function. If in S1001, the application server sends the sensing request #1 to the capability exposure function, and the capability exposure function sends the sensing request #1 to the gateway mobile sensing center, in S1012, the sensing function sends the tracking result to the gateway mobile sensing center, the gateway mobile sensing center sends the tracking result to the capability exposure function, and the capability exposure function sends the tracking result to the application server. If in S1001, the application server sends the sensing request #1 to the sensing function via the gateway mobile sensing center, in S1012, the sensing function sends the tracking result to the application server via the gateway mobile sensing center.

S1013. The access and mobility management function sends the tracking result to the terminal or the application server. The terminal or the application server receives the tracking result from the access and mobility management function.

Optionally, S1013 includes: If in S1001, the application server sends the sensing request #1 to the access and mobility management function via the capability exposure function and/or the gateway mobile sensing center, in S1013, the access and mobility management function sends the tracking result to the application server via the capability exposure function and/or the gateway mobile sensing center. If the sensing request #1 in S1001 is sent by the application server to the capability exposure function, the capability exposure function sends the sensing request #1 to the gateway mobile sensing center, and the gateway mobile sensing center sends the sensing request #1 to the access and mobility management function, in S1013, the access and mobility management function sends the tracking result to the gateway mobile sensing center, the gateway mobile sensing center sends the tracking result to the capability exposure function, and the capability exposure function sends the tracking result to the application server. If in S1001, the application server sends the sensing request #1 to the access and mobility management function via the gateway mobile sensing center, in S1013, the mobility management function sends the tracking result to the gateway mobile sensing center, and the gateway mobile sensing center sends the tracking result to the sensing function. If in S1001, the application server sends the sensing request #1 to the access and mobility management function via the capability exposure function, in S1013, the mobility management function sends the tracking result to the capability exposure function, and the capability exposure function sends the tracking result to the sensing function.

Optionally, in the method 1000, the sensing function may alternatively obtain the first location information and/or the second location information of the target object from the terminal or the application server. For example, the first location information is obtained from the sensing request #1, and the second location information is obtained from another sensing request sent by the terminal or the application server. In this case, the sensing request #1 may not include the sensing service description information, and the sensing function may not determine the positioning periodicity.

Optionally, the target object in the method 1000 may be an object having a communication capability. Therefore, the location management function may obtain the first location information and the second location information of the target object, so that the sensing function may sense the target object based on the first location information and the second location information.

In the method 1000, the sensing function may periodically obtain the first location information of the target object, and may continuously track the target object, thereby providing a method for continuously tracking the target object. Because the target object is sensed based on the location information, sensing accuracy is high.

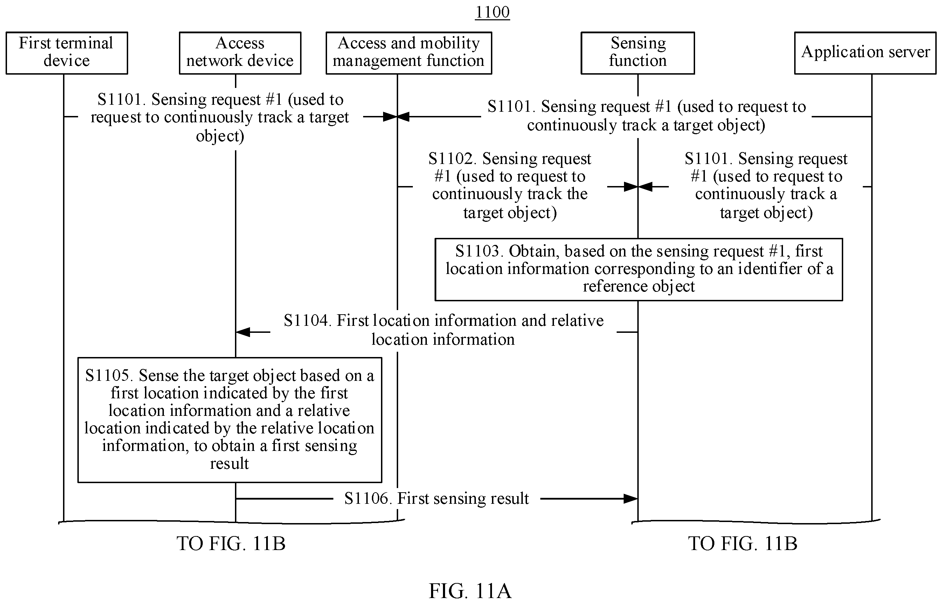

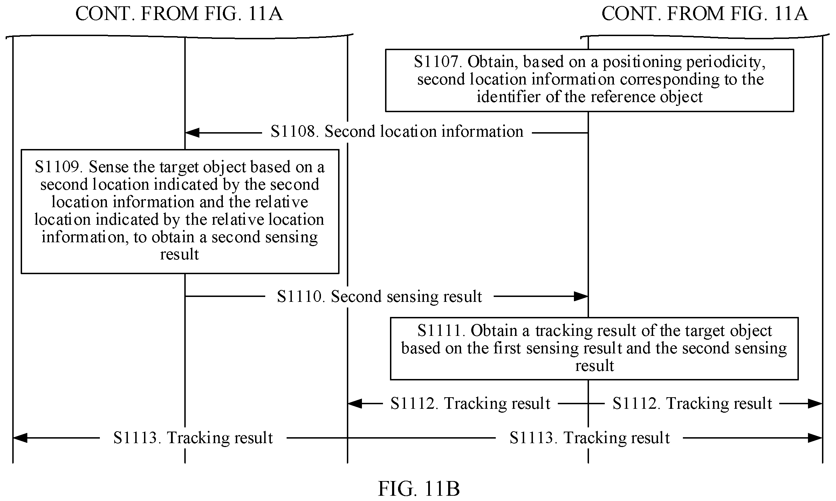

In the method 1000, a target object is sensed. In the sensing method 1100 similar to the method 1000, the sensing function may sense a target object based on location information of a reference object and relative location information between the target object and the reference object. As shown in FIG. 11A and FIG. 11B, the method 1100 includes the following steps.

S1101. A terminal or an application server sends a sensing request #1 to an access and mobility management function. The access and mobility management function receives the sensing request #1 from the terminal or the application server. Alternatively, the application server sends the sensing request #1 to a sensing function. The sensing request #1 is used to request to continuously track a target object.

Optionally, the sensing request #1 includes sensing service description information.

Optionally, the sensing request #1 includes an identifier of a reference object and relative location information between the target object and the reference object.

Optionally, the sensing request #1 may not include the identifier of the reference object. For example, the terminal sends the sensing request #1 to the access and mobility management function, and the reference object is the terminal. Because the terminal has established a connection to the access and mobility management function, the access and mobility management function can learn of the identifier of the reference object. Therefore, when the terminal sends the sensing request #1, it indicates that the reference object corresponding to the to-be-sensed target object is the terminal.

Optionally, the relative location information indicates a relative location between the target object and the reference object.

The sensing request #1 is a request for sensing the target object, that is, a to-be-tracked object is the target object. The location information of the reference object and the relative location information between the target object and the reference object may be used to represent location information of the target object, so that the target object can be tracked. For example, the target object is a criminal vehicle, the reference object is a police vehicle, and a relative location between the police vehicle and the criminal vehicle is definite. For example, a distance between the police vehicle and the criminal vehicle is 200 meters, and an angle between the police vehicle and the criminal vehicle is 15 degrees. Therefore, the sensing request #1 may include the sensing service description information, an identifier of the police vehicle, 200 meters, and 15 degrees.

Optionally, the target object may be an area. In other words, the to-be-tracked object may be a specific object, or may be a specific area. If the to-be-tracked object is a specific area, as the reference object moves, the specific area also moves. Therefore, the specific area may be determined by determining a location of the reference object. Optionally, the specific area is an area formed by using the reference object as a center. Alternatively, the specific area may be an area formed by using a reference area as a reference point. For example, for vehicle self-driving assistance, a vehicle needs to obtain road condition information in a 50-meter radius area with an angle range of 0 to 15 degrees. In this case, the reference object is the vehicle, and the target object or a target area is the area with the vehicle as an origin, the 50-meter radius, and the angle range of 0 to 15 degrees.

Alternatively, the sensing request #1 includes first information, and the first information includes the identifier of the reference object and the relative location information between the target object and the reference object. In this case, the first information may be introduced.

Optionally, the sensing service description information is used to describe a service requirement or the like. For example, the sensing service description information may include at least one of a sensing service type, sensing accuracy, resolution, latency, a missed detection probability, a false alarm probability, or a refreshing rate. The service type may be a tracking service type, and may indicate to continuously track the target object.

Optionally, the sensing request #1 includes a tracking indication, and the tracking indication indicates to continuously track the target object.

That is, S1101 includes three cases. In a first case, the terminal sends the sensing request #1 to the access and mobility management function. In a second case, the application server sends the sensing request #1 to the mobility management function. In a third case, the application server sends the sensing request #1 to the sensing function.

Optionally, for the second case of S1101, that the application server sends the sensing request #1 to the access and mobility management function includes: The application server sends the sensing request #1 via a capability exposure function and a gateway mobile sensing center. Specifically, the application server sends the sensing request #1 to the capability exposure function. The capability exposure function performs an authorization check on the application server. If the authorization check performed by the capability exposure function on the application server succeeds, the capability exposure function sends the sensing request #1 to the gateway mobile sensing center. The gateway mobile sensing center selects an appropriate access and mobility management function, and sends the sensing request #1 to the access and mobility management function. Optionally, that the application server sends the sensing request #1 to the access and mobility management function includes: The application server sends the sensing request #1 via the capability exposure function. Specifically, the application server sends the sensing request #1 to the capability exposure function. The capability exposure function performs an authorization check on the application server, and selects an appropriate access and mobility management function. If the authorization check on the application server succeeds, the capability exposure function sends the sensing request #1 to the access and mobility management function. Optionally, that the application server sends the sensing request #1 to the access and mobility management function includes: The application server sends the sensing request #1 via the gateway mobile sensing center. Specifically, the application server sends the sensing request #1 to the gateway mobile sensing center. The gateway mobile sensing center performs an authorization check on the application server, and selects an appropriate access and mobility management function. If the authorization check on the application server succeeds, the gateway mobile sensing center sends the sensing request #1 to the access and mobility management function.

Optionally, for the third case of S1101, that the application server sends the sensing request #1 to the sensing function includes: The application server sends the sensing request #1 to the sensing function via the capability exposure function or the gateway mobile sensing center. Optionally, that the application server sends the sensing request #1 to the sensing function via the capability exposure function includes: The application server sends the sensing request #1 to the capability exposure function. The capability exposure function performs an authorization check on the application server that sends the sensing request #1. If the authorization check performed by the capability exposure function on the application server succeeds, the capability exposure function sends the sensing request #1 to the sensing function, and the sensing function receives the sensing request #1 from the capability exposure function. Optionally, that the application server sends the sensing request #1 to the sensing function via the gateway mobile sensing center includes: The application server sends the sensing request #1 to the gateway mobile sensing center. The gateway mobile sensing center performs an authorization check on the application server that sends the sensing request #1. If the authorization check performed by the gateway mobile sensing center on the application server succeeds, the gateway mobile sensing center sends the sensing request #1 to the sensing function. The sensing function receives the sensing request #1 from the gateway mobile sensing center. The application server may send the sensing request #1 via the capability exposure network element and the gateway mobile sensing center. Optionally, that the application server may send the sensing request #1 via the capability exposure network element and the gateway mobile sensing center includes: The application server may send the sensing request #1 to the capability exposure function. The capability exposure function performs an authorization check on the application server. After the authorization check succeeds, the capability exposure function sends the sensing request #1 to the gateway mobile sensing center. The gateway mobile sensing center selects an appropriate sensing function, and sends the sensing request #1 to the sensing function.

In the first case or the second case of S1101, S1101 may be performed. If neither the first case nor the second case exists, S1102 may not be included. To be specific, in S1102, the access and mobility management function sends the sensing request #1 to the sensing function, but if the application server sends the sensing request #1 to the sensing function in the third case, the access and mobility management function may not send the sensing request #1. Therefore, S1102 is not performed.

One of the first case, the second case, and the third case in S1101 may exist. To be specific, the sensing request is initiated by the terminal to the access and mobility management function, or the sensing request is initiated by the application server to the access and mobility management function, or the sensing request is initiated by the application server to the sensing function.

S1102. The access and mobility management function sends the sensing request #1 to the sensing function. The sensing function receives the sensing request #1 from the access and mobility management function.

Optionally, in S1102, the access and mobility management function transparently transmits the sensing request #1.

S1103. The sensing function obtains, based on the sensing request # 1, first location information corresponding to the identifier of the reference object.

Optionally, if the sensing request #1 includes the sensing service description information, S1103 includes: The sensing function determines a positioning periodicity based on the sensing service description information, and obtains, based on the positioning periodicity, the first location information corresponding to the identifier of the reference object.

Optionally, the first location information corresponding to the identifier of the reference object may be first location information of the reference object identified by the identifier of the reference object.

Optionally, if the sensing service description information may include at least one of the service type, the sensing accuracy, the resolution, the latency, the missed detection probability, the false alarm probability, or the refreshing rate, that the access and mobility management function determines the positioning periodicity based on the sensing service description information includes: The access and mobility management function determines the positioning periodicity based on the sensing accuracy, the resolution, the latency, the missed detection probability, the false alarm probability, or the refreshing rate. For example, if the sensing service description information includes the refreshing rate, it may be determined that the positioning periodicity is equal to the refreshing rate or is less than the refreshing rate (when the refreshing rate is represented by a time periodicity).

Optionally, the first location information indicates a first location of the reference object.

Optionally, that the sensing function obtains the first location information corresponding to the identifier of the reference object includes: The sensing function sends a first positioning request to a location management function. The first positioning request includes the identifier of the reference object. After receiving the first positioning request, the location management function may position the reference object identified by the identifier of the reference object, to obtain the first location information of the reference object, and send the first location information of the reference object to the access and mobility management function.

Optionally, if the sensing request #1 includes the sensing service description information and/or the tracking indication, and the sensing service description information includes the tracking service type, the sensing function determines the positioning periodicity based on the sensing service description information and the tracking indication. To be specific, the sensing function determines, based on the sensing service description information and/or the tracking indication, that the target object needs to be continuously tracked, and therefore, the sensing function learns that the reference object needs to be positioned a plurality of times, and may determine the positioning periodicity based on the sensing service description information. In other words, the tracking indication and/or the tracking service type may trigger the sensing function to determine the positioning periodicity based on the sensing service description information.

Optionally, in S1103, for the first case of S1101 and S1102, it may be understood that the sensing request #1 is from the terminal. For the second case of S1101 and S1102, or the third case of S1101, it may be understood that the sensing request #1 is from the application server.

S1104. The sensing function sends the first location information and the relative location information to an access network device. The access network device receives the first location information and the relative location information from the sensing function.

A sensing execution device may include the access network device.

Optionally, S1104 includes: The sensing function sends a sensing request #2 to the access network device. The access network device receives the sensing request #2 from the sensing function. The sensing request #2 includes the first location information and the relative location information.

Alternatively, the sensing request #2 may include second information, and the second information may include the first location information and the relative location information. In this case, the second information may be introduced in S1104.

Alternatively, the sensing request #2 may include a location of the target object. Before S1104, the sensing function may determine the location of the target object based on the first location indicated by the first location information and the relative location indicated by the relative location information. That is, in the sensing request #2 in S1104, two parameters may be sent, or a result obtained based on the two parameters may be sent.

Optionally, if the sensing function determines the positioning periodicity, the sensing function may send periodically obtained first location information in S1104. That is, the first location information may be location information in a periodicity.

S1105. The access network device senses the target object based on the first location indicated by the first location information and the relative location indicated by the relative location information, to obtain a first sensing result.

Optionally, S1105 includes: The access network device determines the location of the target object based on the first location of the reference object and the relative location, and senses the location of the target object. For example, if the first location of the reference object is (x1, y1), and the relative location is (d1, d2), the location of the target object may be (x1+d1, yl+d2).

Alternatively, if the sensing request #2 may include the location of the target object in S1104, and the location of the target object is obtained based on the first location indicated by the first location information and the relative location indicated by the relative location information, in an alternative manner of S1105, the sensing function senses the target object based on the location of the target object.

When the access and mobility management function determines the positioning periodicity, S1106 may be performed.

S1106. The access network device sends the first sensing result to the sensing function. The sensing function receives the first sensing result from the access network device.

Optionally, in S1106, the access network device may send a response message of the sensing request #2 to the sensing function, the sensing function receives the response message from the access network device, and the response message includes the first sensing result.

S1107: The sensing function obtains, based on the positioning periodicity, second location information corresponding to the identifier of the reference object.

Optionally, the second location information may indicate a second location of the reference object.

The second location information is updated first location information. That is, the first location information and the second location information are location information of the target object in two different periodicities that is obtained by the sensing function based on the positioning periodicity.

Optionally, if the sensing function determines the positioning periodicity, the sensing function may send periodically obtained second location information in S1107. That is, the second location information may be location information in a periodicity.

Optionally, after S1103, the sensing function may send the positioning periodicity to the location management function. For example, the first positioning request may include the positioning periodicity. The location management function may periodically send location information of the reference object to the sensing function based on the positioning periodicity. For example, after the location management function obtains the first location information in S1103, the location management function may continue to send the second location information to the sensing function in a next periodicity. Therefore, in S1107, the sensing function may obtain the second location information.

Optionally, S1107 includes: The sensing function periodically requests the location information of the reference object from the location management function based on the positioning periodicity, and the location management function sends the second location information of the reference object to the sensing function based on the request of the sensing function. That is, the sensing function may not send the positioning periodicity to the location management function. For example, after receiving the first location information, the sensing function may continue to send the first positioning request to the location management function. The first positioning request may include the identifier of the reference object. Then, the sensing function receives the second location information of the reference object from the location management function.

S1108. The sensing function sends the second location information to the access network device. The access network device receives the second location information from the sensing function.

Optionally, S1108 includes: The sensing function sends a sensing request #3 to the access network device. The access network device receives the sensing request #3 from the sensing function. The sensing request #3 includes the second location information.

Optionally, in S1108, the sensing function sends the second location information and relative location information to the access network device. Optionally, if the relative location between the reference object and the target object remains unchanged, the relative location indicated by the relative location information in S1101 and S1104 is the same as a relative location indicated by the relative location information in S1108. In this case, S1108 may not include the relative location information, but include only the second location information. That is, in a scenario in which the relative location between the target object and the reference object remains unchanged, but the reference object moves, the sensing function may send the relative location information in S1104 once for all, no relative location information needs to be sent in S1108. When the relative location between the target object and the reference object changes relative to that in S1104, the sensing function may send changed relative location information in S1108. In this way, the access network device may determine the location of the target object based on the second location information and the changed relative location information. Optionally, the changed relative location information may be from the terminal or the application server. If S1101 is from the terminal, the changed relative location information may also be from the terminal. The terminal sends the changed relative location information to the access and mobility management function, and the access and mobility management function sends the changed relative location information to the sensing function. That is, after sensing that the relative location between the reference object and the target object changes, the terminal may send the changed relative location information to the access and mobility management function. If S1101 is from the application server, the changed relative location information may also be from the application server. That is, after sensing that the relative location between the reference object and the target object changes, the application server may send the changed relative location information to the access and mobility management function, and the access and mobility management function sends the changed relative location information to the sensing function.

Optionally, in an alternative manner in which the sensing function may send the second location information and the relative location information to the access network device, the sensing function may send an updated location of the target object to the access network device. The sensing function may determine the updated location of the target object based on the second location indicated by the second location information and the relative location indicated by the relative location information. That is, in S1108, two parameters may be sent, or a result obtained based on the two parameters may be sent.

Optionally, in an alternative manner in which the sensing function may send the second location information and the changed relative location information to the access network device, the sensing function may send an updated location of the target object to the access network device. The sensing function may determine the updated location of the target object based on the second location indicated by the second location information and the relative location indicated by the changed relative location information. That is, in S1108, two parameters may be sent, or a result obtained based on the two parameters may be sent.

S1109. The access network device senses the target object based on the second location indicated by the second location information and the relative location indicated by the relative location information, to obtain a second sensing result.

Optionally, S1109 includes: The access network device determines the location of the target object based on the second location of the reference object and the relative location, and senses the location of the target object. For example, if the second location of the reference object is (x2, y2), and the relative location is (d1, d2), the location of the target object may be (x2+d1, y2+d2). If the access and mobility management function further sends the changed relative location information to the sensing function in S1108, the changed relative location information may indicate a changed relative location between the reference object and the target object. For example, the second location of the reference object is (x2, y2), the relative location is (d3, d4), and the location of the target object may be (x2+d3, y2+d3).

Alternatively, if the access and mobility management function sends the second location information to the sensing function in S1108, and the updated location of the target object is obtained based on the second location indicated by the second location information and the relative location indicated by the relative location information (or the changed relative location information), in an alternative manner of S1109, the access network device senses the target object based on the updated location of the target object.

S1110. The access network device sends the second sensing result to the sensing function. The sensing function receives the second sensing result from the access network device.

Optionally, in S1108, the access network device may send the sensing request #3 to the sensing function, and the sensing request #3 includes the second location information. In this case, in S1110, the access network device may send a response message of the sensing request #3 to the sensing function, the sensing function receives the response message from the access network device, and the response message includes the second sensing result.

Optionally, S1106 and S1110 may be performed at the same time, or may be performed separately. That is, each time the access network device obtains one sensing result, the access network device may send the sensing result to the sensing function, or the access network device may send a plurality of sensing results to the sensing function together.

S1111. The sensing function obtains a tracking result of the target object based on the first sensing result and the second sensing result.

Optionally, a process similar to S1107 to S1110 may continue to be repeatedly performed, so that the target object may be sensed a plurality of times, and a tracking result may be obtained.

Optionally, S1108 to S1110 are optional steps. That is, the first sensing result in S1106 may be a final tracking result of the target object. To be specific, a tracking result in S1112 may be the first sensing result, and the sensing function may not obtain the second sensing result. In some embodiments, S1107 may be performed. The sensing function may calibrate the first sensing result in S1006 based on the second location indicated by the second location information, to obtain a final sensing result. In this case, the tracking result in S1112 may be obtained by calibrating the first sensing result.

S1112. The sensing function sends the tracking result to the access and mobility management function or the application server. The access and mobility management function or the application server receives the tracking result from the sensing function.

For the first case or the second case in S1101, in S1112, the sensing function sends the tracking result to the access and mobility management function, and the access and mobility management function receives the tracking result from the sensing function. In this case, S1113 may be further included. For the third case in S1101, in S1112, the sensing function sends the tracking result to the application server, and the application server receives the tracking result from the sensing function. That the sensing function sends the tracking result to the application server, and the application server receives the tracking result from the sensing function includes: If in S1101, the application server sends the sensing request #1 to the sensing function via the capability exposure function, in S1112, the sensing function sends the tracking result to the application server via the capability exposure function. If in S1101, the application server sends the sensing request #1 to the capability exposure function, and the capability exposure function sends the sensing request #1 to the gateway mobile sensing center, in S1112, the sensing function sends the tracking result to the gateway mobile sensing center, the gateway mobile sensing center sends the tracking result to the capability exposure function, and the capability exposure function sends the tracking result to the application server. If in S1101, the application server sends the sensing request #1 to the sensing function via the gateway mobile sensing center, in S1112, the sensing function sends the tracking result to the application server via the gateway mobile sensing center.

S1113. The access and mobility management function sends the tracking result to the terminal or the application server. The terminal or the application server receives the tracking result from the access and mobility management function.

Optionally, S1013 includes: If in S1001, the application server sends the sensing request #1 to the access and mobility management function via the capability exposure function and/or the gateway mobile sensing center, in S1113, the access and mobility management function sends the tracking result to the application server via the capability exposure function and/or the gateway mobile sensing center. If the sensing request #1 in S1001 is sent by the application server to the capability exposure function, the capability exposure function sends the sensing request #1 to the gateway mobile sensing center, and the gateway mobile sensing center sends the sensing request #1 to the access and mobility management function, in S1113, the access and mobility management function sends the tracking result to the gateway mobile sensing center, the gateway mobile sensing center sends the tracking result to the capability exposure function, and the capability exposure function sends the tracking result to the application server. If in S1001, the application server sends the sensing request #1 to the access and mobility management function via the gateway mobile sensing center, in S1113, the mobility management function sends the tracking result to the gateway mobile sensing center, and the gateway mobile sensing center sends the tracking result to the sensing function. If in S1001, the application server sends the sensing request #1 to the access and mobility management function via the capability exposure function, in S1113, the mobility management function sends the tracking result to the capability exposure function, and the capability exposure function sends the tracking result to the sensing function.

Optionally, in the method 1100, the sensing function may alternatively obtain the first location information and/or the second location information of the target object from the terminal or the application server. For example, the first location information is obtained from the sensing request #1, and the second location information is obtained from another sensing request sent by the terminal or the application server. In this case, the sensing request #1 may not include the sensing service description information, and the sensing function may not determine the positioning periodicity.

Optionally, the reference object in the method 1100 may be an object having a communication capability. Therefore, the location management function may obtain the first location information and the updated first location information of the reference object, so that the target object may be sensed based on the first location information, the updated first location information, and the relative location information.

In the method 1100, the sensing function may periodically obtain the first location information of the reference object, and the access network device may continuously track the target object, thereby providing a method for continuously tracking the target object. Because the target object is sensed based on the location information, sensing accuracy is high.

In the method 800 to the method 1100, the first location information or the second location information of the target object may be obtained based on the identifier of the target object, or the first location information or the second location information of the reference object may be obtained based on the identifier of the reference object, so that the target object may be sensed based on the first location information or the second location information, or the target object may be sensed based on the first location information or the second location information, and the relative location information.

It should also be noted that, in embodiments of this application, a same noun in similar embodiments represents a same meaning, and a same noun in different embodiments represents different meanings. For example, in the method 200 to the method 700, a same noun represents a same meaning, for example, the sensing request #1 has a same meaning. For example, in the method 800 to the method 1100, a same noun represents a same meaning. For example, a same noun in the method 200 to the method 700 and the method 800 to the method 1100 may represent different meanings. For example, the sensing request #1 has different meanings.

The foregoing describes method embodiments provided in this application, and the following describes apparatus embodiments provided in this application. It should be understood that descriptions of the apparatus embodiments correspond to the descriptions of the method embodiments. Therefore, for content that is not described in detail, refer to the foregoing method embodiments. For brevity, details are not described herein again.

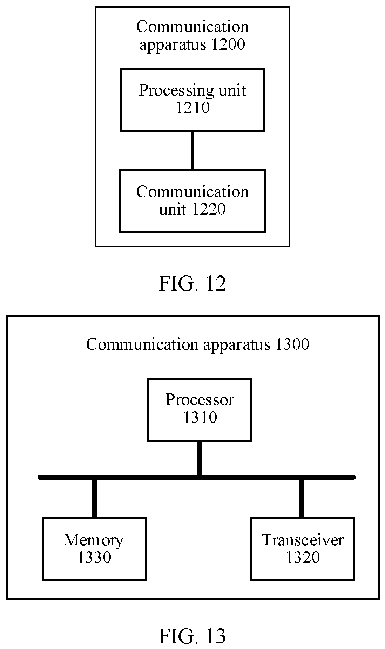

FIG. 12 is a block diagram of a communication apparatus according to an embodiment of this application. As shown in FIG. 12, the communication apparatus 1200 may include a processing unit 1210 and a communication unit 1220. The communication unit 1220 may implement a corresponding communication function. The communication may be internal communication of the communication apparatus 1200, and may be communication between the communication apparatus 1200 and another apparatus. The processing unit 1210 may implement a corresponding processing function. The communication unit 1220 may also be referred to as a communication interface or a transceiver unit. Optionally, the communication apparatus 1200 may further include a storage unit. The storage unit may be configured to store instructions and/or data. The processing unit 1210 may read the instructions and/or the data in the storage unit, to enable the apparatus to implement the foregoing method embodiments.

In a possible design, the communication apparatus 1200 may be the sensing function in the method 200 or the method 300, or may be the SF in the method 400 to the method 700, or may be a module or a chip used in the sensing function or the SF. The communication apparatus 1200 may be configured to perform steps or procedures performed by the sensing function or the SF in the foregoing method embodiments.

In a possible design, the communication apparatus 1200 may be the access and mobility management function in the method 200 or the method 300, or may be the AMF in the method 400 to the method 700, or may be a module or a chip used in the access and mobility management function or the AMF. The communication apparatus 1200 may be configured to perform steps or procedures performed by the access and mobility management function or the AMF in the foregoing method embodiments.

In a possible design, the communication apparatus 1200 may be the sensing function in the method 800 to the method 1100, or may be a module or a chip used in the sensing function or the SF. The communication apparatus 1200 may be configured to perform steps or procedures performed by the sensing function in the foregoing method embodiments.

In a possible design, the communication apparatus 1200 may be the access and mobility management function in the method 800 to the method 1100, or may be a module or a chip used in the access and mobility management function. The communication apparatus 1200 may be configured to perform steps or procedures performed by the access and mobility management function in the foregoing method embodiments.

For details about steps or procedures performed by the units in the communication apparatus 1200, refer to the foregoing methods. Details are not described herein again.

It should be understood that the "unit" in the communication apparatus 1200 may be implemented by hardware, or may be implemented by software, or may be implemented by executing corresponding software by hardware. For example, the "unit" may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. For another example, the communication unit 1220 may be replaced with a transceiver or a transceiver circuit (which may include, for example, a receiver circuit and a transmitter circuit), and the processing unit 1210 may be replaced with a processor or a processing circuit.

FIG. 13 shows a communication apparatus 1300 according to an embodiment of this application. The communication apparatus 1300 includes a processor 1310 and a transceiver 1320. The processor 1310 and the transceiver 1320 communicate with each other through an internal connection path. The processor 1310 is configured to execute instructions, to control the transceiver 1320 to send a signal and/or receive a signal.

Optionally, the communication apparatus 1300 may further include a memory 1330. The memory 1330 communicates with the processor 1310 and the transceiver 1320 through the internal connection path. The memory 1330 is configured to store instructions. The processor 1310 may execute the instructions stored in the memory 1330. In a possible implementation, the communication apparatus 1300 is configured to implement procedures and operations corresponding to the sensing function in the method 200 or the method 300 or the SF in the method 400 to the method 700. In a possible implementation, the communication apparatus 1300 is configured to implement procedures and operations corresponding to the access and mobility management function in the method 200 or the method 300 or the AMF in the method 400 to the method 700. In a possible implementation, the communication apparatus 1300 is configured to implement procedures and operations corresponding to the sensing function in the method 800 to the method 1100. In a possible implementation, the communication apparatus 1300 is configured to implement procedures and operations corresponding to the access and mobility management functions in the method 800 to the method 1100.

It should be understood that the communication apparatus 1300 may be specifically devices (for example, a network device or a terminal device) in the foregoing embodiments, or may be a chip or a chip system. Correspondingly, the transceiver 1320 may be a transceiver circuit of the chip. This is not limited herein. Specifically, the communication apparatus 1300 may be configured to perform operations and/or procedures corresponding to the network device or the terminal device in the foregoing method embodiments. Optionally, the memory 1330 may include a read-only memory and a random access memory, and provide instructions and data to the processor. A part of the memory may further include a non-volatile random access memory. For example, the memory may further store information about a device type. The processor 1310 may be configured to execute the instructions stored in the memory, and when the processor 1310 executes the instructions stored in the memory, the processor 1310 is configured to perform operations and/or procedures corresponding to the devices in the foregoing method embodiments.

During implementation, the operations of the foregoing methods may be completed by using a hardware integrated logic circuit in the processor or instructions in a form of software. The operations of the methods disclosed with reference to embodiments of this application may be directly completed by a hardware processor, or may be completed by a combination of hardware in the processor and a software module. The software module may be located in a storage medium mature in the art, such as a random access memory, a flash memory, a read-only memory, a programmable read-only memory, an electrically erasable programmable memory, or a register. The storage medium is located in the memory. The processor reads information in the memory and completes the operations of the methods in combination with the hardware of the processor. To avoid repetition, details are not described herein again.

It should be noted that, the processor in embodiments of this application may be an integrated circuit chip, and has a signal processing capability. During implementation, the operations in the foregoing method embodiments may be completed by using a hardware integrated logic circuit in the processor or instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform methods, operations, and logical block diagrams disclosed in embodiments of this application. The general-purpose processor may be a microprocessor, or the processor may be any conventional processor or the like. The operations of the methods disclosed with reference to embodiments of this application may be directly completed by a hardware decoding processor, or may be completed by a combination of hardware in the decoding processor and a software module. The software module may be located in a storage medium mature in the art, such as a random access memory, a flash memory, a read-only memory, a programmable read-only memory, an electrically erasable programmable memory, or a register. The storage medium is located in the memory. The processor reads information in the memory and completes the operations of the methods in combination with the hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memories in systems and methods described in this specification are intended to include but are not limited to these and any other memories of appropriate types.

According to the method provided in embodiments of this application, this application further provides a computer program product. The computer program product includes computer program code. When the computer program code is run on a computer, the computer is enabled to perform operations or procedures performed by the access and mobility management function, the AMF, the sensing function, or the SF in the foregoing method embodiments.

According to the method provided in embodiments of this application, this application further provides a computer-readable storage medium. The computer-readable storage medium stores program code. When the program code is run on a computer, the computer is enabled to perform operations or procedures performed by the access and mobility management function, the AMF, the sensing function, or the SF in the foregoing method embodiments.

According to the method provided in embodiments of this application, this application further provides a communication system, including at least two of the access and mobility management function, the sensing function, the terminal, the application server, the gateway mobile sensing center, the capability exposure function, or the location management function, or including at least two of a UE, an AMF, an LMF, an SF, a GMSC, an NEF, or an AF.

The foregoing apparatus embodiments completely correspond to the method embodiments. A corresponding module or unit performs a corresponding operation. For example, the communication unit (transceiver) performs a receiving operation or a sending operation in the method embodiments, and the processing unit (processor) may perform an operation other than the sending operation and the receiving operation. A function of a specific unit may be based on a corresponding method embodiment. There may be one or more processors.

In embodiments of this application, the terms and English abbreviations are all examples given for ease of description, and should not constitute any limitation on this application. This application does not exclude a possibility of defining, in an existing or future protocol, another term that can implement same or similar functions.

It should be understood that "and/or" in this specification describes an association relationship between associated objects, and indicates that three relationships may exist. For example, A and/or B may indicate the following three cases: Only A exists, both A and B exist, and only B exists. A and B may be in a singular or plural form. The character "/" generally indicates an "or" relationship between the associated objects.

In descriptions of this application, to clearly describe the technical solutions in embodiments of this application, words such as "first" and "second" are used in embodiments of this application to distinguish between same items or similar items that provide basically same functions or effects. A person skilled in the art may understand that the words such as "first" and "second" do not limit a quantity or an execution sequence, and the words such as "first" and "second" do not indicate a definite difference.

It should be understood that, in this application, descriptions similar to "in a case that...", "if...", "when...", "provided that...", and the like may be used interchangeably.

A person of ordinary skill in the art may be aware that the illustrative logical blocks (illustrative logical blocks) and operations described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing described systems, apparatuses, and units, refer to corresponding processes in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one place, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

In the foregoing embodiments, functions of the functional units may be all or partly implemented by using software, hardware, firmware, or any combination thereof. When software is used for implementation, the functions may be all or partly implemented in a form of a computer program product. The computer program product includes one or more computer instructions (programs). When the computer program instructions (programs) are loaded and executed on a computer, the procedures or functions according to embodiments of this application are all or partly generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

When the function is implemented in a form of a software functional unit and sold or used as an independent product, the function may be stored in a computer-readable storage medium. Based on such an understanding, the technical solutions of this application essentially, or a part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or a part of operations of the method described in embodiments of this application. The storage medium includes various media that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving a first sensing request, wherein the first sensing request comprises first location information, and the first location information indicates a first location of a target object;
obtaining object distribution information in a first area in which the first location is located; and
identifying a first object in the first area as the target object based on the first location and the object distribution information, and sensing the target object.

2. The communication method according to claim 1, wherein the first sensing request is used to request to continuously track the target object; and
the sensing the target object comprises: continuously tracking the target object.

3. The communication method according to claim 1 or 2, wherein the first sensing request comprises a tracking indication, and the tracking indication indicates continuous tracking.

4. The communication method according to any one of claims 1 to 3, wherein the communication method further comprises:
obtaining distribution information of a user equipment UE in the first area; and
the identifying the first object in the first area as the target object based on the first location and the object distribution information comprises:
identifying the first object in the first area as the target object based on the first location, the object distribution information, and the distribution information of the UE, wherein the target object is a non-UE.

5. The communication method according to claim 4, wherein the first sensing request comprises a non-UE indication, and the non-UE indication indicates that the first sensing request is specific to a non-UE.

6. The communication method according to claim 4 or 5, wherein the obtaining the distribution information of the UE in the first area comprises:
receiving the distribution information of the UE from an access and mobility management function; or
obtaining an identifier of the UE in the first area from the access and mobility management function;
sending the identifier of the UE to a positioning function; and
receiving, from the positioning function, location information corresponding to the identifier of the UE.

7. The communication method according to any one of claims 1 to 6, wherein the obtaining the object distribution information in the first area comprises at least one of the following manners:
receiving the object distribution information from a terminal; or
receiving the object distribution information from an application server; or
obtaining the object distribution information from first sensing data.

8. The communication method according to claim 7, wherein
before the receiving the first sensing request, the communication method further comprises: obtaining predicted location information, wherein the predicted location information indicates a predicted location of the target object; and triggering an access network device to sense an area in which the predicted location is located; and
the obtaining the object distribution information from the first sensing data comprises: obtaining, from the access network device, the first sensing data corresponding to the area in which the predicted location is located, and obtaining the object distribution information from the first sensing data, wherein the first location is covered by the area in which the predicted location is located.

9. The communication method according to claim 8, wherein before the receiving the first sensing request, the communication method further comprises: obtaining information that corresponds to the predicted location information and that indicates a first moment or a first time range; and
the triggering the access network device to sense the area in which the predicted location is located comprises: determining a third moment or a third time range based on the first moment or the first time range; and
triggering the access network device to sense, from the third moment or within the third time range, the area in which the predicted location is located.

10. The communication method according to claim 9, wherein the first sensing request further comprises information indicating a second moment or a second time range; and
the second moment or a start moment of the second time range is later than the third moment, or the second moment or the start moment of the second time range is covered by the third time range.

11. The communication method according to any one of claims 8 to 10, wherein before the receiving the first sensing request, the communication method further comprises: receiving a second sensing request, wherein the second sensing request is used to request to continuously track the target object; and
the obtaining the predicted location information comprises: obtaining the predicted location information carried in the second sensing request.

12. The communication method according to claim 11, wherein the obtaining the information that corresponds to the predicted location information and that indicates the first moment or the first time range comprises: obtaining information that is carried in the second sensing request and that indicates the first moment or the first time range.

13. The communication method according to claim 11 or 12, wherein the second sensing request comprises a tracking indication, and the tracking indication indicates continuous tracking.

14. The communication method according to any one of claims 1 to 13, wherein the receiving the first sensing request comprises:
receiving the first sensing request from the terminal or the application server.

15. The communication method according to any one of claims 1 to 14, wherein the communication method further comprises:
obtaining second sensing data obtained by continuously tracking the target object;
receiving second location information from the terminal or the application server, wherein the second location information indicates a second location of the target object; and
determining a tracking result based on the second location information and the second sensing data.

16. The communication method according to claim 15, wherein before the receiving the second location information from the terminal or the application server, the communication method further comprises:
sending a location request to the terminal or the application server, wherein the location request is used to request a location of the target object.

17. A communication method, comprising:
receiving a third sensing request, wherein the third sensing request comprises first location information, and the first location information indicates a first location of a target object;
obtaining distribution information of a UE in a first area in which the first location is located; and
sending a first sensing request to a sensing function, wherein the first sensing request comprises the first location information and the distribution information of the UE.

18. The communication method according to claim 17, wherein the third sensing request is used to request to continuously track the target object, and the first sensing request is used to request to continuously track the target object.

19. The communication method according to claim 17 or 18, wherein the obtaining the distribution information of the UE in the first area in which the first location is located comprises:
obtaining an identifier of the UE in the first area, and sending the identifier of the UE to a positioning function; and
receiving, from the positioning function, the distribution information corresponding to the identifier of the UE.

20. The communication method according to any one of claims 17 to 19, wherein the communication method further comprises:
the first sensing request and the third sensing request comprise object distribution information in the first area, and the object distribution information is used to identify the target object.

21. The communication method according to any one of claims 17 to 20, wherein the first sensing request comprises a non-UE indication, and the non-UE indication indicates that the first sensing request is specific to a non-UE.

22. The communication method according to any one of claims 17 to 21, wherein the first sensing request comprises a tracking indication, and the tracking indication indicates continuous tracking.

23. The communication method according to claim 22, wherein before the receiving the third sensing request, the communication method further comprises:
obtaining predicted location information, wherein the predicted location information indicates a predicted location of the target object; and
sending a second sensing request to the sensing function, wherein the second sensing request comprises the predicted location information.

24. The communication method according to claim 23, wherein before the receiving the third sensing request, the communication method further comprises: obtaining information that corresponds to the predicted location information and that indicates a first moment or a first time range; and
the second sensing request comprises the information indicating the first moment or the first time range.

25. The communication method according to claim 24, wherein the third sensing request further comprises information indicating a second moment or a second time range; and
the second moment or a start moment of the second time range is later than the first moment, or the second moment or the start moment of the second time range is covered by the first time range.

26. The communication method according to any one of claims 23 to 25, wherein before the receiving the third sensing request, the communication method further comprises: receiving the second sensing request, wherein the second sensing request is used to request to continuously track the target object; and
the obtaining the predicted location information comprises: obtaining the predicted location information carried in the second sensing request.

27. The communication method according to claim 26, wherein the obtaining the information that corresponds to the predicted location information and that indicates the first moment or the first time range comprises: obtaining information that is carried in the second sensing request and that indicates the first moment or the first time range.

28. The communication method according to claim 26 or 27, wherein the second sensing request comprises a tracking indication, and the tracking indication indicates continuous tracking.

29. A communication method, comprising:
receiving a first sensing request from a terminal or an application server, wherein the first sensing request is used to request to continuously track a target object, the first sensing request comprises first information, and the first information comprises an identifier of the target object, or the first information comprises an identifier of a reference object and relative location information between the target object and the reference object;
obtaining, based on the first sensing request, first location information corresponding to the identifier of the target object or the identifier of the reference object in the first information; and
sending the first location information or the first location information and the relative location information.

30. The communication method according to claim 29, wherein the first sensing request further comprises sensing service description information, and the communication method further comprises:
determining a positioning periodicity based on the sensing service description information;
the obtaining, based on the first sensing request, the first location information corresponding to the identifier of the target object or the identifier of the reference object in the first information comprises: obtaining the first location information based on the first sensing request and the positioning periodicity; and
the sending the first location information or the first location information and the relative location information comprises:
sending the periodically obtained first location information, or sending the periodically obtained first location information and the relative location information.

31. The communication method according to claim 30, wherein the first sensing request further comprises a tracking indication, and the tracking indication indicates to continuously track the target object.

32. The communication method according to claim 31, wherein the determining the positioning periodicity based on the sensing service description information in the first sensing request comprises:
determining the positioning periodicity based on the sensing service description information and the tracking indication in the first sensing request.

33. The communication method according to any one of claims 30 to 32, wherein the obtaining the first location information corresponding to the identifier of the target object or the identifier of the reference object in the first information comprises:
sending a first positioning request to a location management function, wherein the first positioning request comprises the identifier of the target object or the identifier of the reference object; and
receiving, from the location management function, the first location information corresponding to the identifier of the target object or the identifier of the reference object in the first information.

34. The communication method according to claim 33, wherein the first positioning request comprises the positioning periodicity.

35. The communication method according to any one of claims 31 to 34, wherein the method is performed by an access and mobility management function; and
the sending the first location information or the first location information and the relative location information comprises: sending a fourth sensing request to a sensing function, wherein the fourth sensing request comprises the first location information or the first location information and the relative location information, and the fourth sensing request comprises the tracking indication.

36. The communication method according to claim 35, wherein the method is performed by the access and mobility management function, and the communication method further comprises:
sending the sensing description information to the sensing function, wherein the sensing description information is used by the sensing function to determine the sensing periodicity for the target object.

37. The communication method according to any one of claims 29 to 36, wherein the communication method is performed by the sensing function; and
the sending the first location information or the first location information and the relative location information comprises:
sending a fourth sensing request to an access network device, wherein the fourth sensing request comprises the first location information or the first location information and the relative location information.

38. The communication method according to claim 37, wherein the method is performed by the sensing function, and the communication method further comprises:
determining the sensing periodicity based on the sensing description information.

39. A communication apparatus, comprising a unit configured to implement the method according to any one of claims 1 to 38.

40. A computer-readable storage medium, wherein the computer-readable storage medium stores a computer program, and when the computer program is run, the method according to any one of claims 1 to 38 is implemented.

41. A chip, comprising a processor, wherein the processor is connected to a memory, the memory is configured to store a computer program, and the processor is configured to execute the computer program stored in the memory, to implement the method according to any one of claims 1 to 38.
